# EUROPEAN PATENT SPECIFICATION

(11) **EP 2 817 342 B1**
(45) Date of publication and mention of the grant of the patent: **25.05.2016**
(21) Application number: 12812450.0
(22) Date of filing: 13.12.2012
(51) Int. Cl.: C08F 2/22

(54) **POLYMERIZATION OF COMPOSITIONS COMPRISING A FARNESENE**
POLYMERISATION VON ZUSAMMENSETZUNGEN MIT FARNESEN
POLYMÉRISATION DE COMPOSITIONS COMPRENANT UN FARNÉSÈNE

(30) Priority: 22.02.2012 US 201261601562 P; 30.05.2012 US 201261653401 P
(43) Date of publication of application: 31.12.2014
(73) Proprietor: Amyris, Inc., Emeryville, CA 94608 (US)
(72) Inventor: DOOLAN, Joseph, G., Emeryville, CA 94608 (US); SAFIR, Adam, Berkeley, CA 94703 (US)
(74) Representative: Becker Kurig Straus
(86) International application number: PCT/US2012/069333
(87) International publication number: WO 2013/126129

(56) References cited:
- WO-A2-2012/075216
- US-A- 3 676 528
- US-B1- 7 655 739

## Description

### PRIOR RELATED APPLICATIONS

This application claims the benefit under 35 U.S.C. § 119(e) of U.S. Provisional Patent Application No. 61/653,401, filed May 30, 2012 and U.S. Provisional Patent Application No. 61/601,562, filed February 22, 201 2.

### FIELD OF THE INVENTION

This invention provides emulsion polymerization compositions comprising a farnesene and optionally at least one vinyl monomer; at least one emulsifier; and at least one free radical initiator. Also provided herein are methods for the emulsion polymerization of a farnesene with at least one vinyl monomer, wherein the method comprises copolymerizing the farnesene with the at least one vinyl monomer in an aqueous medium in the presence of at least one free radical initiator and at least one emulsifier. Also provided herein are methods for copolymerizing a polymerizable mixture or composition comprising a farnesene and at least one vinyl monomer in emulsion in an aqueous medium, in the presence of at least one free radical initiator and at least one emulsifier.

### BACKGROUND OF THE INVENTION

Terpenes or isoprenoid compounds are a large and varied class of organic molecules that can be produced by a wide variety of plants, such as conifers, and by some insects, such as swallowtail butterflies. Some isoprenoid compounds can also be made from organic compounds such as sugars by microorganisms, including bioengineered microorganisms. Because terpenes or isoprenoid compounds can be obtained from various renewable sources, they are ideal monomers for making eco-friendly and renewable polymers.

Terpene polymers derived from terpenes or isoprenoid compounds are useful polymeric materials. For example, polyisoprene, polypinene and polylimonene have been used in various applications such as in the manufacture of paper coatings, adhesives, rubber compounds, and other industrial products. Most existing terpene polymers are generally derived from C₅ and C₁₀ terpenes, for example, isoprene, limonene, myrcene, 3-carene, ocimene, and pinene. These terpene monomers can be polymerized or co-polymerized with other comonomers to form the corresponding terpene homopolymers or copolymers. However, the polymers or copolymers of terpenes or isoprenoid compounds having at least 15 carbon atoms are less well known or non-existent. Because of their long chain length, isoprenoid compounds, such as farnesene, farnesol, nerolidol, valencene, humulene, germacrene, and elemene, may provide polymers or copolymers with unique physical, chemical and biological properties.

There is a need for more environmentally friendly and/or renewable polymers, for instance, polymers derived from isoprenoid compounds that can be obtained from natural sources. Further, there is also a need for novel polymers that have unique physical, chemical and biological properties.
Document US 7 655 739 discloses a copolymer of a farnesene and a vinyl monomer which can comprise up to 20 mol.% of farnesene units. Polymerization is carried out in solution.

### SUMMARY OF THE INVENTION

The aforementioned needs are met by various aspects disclosed herein. In one aspect, provided herein is an emulsion polymerization composition comprising: a) a polymerizable mixture comprising a farnesene and at least one vinyl monomer; b) at least one emulsifier; c) at least one free radical initiator; and d) water.

In another aspect, provided herein is a method for the emulsion polymerization of a farnesene with at least one vinyl monomer, wherein the method comprises copolymerizing the farnesene with the at least one vinyl monomer in an aqueous medium in the presence of at least one free radical initiator and at least one emulsifier.

In another aspect, provided herein is a method for preparing a polymer emulsion, comprising: (a) providing an aqueous emulsion comprising a polymerizable mixture comprising a farnesene and at least one vinyl monomer; at least one emulsifier; at least one initiator; and water; and (b) emulsion polymerizing at least a portion of the polymerizable mixture to form the polymer emulsion. In some embodiments, the method further comprises a step of drying the polymer emulsion to form an emulsion polymer.

In some embodiments, the farnesene disclosed herein is α-farnesene or β-famesene or a combination thereof. In certain embodiments, the farnesene is in an amount greater than 20 wt.%, greater than 50 wt.%, greater than 60 wt.% or greater than 70 wt.%, based on the total weight of the polymerizable mixture. In some embodiments, the farnesene is in an amount from about 20 wt.% to about 50 wt.%, based on the total weight of the polymerizable mixture. In certain embodiments, the farnesene is in an amount from about 30 wt.% to about 40 wt.%, based on the total weight of the polymerizable mixture.

In certain embodiments, the at least one vinyl monomer is styrene, substituted styrene, a _{C4-40} diene, a vinyl halide, vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof In some embodiments, the at least one vinyl monomer comprises methacrylic acid and a methacrylic ester. In certain embodiments, the methacrylic ester is methyl methacrylate. In some embodiments, the methacrylic acid is in an amount from about 0.1 wt.% to about 5 wt.% or from about 10 wt.% to about 40 wt.%, based on the total weight of the polymerizable mixture. In certain embodiments, the at least one vinyl monomer further comprises an acrylic ester. In further embodiments, the acrylic ester is butyl acrylate. In some embodiments, the at least one vinyl monomer comprises methacrylic acid and styrene.

In certain embodiments, the free radical initiator is a water-soluble free radical initiator. In certain embodiments, the water-soluble free radical initiator is ammonium peroxomonosulfate, ammonium peroxodisulfate, potassium peroxomonosulfate, potassium peroxodisulfate, sodium peroxomonosulfate, sodium peroxodisulfate, hydrogen peroxide, a redox initiator or a combination thereof.

In another aspect, provided herein is a polymer emulsion preparing by a method disclosed herein.

In another aspect, provided herein is an emulsion polymer preparing by a method disclosed herein, wherein the emulsion polymer comprises a farnesene interpolymer, and wherein the farnesene is in an amount of at least 25 mole percent, based on the total mole of the farnesene interpolymer.

In some embodiments, the emulsion polymer is in the form of a film. In certain embodiments, the emulsion polymer is in the form of a powder.

In another aspect, provided herein is a method of copolymerizing a polymerizable mixture in emulsion in an aqueous medium of at least one emulsifier and in the presence of at least one free radical initiator to form a farnesene interpolymer, wherein the polymerizable mixture comprises a farnesene and at least one vinyl monomer, and wherein the at least one free radical initiator is hydrogen peroxide, a hydroperoxide, a dialkyl peroxide, a diacyl peroxide, a peroxy ester, a peroxyketone, an azo-compound, an organic polyoxide, a photoinitiator, a persulfate or a combination thereof.

In certain embodiments, the farnesene is in an amount greater than 20 wt.%, based on the total weight of the polymerizable mixture. In some embodiments, the farnesene is α-farnesene, β-farnesene or a combination thereof. In certain embodiments, the at least one vinyl monomer is styrene, substituted styrene, a C₄₋₄₀ diene, a vinyl halide, vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof. In some embodiments, the at least one vinyl monomer comprises a methacrylic ester. In certain embodiments, the at least one vinyl monomer comprises styrene. In some embodiments, the at least one vinyl monomer comprises butadiene. In certain embodiments, the at least one vinyl monomer comprises styrene and butadiene.

Additional aspects of the invention and characteristics and properties of various embodiments of the invention become apparent with the following description.

### DESCRIPTION OF THE DRAWINGS

Figure 1 depicts Tg results of Examples 1-5 and 7-11.
Figure 2 depicts Tg results of Examples 13-16.

### DETAILED DESCRIPTION OF THE INVENTION

### General Definitions

"Polymer" refers to a polymeric compound prepared by polymerizing monomers, whether of the same or a different type. The generic term "polymer" embraces the terms "homopolymer," "copolymer," "terpolymer" as well as "interpolymer."

"Interpolymer" refers to a polymer prepared by the polymerization of at least two different types of monomers. The generic term "interpolymer" includes the term "copolymer" (which generally refers to a polymer prepared from two different monomers) as well as the term "terpolymer" (which generally refers to a polymer prepared from three different types of monomers). It also encompasses polymers made by polymerizing four or more types of monomers.

"Organyl" refers to any organic substituent group, regardless of functional type, having one free valence at a carbon atom, e.g., CH₃CH₂-, ClCH₂-, CH₃C(=O)-, 4-pyridylmethyl.

"Hydrocarbyl" refers to any univalent group formed by removing a hydrogen atom from a hydrocarbon, such as alkyl (*e.g.,* ethyl), cycloalkyl (*e.g.,* cyclohexyl) and aryl (*e.g.,* phenyl).

"Heterocyclyl" refers to any univalent group formed by removing a hydrogen atom from any ring atom of a heterocyclic compound.

"Alkyl" or "alkyl group" refers to a univalent group having the general formula CₙH₂ₙ₊₁ derived from removing a hydrogen atom from a saturated, unbranched or branched aliphatic hydrocarbon, where n is an integer, or an integer between 1 and 20, or between 1 and 8. Examples of alkyl groups include, but are not limited to, (C₁-C₈)alkyl groups, such as methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, *t*-butyl, pentyl, isopentyl, neopentyl, hexyl, heptyl and octyl. Longer alkyl groups include nonyl and decyl groups. An alkyl group can be unsubstituted or substituted with one or more suitable substituents. Furthermore, the alkyl group can be branched or unbranched. In some embodiments, the alkyl group contains at least 2, 3, 4, 5, 6, 7, or 8 carbon atoms.

"Cycloalkyl" or "cycloalkyl group" refers to a univalent group derived from a cycloalkane by removal of a hydrogen atom from a non-aromatic, monocyclic or polycyclic ring comprising carbon and hydrogen atoms. Examples of cycloalkyl groups include, but are not limited to, (C₃-C₇)cycloalkyl groups, such as cyclopropyl, cyclobutyl, cyclopentyl, cyclohexyl, and cycloheptyl, and saturated cyclic and bicyclic terpenes and (C₃-C₇)cycloalkenyl groups, such as cyclopropenyl, cyclobutenyl, cyclopentenyl, cyclohexenyl, and cycloheptenyl, and unsaturated cyclic and bicyclic terpenes. A cycloalkyl group can be unsubstituted or substituted by one or two suitable substituents. Furthermore, the cycloalkyl group can be monocyclic or polycyclic. In some embodiments, the cycloalkyl group contains at least 5, 6, 7, 8, 9, or 10 carbon atoms.

"Aryl" or "aryl group" refers to an organic radical derived from a monocyclic or polycyclic aromatic hydrocarbon by removing a hydrogen atom. Non-limiting examples of the aryl group include phenyl, naphthyl, benzyl, or tolanyl group, sexiphenylene, phenanthrenyl, anthracenyl, coronenyl, and tolanylphenyl. An aryl group can be unsubstituted or substituted with one or more suitable substituents. Furthermore, the aryl group can be monocyclic or polycyclic. In some embodiments, the aryl group contains at least 6, 7, 8, 9, or 10 carbon atoms.

"Acrylic ester" refers to a compound having the formula 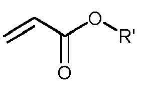 where

R' is hydrocarbyl, substituted hydrocarbyl, heterohydrocarbyl, substituted heterohydrocarbyl, heterocyclyl or substituted heterocyclyl. In certain embodiments, R' is alkyl, cycloalkyl, aryl, alkaryl, arylalkyl, substituted alkyl, substituted cycloalkyl, substituted aryl, substituted alkaryl or substituted arylalkyl. In some embodiments, R' is methyl, ethyl, propyl, butyl, pentyl, isopentyl, neopentyl, hexyl, heptyl, octyl, decyl, isodecyl, lauryl, stearyl, hydroxyalkyl (*e.g.,* 2-hydroyethyl), aminoalkyl (*e.g.,* 2-aminoethyl, 2-(dimethylamino)ethyl or 2-(diethylamino)ethyl). In further embodiments, R' is substituted. Some non-limiting examples of acrylic ester include methyl acrylate, ethyl acrylate, butyl acrylate, isobutyl acrylate, n-hexyl acrylate, ethylhexyl acrylate, n-heptyl acrylate, 2-methylheptyl acrylate, octyl acrylate, isooctyl acrylate, n-nonyl acrylate, iso-nonyl acrylate, decyl acrylate, isodecyl acrylate, dodecyl acrylate, tridecyl acrylate, lauryl acrylate, stearyl acrylate, isobornyl acrylate, glycidyl acrylate, acetoacetoxyethyl acrylate, acetoacetoxypropyl acrylate, tetrahydrofurfuryl acrylate, cyclohexyl acrylate, 2-ethoxyethyl acrylate, isodecyl acrylate, caprolactone acrylate, benzyl acrylate, hydroxyalkyl acrylates (*e.g*., 2-hydroxyethyl acrylate), aminoalkyl acrylates (*e.g*., 2-aminoethyl acrylate, 2-(dimethylamino)ethyl acrylate, and 2-(diethylamino)ethyl acrylate), alkoxyalkyl acrylates (*e.g*., 2-ethoxyethyl acrylate), aroxyalkyl acrylates (e.g., 2-phenoxyethyl acrylate) and combinations thereof.

"Methacrylic ester" refers to a compound having the formula 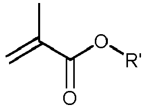 where R' is hydrocarbyl, substituted hydrocarbyl, heterohydrocarbyl, substituted heterohydrocarbyl, heterocyclyl or substituted heterocyclyl. In certain embodiments, R' is alkyl, cycloalkyl, aryl, alkaryl, arylalkyl, substituted alkyl, substituted cycloalkyl, substituted aryl, substituted alkaryl or substituted arylalkyl. In some embodiments, R' is methyl, ethyl, propyl, butyl, pentyl, isopentyl, neopentyl, hexyl, heptyl, octyl, decyl, isodecyl, lauryl, stearyl, hydroxyalkyl (*e.g.,* 2-hydroyethyl), aminoalkyl (*e.g.,* 2-aminoethyl, 2-(dimethylamino)ethyl or 2-(diethylamino)ethyl). In further embodiments, R' is substituted. Some non-limiting examples of methacrylic ester include methyl methacrylate, ethyl methacrylate, butyl methacrylate, isobutyl methacrylate, n-hexyl methacrylate, ethylhexyl methacrylate, n-heptyl methacrylate, 2-methylheptyl methacrylate, octyl methacrylate, isooctyl methacrylate, n-nonyl methacrylate, iso-nonyl methacrylate, decyl methacrylate, isodecyl methacrylate, dodecyl methacrylate, tridecyl methacrylate, lauryl methacrylate, stearyl methacrylate, isobornyl methacrylate, glycidyl methacrylate, acetoacetoxyethyl methacrylate, acetoacetoxypropyl methacrylate, allyl methacrylate, tetrahydrofurfuryl methacrylate, cyclohexyl methacrylate, benzyl methacrylate, caprolactone methacrylate, hydroxyalkyl methacrylates (*e.g*., 2-hydroxyethyl methacrylate), aminoalkyl methacrylates (*e.g*., 2-aminoethyl methacrylate, 2-(dimethylamino)ethyl methacrylate, and 2-(diethylamino)ethyl methacrylate), alkoxyalkyl methacrylates (*e.g*., 2-ethoxyethyl methacrylate), aroxyalkyl methacrylates (*e.g*., 2-phenoxyethyl methacrylate) and combinations thereof.

"Alkoxycarbonyl" refers to a univalent group having the general formula R'O-C(=O)-, where R' is alkyl or substituted alkyl. In some embodiments, R' is methyl, ethyl, propyl, butyl, pentyl, isopentyl, neopentyl, hexyl, heptyl, octyl, decyl, isodecyl, lauryl, stearyl, hydroxyalkyl (*e.g.,* 2-hydroyethyl), aminoalkyl (*e.g.,* 2-aminoethyl, 2-(dimethylamino)ethyl or 2-(diethylamino)ethyl). In certain embodiments, the alkoxycarbonyl is methoxycarbonyl, ethoxycarbonyl, propoxycarbonyl, butoxycarbonyl, pentoxycarbonyl, isopentoxycarbonyl, neopentoxycarbonyl, hexoxycarbonyl, heptoxycarbonyl, octoxycarbonyl, decoxycarbonyl, isodecoxycarbonyl, lauroxycarbonyl or stearoxycarbonyl. In certain embodiments, the alkoxycarbonyl is a substituted alkoxycarbonyl such as hydroxyalkoxycarbonyl (*e.g*., 2-hydroyethoxycarbonyl) and aminoalkoxycarbonyl (*e.g.*, 2-aminoethoxycarbonyl, 2-(dimethylamino)ethoxycarbonyl or 2-(diethylamino)ethoxycarbonyl).

"Vinyl monomer" refers to a compound having formula (XV): 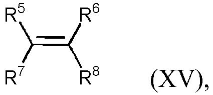 where each of R⁵, R⁶, R⁷ and R⁸ is independently H, an organyl group or a functional group. In some embodiments, each of R⁵, R⁶, R⁷ and R⁸ is as defined herein.

"Isoprenoid" and "isoprenoid compound" are used interchangeably herein and refer to a compound derivable from isopentenyl diphosphate.

"Substituted" as used to describe a compound or chemical moiety refers to that at least one hydrogen atom of that compound or chemical moiety is replaced with a second chemical moiety. The second chemical moiety can be any desired substituent that does not adversely affect the desired activity of the compound. Examples of substituents are those found in the exemplary compounds and embodiments disclosed herein, as well as halogen; alkyl; heteroalkyl; alkenyl; alkynyl; aryl, heteroaryl, hydroxyl; alkoxyl; aroxyl; alkoxyalkoxyl; amino; nitro; thiol; thioether; imine; cyano; amido; phosphonato; phosphine; carboxyl; thiocarbonyl; sulfonyl; sulfonamide; acyl; formyl; acyloxy; alkoxycarbonyl; glycidyl; oxiranyl; acetoacetoxyoxo; haloalkyl (*e.g*., trifluoromethyl); carbocyclic cycloalkyl, which can be monocyclic or fused or non-fused polycyclic (*e.g*., cyclopropyl, cyclobutyl, cyclopentyl or cyclohexyl) or a heterocycloalkyl, which can be monocyclic or fused or non-fused polycyclic (*e.g*., pyrrolidinyl, piperidinyl, piperazinyl, morpholinyl or thiazinyl); carbocyclic or heterocyclic, monocyclic or fused or non-fused polycyclic aryl *(e.g.,* phenyl, naphthyl, pyrrolyl, indolyl, furanyl, thiophenyl, imidazolyl, oxazolyl, isoxazolyl, thiazolyl, triazolyl, tetrazolyl, pyrazolyl, pyridinyl, quinolinyl, isoquinolinyl, acridinyl, pyrazinyl, pyridazinyl, pyrimidinyl, benzimidazolyl, benzothiophenyl or benzofuranyl); amino (primary, secondary or tertiary); o-lower alkyl; o-aryl, aryl; aryl-lower alkyl; -CO₂CH₃; -CONH₂;-OCH₂CONH₂; -NH₂; -SO₂NH₂; -OCHF₂; -CF₃; -OCF₃; -NH(alkyl); -N(alkyl)₂; -NH(aryl); -N(alkyl)(aryl); -N(aryl)₂; -CHO; -CO(alkyl); -CO(aryl); -CO₂(alkyl); and -CO₂(aryl); and such moieties can also be optionally substituted by a fused-ring structure or bridge, for example -OCH₂O-. These substituents can optionally be further substituted with a substituent selected from such groups. All chemical groups disclosed herein can be substituted, unless it is specified otherwise.

A composition that is "substantially free" of a compound means that the composition contains less than about 20 wt.%, less than about 10 wt.%, less than about 5 wt.%, less than about 3 wt.%, less than about 1 wt.%, less than about 0.5 wt.%, less than about 0.1 wt.%, or less than about 0.01 wt.% of the compound, based on the total volume of the composition.

A polymer that is "substantially linear" means that the polymer contains less than about 20 wt.%, less than about 10 wt.%, less than about 5 wt.%, less than about 3 wt.%, less than about 1 wt.%, less than about 0.5 wt.%, less than about 0.1 wt.%, or less than about 0.01 wt.% of the branched, star-shaped or other regular or irregular structures, based on the total volume of the composition.

A polymer that is "substantially branched" means that the polymer contains less than about 20 wt.%, less than about 10 wt.%, less than about 5 wt.%, less than about 3 wt.%, less than about 1 wt.%, less than about 0.5 wt.%, less than about 0.1 wt.%, or less than about 0.01 wt.% of the linear, star-shaped or other regular or irregular structures, based on the total volume of the composition.

A polymer that is "substantially star-shaped" means that the polymer contains less than about 20 wt.%, less than about 10 wt.%, less than about 5 wt.%, less than about 3 wt.%, less than about 1 wt.%, less than about 0.5 wt.%, less than about 0.1 wt.%, or less than about 0.01 wt.% of the branched, linear or other regular or irregular structures, based on the total volume of the composition.

The compositions disclosed herein generally comprise a polyfarnesene and optionally a tackifier. In other embodiments, the compositions disclosed herein do not comprise a tackifier. In further embodiments, the compositions disclosed herein comprise a tackifier.

The polyfarnesene is a farnesene interpolymer comprising units derived from at least one farnesene and units derived from at least one copolymerizable vinyl monomer. In some embodiments, the farnesene interpolymer is derived from styrene and at least one farnesene. In other embodiments, the farnesene interpolymer is derived from methyl methacrylate and at least one farnesene. In other embodiments, the farnesene interpolymer is derived from maleic anhydride and at least one farnesene. In other embodiments, the farnesene interpolymer is derived from methacrylic acid, styrene and at least one farnesene. In further embodiments, the farnesene interpolymer is derived from methacrylic acid, methyl methacrylate and at least one farnesene. In further embodiments, the farnesene interpolymer is derived from methacrylic acid, methyl methacrylate, butyl acrylate and at least one farnesene. In still further embodiments, the farnesene interpolymer is a random, block or alternating interpolymer. In still further embodiments, the farnesene interpolymer is a di-block, tri-block or other multi-block interpolymer.

The present polyfarnesene is a farnesene interpolymer prepared by polymerizing at least one farnesene and at least one vinyl monomer in the presence of any catalyst disclosed herein . In some embodiments, the farnesene interpolymer disclosed herein comprises (a) one or more units having at least one of formulae (I), (II), (III) and (IV) disclosed herein; and (b) one or more units having formula (IX): 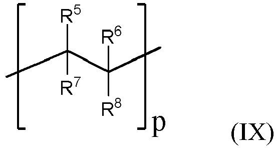 wherein p is an integer from 1 to about 5,000, from 1 to about 10,000, from 1 to about 50,000, from 1 to about 100,000, from 1 to about 200,000, from 1 to about 500,000, from 2 to about 10,000, from 2 to about 50,000, from 2 to about 100,000, from 2 to about 200,000, or from 2 to about 500,000; and each of R⁵, R⁶, R⁷ and R⁸ is independently H, an organyl group, or a functional group. In some embodiments, each of R⁵, R⁶, R⁷ and R⁸ disclosed herein is not a monovalent hydrocarbon group containing 4-8 carbon atoms. In some embodiments, each of R⁵, R⁶, R⁷ and R⁸ disclosed herein is not an alkyl group containing 4-8 carbon atoms.

In some embodiments, the farnesene interpolymer disclosed herein comprises (a) one or more units having at least one of formulae (V), (VI), (VII) and (VIII) disclosed herein; and (b) one or more units having formula (IX) disclosed herein. In other embodiments, the farnesene interpolymer disclosed herein comprises (a) one or more units having at least one of formulae (I), (II), (III), (IV), (V), (VI), (VII) and (VIII) disclosed herein; and (b) one or more units having formula (IX) disclosed herein.

In some embodiments, the farnesene interpolymer is prepared by polymerizing at least one farnesene and at least two vinyl monomers in the presence of any catalyst disclosed herein. In certain embodiments, the farnesene interpolymer disclosed herein comprises (a) one or more units having at least one of formulae (I), (II), (III), (IV), (V), (VI), (VII) and (VIII) disclosed herein; (b) one or more units having formula (IX): 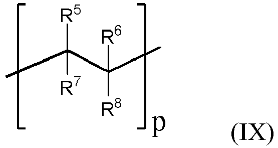 wherein each of R⁵, R⁶, R⁷ and R⁸ is independently H, alkyl, cycloalkyl, aryl, alkenyl, cycloalkenyl, alkynyl, heterocyclyl (*e.g.,* pyridyl), alkoxy, aryloxy, carboxy *(i.e.,* -COOH), alkoxycarbonyl (*e.g*., methoxycarbonyl, ethoxycarbonyl, n-propoxycarbonyl, isopropoxycarbonyl, n-butoxycarbonyl), aminoalkoxycarbonyl (*e.g*., 2-aminoethoxycarbonyl), hydroxyalkoxycarbonyl (*e.g*., 2-hydroxyethoxycarbonyl), aminocarbonyl, alkylaminocarbonyl, dialkylaminocarbonyl, acyloxy (*e.g.,* CH₃-C(=O)-O), nitrile or halo (*e.g.,* F, Cl, Br and I); and (c) one or more units having formula (IX): 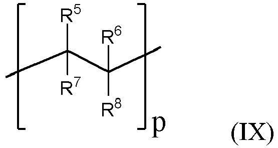 wherein R⁵ is carboxy or alkoxycarbonyl; R⁷ is H or alkyl; and each of R⁶ and R⁸ is independently H, and wherein each p is independently an integer from 1 to about 5,000, from 1 to about 10,000, from 1 to about 50,000, from 1 to about 100,000, from 1 to about 200,000, from 1 to about 500,000, from 2 to about 10,000, from 2 to about 50,000, from 2 to about 100,000, from 2 to about 200,000, or from 2 to about 500,000.

In some embodiments, the farnesene interpolymer is prepared by polymerizing at least one farnesene and at least two vinyl monomers in the presence of any catalyst suitable for polymerizing olefins and vinyl monomers. In certain embodiments, the farnesene interpolymer disclosed herein comprises (a) one or more units having at least one of formulae (I), (II), (III), (IV), (V), (VI), (VII) and (VIII) disclosed herein; (b) one or more units having formula (IX): 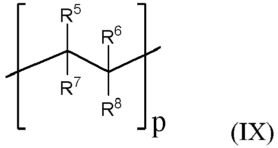 wherein each of R⁵, R⁶, R⁷ and R⁸ is independently H, alkyl, cycloalkyl, aryl, alkenyl, cycloalkenyl, alkynyl, heterocyclyl (*e.g.,* pyridyl), alkoxy, aryloxy, carboxy (*i.e.,* -COOH), alkoxycarbonyl (*e.g*., methoxycarbonyl, ethoxycarbonyl, n-propoxycarbonyl, isopropoxycarbonyl, n-butoxycarbonyl), aminoalkoxycarbonyl (*e.g*., 2-aminoethoxycarbonyl), hydroxyalkoxycarbonyl (*e.g*., 2-hydroxyethoxycarbonyl), aminocarbonyl, alkylaminocarbonyl, dialkylaminocarbonyl, acyloxy (*e.g.,* CH₃-C(=O)-O), nitrile or halo (*e.g.,* F, Cl, Br and I); (c) one or more units having formula (IX): 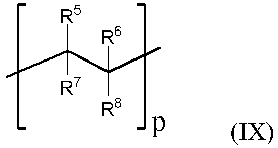 wherein each of R⁵ and R⁶ is independently carboxy or R⁵ and R⁶ together form -C(=O)-O-C(=O)-; R⁷ is H or alkyl; and R⁸ is H; and (d) one or more units having formula (IX): 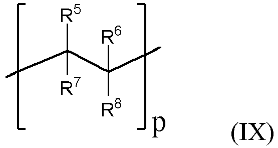 wherein R⁵ is alkoxycarbonyl; R⁷ is H or alkyl; and each of R⁶ and R⁸ is independently H, and wherein each p is independently an integer from 1 to about 5,000, from 1 to about 10,000, from 1 to 50,000, from 1 to 100,000, from 1 to 200,000, from 1 to 500,000, from 2 to about 10,000, from 2 to about 50,000, from 2 to about 100,000, from 2 to about 200,000, or from 2 to about 500,000.

In some embodiments, the farnesene interpolymer disclosed herein is a random interpolymer. In other embodiments, the farnesene interpolymer disclosed herein is a random interpolymer wherein the vinyl monomer units and the farnesene units are randomly distributed. In further embodiments, the farnesene interpolymer disclosed herein is a random interpolymer wherein the vinyl monomer units and the farnesene units are randomly distributed and wherein two or more of formulae (I), (II), (III), (IV), (V), (VI), (VII), (VIII) and (XI) in the farnesene units are distributed randomly, alternatively or in blocks.

In some embodiments, the farnesene interpolymer disclosed herein is an alternating interpolymer. In other embodiments, the farnesene interpolymer disclosed herein is an alternating interpolymer wherein the vinyl monomer units and the farnesene units are alternatively distributed. In further embodiments, the farnesene interpolymer disclosed herein is an alternating interpolymer wherein the vinyl monomer units and the farnesene units are alternatively distributed and wherein two or more of formulae (I), (II), (III), (IV), (V), (VI), (VII), (VIII) and (XI) in the farnesene units are distributed randomly, alternatively or in blocks.

In certain embodiments, the farnesene interpolymer is a block interpolymer having one or more first blocks comprising the one or more units having formula (I), (II), (III), (IV) or a combination thereof and one or more second blocks comprising the one or more units having formula (IX). In further embodiments, the farnesene interpolymer is a block interpolymer having one or more first blocks comprising the one or more units having formula (V), (VI), (VII), (VIII) or a combination thereof and one or more second blocks comprising the one or more units having formula (IX). In still further embodiments, there are one first block and two second blocks and wherein the first block is between the two second blocks. In still further embodiments, each of the second blocks comprises units derived from styrene. In some embodiments, the farnesene block interpolymer is a polystyrene-polyfarnesene di-block polyfarnesene, polystyrene-polyfarnesene-polystyrene tri-block polyfarnesene or a combination thereof.

In some embodiments, the farnesene interpolymer can be represented by the following formula: PₓQ_{y} wherein each of x and y is at least 1, and wherein P has formula (IX) and Q has formula (I), (II), (III), (IV), (V), (VI), (VII) or (VIII). In further embodiments, each of x and y is independently greater than 1, such as 2, 3, 4, 5, 6, 7, 8, 9, 10, 15, 20, 25, 30, 35, 40, or higher. In some embodiments, the Ps and Qs are linked in a substantially linear fashion, as opposed to a substantially branched or substantially star-shaped fashion. In other embodiments, the Ps and Qs are randomly distributed along the farnesene interpolymer chain. In other embodiments, the Ps and Qs are in two or more blocks or segments to provide a farnesene interpolymer having a block structure, for example, PP--P-QQ---Q or PP--P-QQ-Q-P---PP. In other embodiments, the Ps and Qs are alternatively distributed along the farnesene interpolymer chain to provide a farnesene interpolymer having an alternative structure, for example, P-Q, P-Q-P, P-Q-P-Q, P-Q-P-Q-P.

In some embodiments, each Q has formula AₓB_{y} or AₓB_{y}C_{z} as disclosed herein.

In certain embodiments, the amount of formula (I) in the polyfarnesene disclosed herein is at most about 85 wt.%, at most about 80 wt.%, at most about 70 wt.%, at most about 60 wt.%, or at most about 50 wt.%, based on the total weight of the polyfarnesene. In other embodiments, the amount of formula (III) in the polyfarnesene disclosed herein is at least about 10 wt.%, at least about 15 wt.%, at least about 20 wt.%, at least about 25 wt.%, at least about 30 wt.%, at least about 40 wt.%, at least about 50 wt.%, at least about 60 wt.%, at least about 70 wt.%, at least about 80 wt.%, at least about 90 wt.%, at least about 95 wt.%, or at least about 99 wt.%, based on the total weight of the polyfarnesene. In further embodiments, the amount of formula (II) in the polyfarnesene disclosed herein is from about 1 wt.% to about 99 wt.%, from about 5 wt.% to about 99 wt.%, from about 10 wt.% to about 99 wt.%, or from about 15 wt.% to about 99 wt.%, based on the total weight of the polyfarnesene. In still further embodiments, the amount of formula (IV) in the polyfarnesene disclosed herein is at most about 0.1 wt.%, at most about 0.5 wt.%, at most about 1 wt.%, at most about 2 wt.%, or at most about 3 wt.%, based on the total weight of the polyfarnesene. In some embodiments, the polyfarnesene disclosed herein is substantially free of formula (I), (II), (III) or (IV).

In certain embodiments, the amount of formula (V), (VI), (VII) or (VIII) in the polyfarnesene disclosed herein is at most about 1 wt.%, at most about 5 wt.%, at most about 10 wt.%, at most about 20 wt.%, at most about 30 wt.%, at most about 40 wt.%, at most about 50 wt.%, at most about 60 wt.%, at most about 70 wt.%, at most about 80 wt.%, or at most about 90 wt.%, based on the total weight of the polyfarnesene. In other embodiments, the amount of formula (V), (VI), (VII) or (VIII) in the polyfarnesene disclosed herein is at least about 1 wt.%, at least about 2 wt.%, at least about 3 wt.%, at least about 5 wt.%, at least about 10 wt.%, at least about 20 wt.%, at least about 30 wt.%, at least about 40 wt.%, at least about 50 wt.%, at least about 60 wt.%, based on the total weight of the polyfarnesene. In further embodiments, the amount of formula (V), (VI), (VII) or (VIII) in the polyfarnesene disclosed herein is from about 1 wt.% to about 99 wt.%, from about 5 wt.% to about 99 wt.%, from about 10 wt.% to about 99 wt.%, or from about 15 wt.% to about 99 wt.%, based on the total weight of the polyfarnesene. In some embodiments, the polyfarnesene disclosed herein is substantially free of formula (V), (VI), (VII) or (VIII).

In other embodiments, the sum of m and n disclosed herein is greater than about 250, greater than about 300, greater than about 500, greater than about 750, greater than about 1000, or greater than about 2000. In further embodiments, the sum of m and 1 disclosed herein is greater than about 250, greater than about 300, greater than about 500, greater than about 750, greater than about 1000, or greater than about 2000. In certain embodiments, the sum of m, n and 1 disclosed herein is greater than about 250, greater than about 300, greater than about 500, greater than about 750, greater than about 1000, or greater than about 2000. In some embodiments, the sum of m, n, 1 and k disclosed herein is greater than about 250, greater than about 300, greater than about 500, greater than about 750, greater than about 1000, or greater than about 2000.

In certain embodiments, the number-average molecular weight (Mₙ), weight-average molecular weight (M_{w}), or viscosity-average molecular weight (M_{z}) of the polyfarnesene disclosed herein is greater than about 1,000, greater than about 5,000, greater than about 10,000, greater than about 50,000, greater than about 100,000, greater than 200,000, greater than 300,000, greater than about 500,000, greater than 750,000, greater than 1,000,000, greater than 1,500,000, or greater than 2,000,000. In some embodiments, the Mₙ, M_{w} or M_{z} of the polyfarnesene disclosed herein is less than about 10,000,000, less than about 5,000,000, less than about 1,000,000, less than about 750,000, less than about 500,000, less than about 100,000, less than about 50,000, less than about 10,000, or less than about 5,000.

In some embodiments, the polyfarnesene disclosed herein has at least a glass transition temperature (Tg) of less than 50 °C, less than 40 °C, less than 30 °C, less than 20 °C, less than 10 °C, less than 0 °C, less than -10 °C, less than -20 °C, less than -30 °C, less than - 40 °C, less than -50 °C, less than -55 °C, less than -60 °C, less than -65 °C, less than -70 °C or less than -75 °C, as measured according to ASTM D7426-08 titled *"standard Test Method for Assignment of the DSC Procedure for Determining Tg of a Polymer or an Elastomeric Compound,"* which is incorporated herein by reference. In some embodiments, the polyfarnesene disclosed herein has at least a glass transition temperature (T_{g}) of greater than 50 °C, greater than 40 °C, greater than 30 °C, greater than 20 °C, greater than 10 °C, greater than 0 °C, greater than -10 °C, greater than -20 °C, greater than -30 °C, greater than -40 °C, or greater than -50 °C. In certain embodiments, the polyfarnesene has at least a glass transition temperature (Tg) from about -20 °C to about 40 °C, from about -15 °C to about 35 °C, from about -10 °C to about 30 °C, from about -5 °C to about 25 °C, from about 0 °C to about 20 °C, or from about 5 °C to about 15 °C, as measured according to ASTM D7426-08.

In some embodiments, the amount of formula (I) is at most about 80 wt.%, based on the total weight of the polyfarnesene. In other embodiments, the sum of m, n and 1 is greater than about 300. In further embodiments, at least a portion of the double bonds in one or more of formulae (I), (II), (III), (IV), (IX), (XI), (XII) and stereoisomers thereof is hydrogenated.

In some embodiments, the farnesene interpolymer disclosed herein comprises one or more units derived from a farnesene in an amount of at least about 5 mole percent, at least about 10 mole percent, at least about 15 mole percent, at least about 20 mole percent, at least about 25 mole percent, at least about 30 mole percent, at least about 40 mole percent, at least about 50 mole percent, at least about 60 mole percent, at least about 70 mole percent, at least about 80 mole percent, or at least about 90 mole percent of the whole farnesene interpolymer. In still further embodiments, the farnesene interpolymer disclosed herein comprises one or more units derived from the vinyl monomer in an amount of at least about 5 mole percent, at least about 10 mole percent, at least about 15 mole percent, at least about 20 mole percent, at least about 30 mole percent, at least about 40 mole percent, at least about 50 mole percent, at least about 60 mole percent, at least about 70 mole percent, at least about 80 mole percent, or at least about 90 mole percent of the whole farnesene interpolymer.

In certain embodiments, the polyfarnesene comprises one or more polymer molecules, each of the molecules independently having formula (X'): 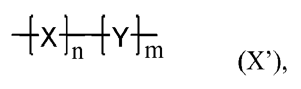 wherein n is an integer from 1 to about 500, from 1 to about 1,000, from 1 to about 5,000, from 1 to about 10,000, from 1 to about 50,000, from 1 to about 100,000, from 1 to about 200,000 or from 1 to about 500,000; m is an integer from 0 to about 500, from 0 to about 1,000, from 0 to about 5,000, from 0 to about 10,000, from 0 to about 50,000, from 0 to about 100,000, from 0 to about 200,000 or from 0 to about 500,000; X is derived from a farnesene; and Y is derived from a vinyl monomer, with the proviso that when m is 0, n is at least 2. In some embodiments, m is an integer from 1 to about 500, from 1 to about 1,000, from 1 to about 5,000, from 1 to about 10,000, from 1 to about 50,000, from 1 to about 100,000, from 1 to about 200,000 or from 1 to about 500,000. In certain embodiments, the sum of n and m is from 2 to about 500, from 2 to about 1,000, from 2 to about 5,000, from 2 to about 10,000, from 2 to about 50,000, from 2 to about 100,000, from 2 to about 200,000 or from 2 to about 500,000.

In some embodiments, X has one or more of formulae (I')-(VIII'): 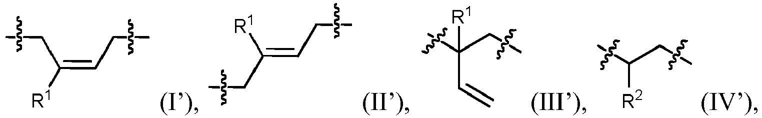 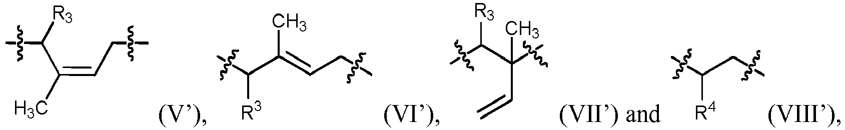 where R¹, R², R³, R⁴ are as defined herein.

In certain embodiments, Y has formula (IX'): 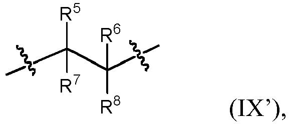 where each of R⁵, R⁶, R⁷ and R⁸ is independently H, an organyl group or a functional group. In some embodiments, each of R⁵, R⁶, R⁷ and R⁸ is independently H, hydrocarbyl, substituted hydrocarbyl, heterohydrocarbyl, substituted heterohydrocarbyl, heterocyclyl, substituted heterocyclyl or a functional group containing O, N, S, P or a combination thereof.

In some embodiments, each of R⁵, R⁶, R⁷ and R⁸ is independently H, alkyl, cycloalkyl, aryl, alkenyl, cycloalkenyl, alkynyl, heterocyclyl (*e.g*., pyridyl), alkoxy, aryloxy, carboxy (*i*.*e*., -COOH), alkoxycarbonyl (*e.g.,* methoxycarbonyl, ethoxycarbonyl, n-propoxycarbonyl, isopropoxycarbonyl, n-butoxycarbonyl), aminoalkoxycarbonyl (*e.g.,* 2-aminoethoxycarbonyl), hydroxyalkoxycarbonyl (*e.g*., 2-hydroxyethoxycarbonyl), aminocarbonyl, alkylaminocarbonyl, dialkylaminocarbonyl, acyloxy (*e.g.,* CH₃-C(=O)-O), nitrile or halo *(e.g.,* F, Cl, Br and I).

In certain embodiments, the R⁵ of formula (X') is carboxy; and R⁷ is H or alkyl. In other embodiments, the R⁵ is alkoxycarbonyl; and R⁷ is H or alkyl. In some embodiments, the alkoxycarbonyl is methoxycarbonyl, ethoxycarbonyl, propoxycarbonyl, butoxycarbonyl, pentoxycarbonyl, isopentoxycarbonyl, neopentoxycarbonyl, hexoxycarbonyl, heptoxycarbonyl, octoxycarbonyl, decoxycarbonyl, isodecoxycarbonyl, lauroxycarbonyl or stearoxycarbonyl.

In some embodiments, R⁵ is hydroxyalkoxycarbonyl or aminoalkoxycarbonyl; and R⁷ is H or alkyl. In certain embodiments, the hydroxyalkoxycarbonyl is 2-hydroyethoxycarbonyl; and the aminoalkoxycarbonyl is 2-aminoethoxycarbonyl, 2-(dimethylamino)ethoxycarbonyl or 2-(diethylamino)ethoxycarbonyl.

In certain embodiments, the R⁵ is 2-methylphenyl, 4-methylphenyl, 2-ethylphenyl, 4-ethylphenyl, 2,4-dimethylphenyl or 4-fluorophenyl; and R⁷ is H. In some embodiments, the R⁵ is pyridyl or cyano; and R⁷ is H. In some embodiments, the R⁵ is acyloxy; and R⁷ is H. In certain embodiments, the acyloxy is CH₃C(=O)-O-. In certain embodiments, R⁵ is halo; and R⁷ is H or halo. In some embodiments, R⁵ is chloro; and R⁷ is H. In certain embodiments, R⁵ is fluoro; and R⁷ is fluoro.

In certain embodiments, the polyfarnesene comprises one or more polymer molecules, each of the molecules independently having formula (X"): 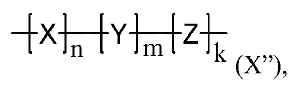 wherein n is an integer from 1 to about 500, from 1 to about 1,000, from 1 to about 5,000, from 1 to about 10,000, from 1 to about 50,000, from 1 to about 100,000, from 1 to about 200,000 or from 1 to about 500,000; each of m and k is independently an integer from 0 to about 500, from 0 to about 1,000, from 0 to about 5,000, from 0 to about 10,000, from 0 to about 50,000, from 0 to about 100,000, from 0 to about 200,000 or from 0 to about 500,000; X is derived from a farnesene; and each of Y and Z is independently derived from a vinyl monomer, with the proviso that when m is 0 and k is 0, n is at least 2. In some embodiments, each of m and k is independently from 1 to about 500, from 1 to about 1,000, from 1 to about 5,000, from 1 to about 10,000, from 1 to about 50,000, from 1 to about 100,000, from 1 to about 200,000 or from 1 to about 500,000. In certain embodiments, the sum of n, m and k is independently from 3 to about 500, from 3 to about 1,000, from 3 to about 5,000, from 3 to about 10,000, from 3 to about 50,000, from 3 to about 100,000, from 3 to about 200,000 or from 3 to about 500,000.

In some embodiments, the sum of n, m and k is greater than about 2, about 3, about 4, about 5, about 6, about 7, about 8, about 9 or about 10. In other embodiments, the sum of n, m and k is greater than about 15, about 20, about 25, about 30, about 35, about 40, about 45, about 50, about 55, about 60, about 65, about 70, about 75, about 80, about 85, about 90, about 95 or about 100. In further embodiments, the sum of n, m and k is greater than about 500, about 1,000, about 1,500, about 2,000, about 3,000, about 4,000, about 5,000, about 6,000, about 7,000, about 8,000, about 9,000, about 10,000, about 50,000, about 100,000, about 500,000 or about 1,000,000.

In certain embodiments, the sum of m and k is greater than about 2, about 3, about 4, about 5, about 6, about 7, about 8, about 9 or about 10. In other embodiments, the sum of m and k is greater than about 15, about 20, about 25, about 30, about 35, about 40, about 45, about 50, about 55, about 60, about 65, about 70, about 75, about 80, about 85, about 90, about 95 or about 100. In further embodiments, the sum of m and k is greater than about 500, about 1,000, about 1,500, about 2,000, about 3,000, about 4,000, about 5,000, about 6,000, about 7,000, about 8,000, about 9,000, about 10,000, about 50,000 or about 100,000. In some embodiments, the sum of m and k is less than about 2, about 3, about 4, about 5, about 6, about 7, about 8, about 9 or about 10. In other embodiments, the sum of m and k is less than about 15, about 20, about 25, about 30, about 35, about 40, about 45, about 50, about 55, about 60, about 65, about 70, about 75, about 80, about 85, about 90, about 95 or about 100. In further embodiments, the sum of m and k is less than about 500, about 1,000, about 1,500, about 2,000, about 3,000, about 4,000, about 5,000, about 6,000, about 7,000, about 8,000, about 9,000, about 10,000, about 50,000 or about 100,000.

In some embodiments, each of m and k is independently greater than 1, about 2, about 3, about 4, about 5, about 6, about 7, about 8, about 9 or about 10. In other embodiments, each of m and k is independently greater than about 15, about 20, about 25, about 30, about 35, about 40, about 45, about 50, about 55, about 60, about 65, about 70, about 75, about 80, about 85, about 90, about 95 or about 100. In further embodiments, each of m and k is independently greater than about 500, about 1,000, about 1,500, about 2,000, about 3,000, about 4,000, about 5,000, about 6,000, about 7,000, about 8,000, about 9,000, about 10,000. In certain embodiments, each of m and k is independently less than about 2, about 3, about 4, about 5, about 6, about 7, about 8, about 9 or about 10. In other embodiments, each of m and k is independently less than about 15, about 20, about 25, about 30, about 35, about 40, about 45, about 50, about 55, about 60, about 65, about 70, about 75, about 80, about 85, about 90, about 95 or about 100. In further embodiments, each of m and k is independently less than about 500, about 1,000, about 1,500, about 2,000, about 3,000, about 4,000, about 5,000, about 6,000, about 7,000, about 8,000, about 9,000, about 10,000.

In some embodiments, X is as defined herein. In certain embodiments, each of Y and Z independently has formula (IX'): 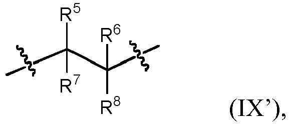 where each of R⁵, R⁶, R⁷ and R⁸ is as defined herein.

In certain embodiments, R⁵ of Y of formula (X") is carboxy or alkoxycarbonyl; R⁷ of Y is H or alkyl; and each of R⁶ and R⁸ of Y is independently H. In some embodiments, R⁵ of Z of formula (X") is alkoxycarbonyl, hydroxyalkoxycarbonyl or aminoalkoxycarbonyl; R⁷ of Z is H or alkyl; and each of R⁶ and R⁸ of Z is independently H. In other embodiments, the alkoxycarbonyl is the alkoxycarbonyl is methoxycarbonyl, ethoxycarbonyl, propoxycarbonyl, butoxycarbonyl, pentoxycarbonyl, isopentoxycarbonyl, neopentoxycarbonyl, hexoxycarbonyl, heptoxycarbonyl, octoxycarbonyl, decoxycarbonyl, isodecoxycarbonyl, lauroxycarbonyl or stearoxycarbonyl; the hydroxyalkoxycarbonyl is hydroxyethoxycarbonyl; and the aminoalkoxycarbonyl is 2-aminoethoxycarbonyl, 2-(dimethylamino)ethoxycarbonyl or 2-(diethylamino)ethoxycarbonyl.

In some embodiments, R⁵ of Z of formula (X") is alkyl or aryl; and each of R⁶, R⁷ and R⁸ of Z is independently H. In certain embodiments, R⁵ of Z is aryl selected from phenyl, 2-methylphenyl, 4-methylphenyl, 2-ethylphenyl, 4-ethylphenyl, 2,4-dimethylphenyl and 4-fluorophenyl.

In certain embodiments, R⁵ of Y of formula (X") is alkoxycarbonyl or hydroxyalkoxycarbonyl; R⁷ of Y is alkyl; and each of R⁶ and R⁸ of Y is H; R⁵ of Z is alkoxycarbonyl; R⁷ of Z is H or alkyl; and each of R⁶ and R⁸ of Z is H. In some embodiments, R⁵ of Y of formula (X") is phenyl; each of R⁶, R⁷ and R⁸ of Y is H; R⁵ of Z is cyano; and each of R⁶, R⁷ and R⁸ of Z is H.

In certain embodiments, the polyfarnesene comprises one or more polymer molecules, each of the molecules independently having formula (X'"): 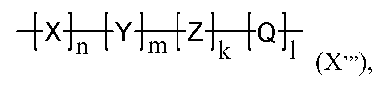 wherein n is an integer from 1 to about 500, from 1 to about 1,000, from 1 to about 5,000, from 1 to about 10,000, from 1 to about 50,000, from 1 to about 100,000, from 1 to about 200,000 or from 1 to about 500,000; each of m, k and 1 is independently an integer from 0 to about 500, from 0 to about 1,000, from 0 to about 5,000, from 0 to about 10,000, from 0 to about 50,000, from 0 to about 100,000, from 0 to about 200,000 or from 0 to about 500,000; X is derived from a farnesene; and each of Y, Z and Q is independently derived from a vinyl monomer, with the proviso that when m is 0, k is 0 and l is 0, n is at least 2. In some embodiments, each of m, k and l is independently from 1 to about 500, from 1 to about 1,000, from 1 to about 5,000, from 1 to about 10,000, from 1 to about 50,000, from 1 to about 100,000, from 1 to about 200,000 or from 1 to about 500,000. In certain embodiments, the sum of n, m, k and l is independently from 4 to about 500, from 4 to about 1,000, from 4 to about 5,000, from 4 to about 10,000, from 4 to about 50,000, from 4 to about 100,000, from 4 to about 200,000 or from 4 to about 500,000.

In some embodiments, the sum of n, m, k and l is greater than about 2, about 3, about 4, about 5, about 6, about 7, about 8, about 9 or about 10. In other embodiments, the sum of n, m, k and l is greater than about 15, about 20, about 25, about 30, about 35, about 40, about 45, about 50, about 55, about 60, about 65, about 70, about 75, about 80, about 85, about 90, about 95 or about 100. In further embodiments, the sum of n, m, k and l is greater than about 500, about 1,000, about 1,500, about 2,000, about 3,000, about 4,000, about 5,000, about 6,000, about 7,000, about 8,000, about 9,000, about 10,000, about 50,000, about 100,000, about 500,000 or about 1,000,000.

In certain embodiments, the sum of m, k and l is greater than about 2, about 3, about 4, about 5, about 6, about 7, about 8, about 9 or about 10. In other embodiments, the sum of m, k and l is greater than about 15, about 20, about 25, about 30, about 35, about 40, about 45, about 50, about 55, about 60, about 65, about 70, about 75, about 80, about 85, about 90, about 95 or about 100. In further embodiments, the sum of m, k and l is greater than about 500, about 1,000, about 1,500, about 2,000, about 3,000, about 4,000, about 5,000, about 6,000, about 7,000, about 8,000, about 9,000, about 10,000, about 50,000 or about 100,000. In some embodiments, the sum of m, k and l is less than about 2, about 3, about 4, about 5, about 6, about 7, about 8, about 9 or about 10. In other embodiments, the sum of m, k and l is less than about 15, about 20, about 25, about 30, about 35, about 40, about 45, about 50, about 55, about 60, about 65, about 70, about 75, about 80, about 85, about 90, about 95 or about 100. In further embodiments, the sum of m, k and l is less than about 500, about 1,000, about 1,500, about 2,000, about 3,000, about 4,000, about 5,000, about 6,000, about 7,000, about 8,000, about 9,000, about 10,000, about 50,000 or about 100,000.

In some embodiments, each of m, k and l is independently greater than 1, about 2, about 3, about 4, about 5, about 6, about 7, about 8, about 9 or about 10. In other embodiments, each of m, k and l is independently greater than about 15, about 20, about 25, about 30, about 35, about 40, about 45, about 50, about 55, about 60, about 65, about 70, about 75, about 80, about 85, about 90, about 95 or about 100. In further embodiments, each of m, k and l is independently greater than about 500, about 1,000, about 1,500, about 2,000, about 3,000, about 4,000, about 5,000, about 6,000, about 7,000, about 8,000, about 9,000, about 10,000. In certain embodiments, each of m, k and l is independently less than about 2, about 3, about 4, about 5, about 6, about 7, about 8, about 9 or about 10. In other embodiments, each of m, k and l is independently less than about 15, about 20, about 25, about 30, about 35, about 40, about 45, about 50, about 55, about 60, about 65, about 70, about 75, about 80, about 85, about 90, about 95 or about 100. In further embodiments, each of m, k and l is independently less than about 500, about 1,000, about 1,500, about 2,000, about 3,000, about 4,000, about 5,000, about 6,000, about 7,000, about 8,000, about 9,000, about 10,000.

In some embodiments, X is as defined herein. In certain embodiments, each of Y, Z and Q independently has formula (IX'): 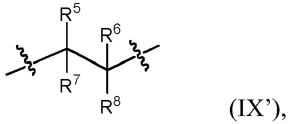 where each of R⁵, R⁶, R⁷ and R⁸ is as defined herein.

In some embodiments, R⁵ of Y of formula (X"') is carboxy or alkoxycarbonyl; R⁷ of Y is H or alkyl; and each of R⁶ and R⁸ of Y is independently H. In some embodiments, R⁵ of Z of formula (X"') is alkoxycarbonyl, hydroxyalkoxycarbonyl or aminoalkoxycarbonyl; R⁷ of Z is H or alkyl; and each of R⁶ and R⁸ of Z is independently H. In other embodiments, the alkoxycarbonyl is the alkoxycarbonyl is methoxycarbonyl, ethoxycarbonyl, propoxycarbonyl, butoxycarbonyl, pentoxycarbonyl, isopentoxycarbonyl, neopentoxycarbonyl, hexoxycarbonyl, heptoxycarbonyl, octoxycarbonyl, decoxycarbonyl, isodecoxycarbonyl, lauroxycarbonyl or stearoxycarbonyl; the hydroxyalkoxycarbonyl is hydroxyethoxycarbonyl; and the aminoalkoxycarbonyl is 2-aminoethoxycarbonyl, 2-(dimethylamino)ethoxycarbonyl or 2-(diethylamino)ethoxycarbonyl.

In some embodiments, each of R⁵ and R⁶ of Q of formula (X"') is carboxy or R⁵ and R⁶ together form -C(=O)-O-C(=O)-. In certain embodiments, R⁵ ofY of formula (X"') is carboxy; R⁷ of Y is H or alkyl; and each of R⁶ and R⁸ of Y is independently H. In some embodiments, R⁵ of Z of formula (X"') is alkoxycarbonyl; R⁷ of Z is H or alkyl; and each of R⁶ and R⁸ of Z is independently H. In some embodiments, R⁵ of Q of formula (X"') is alkyl or aryl; and each of R⁶, R⁷ and R⁸ of Q is independently H. In some embodiments, R⁵ of Q of formula (X"') is alkoxycarbonyl; and each of R⁶, R⁷ and R⁸ of Q is independently H.

In general, the polyfarnesene comprising a mixture of polymer molecules, each of which has formula (X') wherein each of n and m independently has a specific value. The average and distribution of the n or m values disclosed herein depend on various factors such as the molar ratio of the starting materials, the reaction time and temperature, the presence or absence of a chain terminating agent, the amount of an initiator if there is any, and the polymerization conditions. The farnesene interpolymer of Formula (X') may include unreacted comonomers, although the concentrations of the comonomer would generally be small if not extremely small or undetectable. The extent of polymerization, as specified with n and m values, can affect the properties of the resulting polymer. In some embodiments, n is an integer from 1 to about 5,000, from 1 to about 10,000, from 1 to about 50,000, from 1 to about 100,000, from 1 to about 200,000, or from 1 to about 500,000; and m is an integer from 0 to about 5,000, from 0 to about 10,000, from 0 to about 50,000, from 0 to about 100,000, from 0 to about 200,000, or from 0 to about 500,000. In other embodiments, n is independently from about 1 to about 5000, from about 1 to about 2500, from about 1 to about 1000, from about 1 to about 500, from about 1 to about 100 or from about 1 to about 50; and m is from about 0 to about 5000, from about 0 to about 2500, from about 0 to about 1000, from about 0 to about 500, from about 0 to about 100 or from about 0 to about 50. A person of ordinary skill in the art will recognize that additional ranges of average n and m values are contemplated and are within the present disclosure.

In some embodiments, formula (X'), (X") or (X"') comprises two end groups as shown by the formula (Xₐ), (X_{b}) or (X_{c}) respectively: 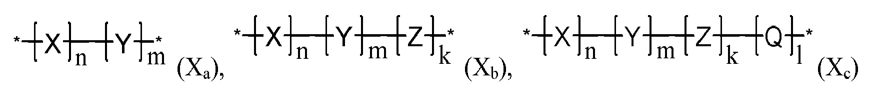 where each of the asterisks (*) in the formula represents an end group which may or may not vary between different polymer molecules of the polyfarnesene depending on many factors such as the molar ratio of the starting materials, the presence or absence of a chain terminating agent, and the state of the particular polymerization process at the end of the polymerization step.

In some embodiments, Xs and Ys of formula (X') or (Xₐ) are linked in a substantially linear fashion. In other embodiments, Xs and Ys of formula (X') or (Xₐ) are linked in substantially branched fashion. In further embodiments, Xs and Ys of formula (X') or (Xₐ) are linked in substantially star-shaped fashion. In still further embodiments, each of Xs and Ys independently forms at least a block along the polymer chain so as to provide a di-block, tri-block or multi-block farnesene interpolymer having at least one X block and at least one Y block. In still further embodiments, Xs and Ys are randomly distributed along the polymer chain so as to provide a random farnesene interpolymer. In still further embodiments, Xs and Ys are alternatively distributed along the polymer chain so as to provide an alternating farnesene interpolymer.

In some embodiments, Xs, Ys and Zs of formula (X") or (X_{b}) are linked in a substantially linear fashion. In other embodiments, Xs, Ys and Zs of formula (X") or (X_{b}) are linked in substantially branched fashion. In further embodiments, Xs, Ys and Zs of formula (X") or (X_{b}) are linked in substantially star-shaped fashion. In still further embodiments, each of Xs, Ys and Zs independently forms at least a block along the polymer chain so as to provide a tri-block or multi-block farnesene interpolymer having at least one X block and at least one Y block, at least one Z block. In still further embodiments, Xs, Ys and Zs are randomly distributed along the polymer chain so as to provide a random farnesene interpolymer. In still further embodiments, Xs, Ys and Zs are alternatively distributed along the polymer chain so as to provide an alternating farnesene interpolymer.

In some embodiments, Xs, Ys, Zs and Qs of formula (X'") or (X_{c}) are linked in a substantially linear fashion. In other embodiments, Xs, Ys, Zs and Qs of formula (X'") or (X_{c}) are linked in substantially branched fashion. In further embodiments, Xs, Ys, Zs and Qs of formula (X'") or (X_{c}) are linked in substantially star-shaped fashion. In still further embodiments, each of Xs, Ys, Zs and Qs independently forms at least a block along the polymer chain so as to provide a tetra-block or multi-block farnesene interpolymer having at least one X block, at least one Y block, at least one Z block, and at least one Q block. In still further embodiments, Xs, Ys, Zs and Qs are randomly distributed along the polymer chain so as to provide a random farnesene interpolymer. In still further embodiments, Xs, Ys, Zs and Qs are alternatively distributed along the polymer chain so as to provide an alternating farnesene interpolymer.

In some embodiments, the amount of the farnesene in the farnesene interpolymer disclosed herein is greater than about 1.5 mole %, greater than about 2.0 mole %, greater than about 2.5 mole %, greater than about 5 mole %, greater than about 10 mole %, greater than about 15 mole %, greater than 20 mole %, greater than 21 mole %, greater than 22 mole %, greater than 23 mole %, greater than 24 mole %, greater than 25 mole %, or greater than about 30 mole %, based on the total amount of the farnesene interpolymer. In other embodiments, the amount of the farnesene in the farnesene interpolymer disclosed herein is less than about 90 mole %, less than about 80 mole %, less than about 70 mole %, less than about 60 mole %, less than about 50 mole %, less than about 40 mole %, or less than about 30 mole %, based on the total amount of the farnesene interpolymer.

In some embodiments, the amount of the vinyl monomer(s) in the farnesene interpolymer disclosed herein is greater than about 1.5 %, greater than about 2.0 %, greater than about 2.5 %, greater than about 5 %, greater than about 10 %, greater than about 15 %, or greater than about 20 %, based on the total mole or weight of the farnesene interpolymer. In other embodiments, the amount of the vinyl monomer(s) in the farnesene interpolymer disclosed herein is less than about 90 %, less than about 80 %, less than about 70 %, less than about 60 %, less than about 50 %, less than about 40 %, or less than about 30 %, based on the total mole or weight of the farnesene interpolymer. In further embodiments, the amount of the vinyl monomer(s) in the farnesene interpolymer disclosed herein is from about 1 % to about 90 %, from about 5 % to about 80 %, from about 10 % to about 70 %, from about 10 % to about 60 %, from about 10 % to about 50 %, from about 10 % to about 40 %, or from 10 % about to about 30 %, based on the total mole or weight of the farnesene interpolymer.

In certain embodiments, the mole percent ratio of the farnesene to the at least one vinyl monomer (*i.e*., the mole percent ratio of X to Y, or X to the sum of Y and Z, or X to the sum of Y, Z and Q) in the farnesene interpolymer disclosed herein is from about 1:5 to about 100:1. In other embodiments, the mole percent ratio of X to Y, or X to the sum of Y and Z, or X to the sum of Y, Z and Q is from about 1:4 to about 100:1; from about 1:3.5 to about 100:1, from about 1:3 to about 100:1, from about 1:2.5 to about 100:1, or from about 1:2 to about 100:1. In some embodiments, m is 1 or greater, the mole percent ratio of X to Y, or X to the sum of Y and Z, or X to the sum of Y, Z and Q is from about 1:4 to about 100:1

In certain embodiments, the amount of formula (I') in the polyfarnesene disclosed herein is at most about 85 wt.%, at most about 80 wt.%, at most about 70 wt.%, at most about 60 wt.%, or at most about 50 wt.%, based on the total weight of the polyfarnesene. In other embodiments, the amount of formula (III') in the polyfarnesene disclosed herein is at least about 10 wt.%, at least about 15 wt.%, at least about 20 wt.%, at least about 25 wt.%, at least about 30 wt.%, at least about 40 wt.%, at least about 50 wt.%, at least about 60 wt.%, at least about 70 wt.%, at least about 75 wt.%, at least about 80 wt.%, at least about 85 wt.%, at least about 90 wt.%, at least about 95 wt.%, or at least about 99 wt.%, based on the total weight of the polyfarnesene. In further embodiments, the amount of formula (II') in the polyfarnesene disclosed herein is from about 1 wt.% to about 99 wt.%, from about 5 wt.% to about 99 wt.%, from about 10 wt.% to about 99 wt.%, or from about 15 wt.% to about 99 wt.%, based on the total weight of the polyfarnesene. In still further embodiments, the amount of formula (IV') in the polyfarnesene disclosed herein is at most about 0.1 wt.%, at most about 0.5 wt.%, at most about 1 wt.%, at most about 2 wt.%, or at most about 3 wt.%, based on the total weight of the polyfarnesene. In some embodiments, the polyfarnesene disclosed herein is substantially free of formula (I'), (II'), (III') or (IV').

In certain embodiments, the amount of formula (V'), (VI'), (VII') or (VIII') in the polyfarnesene disclosed herein is at most about 1 wt.%, at most about 5 wt.%, at most about 10 wt.%, at most about 20 wt.%, at most about 30 wt.%, at most about 40 wt.%, at most about 50 wt.%, at most about 60 wt.%, at most about 70 wt.%, at most about 80 wt.%, or at most about 90 wt.%, based on the total weight of the polyfarnesene. In other embodiments, the amount of formula (V'), (VI'), (VII') or (VIII') in the polyfarnesene disclosed herein is at least about 1 wt.%, at least about 2 wt.%, at least about 3 wt.%, at least about 5 wt.%, at least about 10 wt.%, at least about 20 wt.%, at least about 30 wt.%, at least about 40 wt.%, at least about 50 wt.%, at least about 60 wt.%, based on the total weight of the polyfarnesene. In further embodiments, the amount of formula (V'), (VI'), (VII') or (VIII') in the polyfarnesene disclosed herein is from about 1 wt.% to about 99 wt.%, from about 5 wt.% to about 99 wt.%, from about 10 wt.% to about 99 wt.%, or from about 15 wt.% to about 99 wt.%, based on the total weight of the polyfarnesene. In some embodiments, the polyfarnesene disclosed herein is substantially free of formula (V'), (VI'), (VII') or (VIII').

Any compound containing a vinyl group, *i.e.,* -CH=CH₂, that is copolymerizable with farnesene can be used as a vinyl monomer for making the farnesene interpolymer disclosed herein. Useful vinyl monomers disclosed herein include ethylene, *i.e.,* CH₂=CH₂. In certain embodiments, the vinyl monomer has formula (XV): 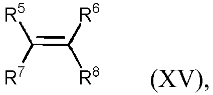 where each of R⁵, R⁶, R⁷ and R⁸ is independently H, an organyl group or a functional group.

In some embodiments, at least one of R⁵, R⁶, R⁷ and R⁸ of formula (IX), (IX') or (XV) is an organyl group. In further embodiments, the organyl group is hydrocarbyl, substituted hydrocarbyl, heterohydrocarbyl, substituted heterohydrocarbyl, heterocyclyl or substituted heterocyclyl. In certain embodiments, each of R⁵, R⁶, R⁷ and R⁸ of formula (IX), (IX') or (XV) is independently H, alkyl, cycloalkyl, aryl, alkenyl, cycloalkenyl, alkynyl, heterocyclyl *(e.g.,* pyridyl), alkoxy, aryloxy, carboxy (*i.e.,* -COOH), alkoxycarbonyl (*e.g.,* methoxycarbonyl, ethoxycarbonyl, n-propoxycarbonyl, isopropoxycarbonyl, n-butoxycarbonyl), aminoalkoxycarbonyl (*e.g*., 2-aminoethoxycarbonyl), hydroxyalkoxycarbonyl (*e.g*., 2-hydroxyethoxycarbonyl), aminocarbonyl, alkylaminocarbonyl, dialkylaminocarbonyl, acyloxy (*e.g.,* CH₃-C(=O)-O), nitrile or halo (*e.g.,* F, Cl, Br and I). In certain embodiments, R⁵ of formula (IX), (IX') or (XV) is aryl; and each of R⁶, R⁷ and R⁸ is H. In further embodiments, R⁵ of formula (IX), (IX') or (XV) is phenyl; and each of R⁶, R⁷ and R⁸ is H. In some embodiments, R⁵ of formula (IX), (IX') or (XV) is carboxy, alkoxycarbonyl, aminocarbonyl, alkylaminocarbonyl, dialkylaminocarbonyl, acyloxy or nitrile; R⁷ is H or alkyl; and each of R⁶ and R⁸ is H. In other embodiments, R⁵ of formula (IX), (IX') or (XV) is carboxy or alkoxycarbonyl; R⁷ is alkyl; and each of R⁶ and R⁸ is H. In further embodiments, R⁵ of formula (IX), (IX') or (XV) is carboxy or alkoxycarbonyl; each of R⁶, R⁷ and R⁸ is H.

In certain embodiments, at least one of R⁵, R⁶, R⁷ and R⁸ of formula (IX), (IX') or (XV) is H. In other embodiments, each of R⁵, R⁶, R⁷ and R⁸ of formula (IX), (IX') or (XV) is H. In further embodiments, R⁵ of formula (IX), (IX') or (XV) is hydrocarbyl; and each of R⁶, R⁷ and R⁸ is H. In still further embodiments, the hydrocarbyl is alkyl, cycloalkyl or aryl. In still further embodiments, none of R⁵, R⁶, R⁷ and R⁸ of formula (IX), (IX') or (XV) is or comprises alkenyl, cycloalkenyl or alkynyl. In still further embodiments, none of R⁵, R⁶, R⁷ and R⁸ of formula (IX), (IX') or (XV) is or comprises a hydrocarbyl, substituted hydrocarbyl, heterocyclyl or substituted heterocyclyl.

In certain embodiments, at least one of R⁵, R⁶, R⁷ and R⁸ of formula (IX), (IX') or (XV) is a functional group containing halo, O, N, S, P or a combination thereof Some non-limiting examples of suitable functional groups include hydroxy, alkoxy, aryloxy, amino, nitro, thiol, thioether, imine, cyano, amido, phosphonato (-P(=O)(O-alkyl)₂, -P(=O)(O-aryl)₂, or -P(=O)(O-alkyl) )O-aryl), phosphinato (-P(=O)(O-alkyl)alkyl, -P(=O)(O-aryl)alkyl, - P(=O)(O-alkyl)aryl, or -P(=O)(O-aryl)aryl), carboxyl, thiocarbonyl, sulfonyl (-S(=O)₂alkyl, or -S(=O)₂aryl sulfonamide (-SO₂NH₂, -SO₂NH(alkyl) -SO₂NH(aryl) -SO₂N(alkyl)₂, - SO₂N(aryl)₂, or -SO₂N(aryl)(alkyl)) ketone, aldehyde, ester, oxo, amino (primary, secondary or tertiary), -CO₂CH₃, -CONH₂, -OCH₂CONH₂, -NH₂, -OCHF₂, -OCF₃, -NH(alkyl), - N(alkyl)₂, -NH(aryl), -N(alkyl)(aryl), -N(aryl)₂, -CHO, -CO(alkyl), -CO(aryl), -CO₂(alkyl), or -CO₂(aryl). In some embodiments, the functional group is or comprises alkoxy, aryloxy, carboxy (*i*.*e*., -COOH), alkoxycarbonyl (*e.g.,* methoxycarbonyl, ethoxycarbonyl, n-propoxycarbonyl, isopropoxycarbonyl, n-butoxycarbonyl), aminoalkoxycarbonyl *(e.g.,* 2-aminoethoxycarbonyl), hydroxyalkoxycarbonyl (*e.g*., 2-hydroxyethoxycarbonyl), aminocarbonyl, alkylaminocarbonyl, dialkylaminocarbonyl, acyloxy (*e.g.,* CH₃-C(=O)-O), nitrile or halo (*e.g.,* F, Cl, Br and I). In certain embodiments, the functional group is or comprises carboxy, alkoxycarbonyl, aminoalkoxycarbonyl, hydroxyalkoxycarbonyl aminocarbonyl, alkylaminocarbonyl, dialkylaminocarbonyl, acyloxy or nitrile. In some embodiments, the functional group is or comprises carboxy or alkoxycarbonyl. In other embodiments, none of R⁵, R⁶, R⁷ and R⁸ of formula (IX), (IX') or (XV) is or comprises a functional group. In other embodiments, none of R⁵, R⁶, R⁷ and R⁸ of formula (IX), (IX') or (XV) is or comprises alkoxy, aryloxy, carboxy, alkoxycarbonyl, aminoalkoxycarbonyl, hydroxyalkoxycarbonyl, aminocarbonyl, alkylaminocarbonyl, dialkylaminocarbonyl, acyloxy, nitrile or halo.

In some embodiments, the vinyl monomer is a substituted or unsubstituted olefin such as ethylene or styrene, vinyl halide (*e*.*g*., vinyl chloride), vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof. In other embodiments, the styrene, vinyl halide, vinyl ether, vinyl acetate, vinyl pyridine, vinylidene fluoride, acrylonitrile, acrylic acid, acrylic ester, methacrylic acid, methacrylic ester, acrylamide or methacrylamide is unsubstituted. In certain embodiments, the styrene, vinyl halide, vinyl ether, vinyl acetate, vinyl pyridine, vinylidene fluoride, acrylonitrile, acrylic acid, acrylic ester, methacrylic acid, methacrylic ester, acrylamide or methacrylamide is substituted. Some non-limiting examples of substituted styrene include 2-fluorostyrene, 4-fluorostyrene, 2-methylstyrene, 3-methylstyrene, 4-methylstyrene, 2-ethylstyrene, 3-ethylstyrene, 4-ethylstyrene, 2,4-dimethylstyrene, 2,5-dimethylstyrene and combinations thereof.

In some embodiments, the vinyl monomer is a substituted or unsubstituted olefin such as ethylene or styrene, acrylic acid, an acrylic ester, methacrylic acid, a methacrylic ester, acrylamide, methacrylamide or a combination thereof. In certain embodiments, the vinyl monomer is a substituted or unsubstituted olefin such as styrene, acrylic acid, an acrylic ester, methacrylic acid, a methacrylic ester or a combination thereof. In other embodiments, the vinyl monomer is ethylene, an α-olefin or a combination thereof. Some non-limiting examples of suitable α-olefins include styrene, propylene, 1-butene, 1-hexene, 1-octene, 4-methyl-1-pentene, norbornene, 1-decene, 1,5-hexadiene and combinations thereof.

In some embodiments, the vinyl monomer is an aryl such as styrene, α-methyl styrene, or di-vinyl benzene. Additional examples include the functionalized vinyl aryls such as those disclosed by U.S. Patent No. 7,041,761.

The farnesene interpolymers disclosed herein are derived from at least one farnesene and at least one olefin monomer. An olefin refers to an unsaturated hydrocarbon-based compound with at least one carbon-carbon double bond. In certain embodiments, the olefin is a conjugated diene. Depending on the selection of catalysts, any olefin may be used in embodiments of the invention. Some non-limiting examples of suitable olefins include C₂₋₂₀ aliphatic and C₈₋₂₀ aromatic compounds containing vinylic unsaturation, as well as cyclic compounds, such as cyclobutene, cyclopentene, dicyclopentadiene, and norbornene, including but not limited to, norbornene substituted in the 5 and 6 position with C₁₋₂₀ hydrocarbyl or cyclohydrocarbyl groups. Other non-limiting examples of suitable olefins include mixtures of such olefins as well as mixtures of such olefins with C₄₋₄₀ diolefin compounds.

Some non-limiting examples of suitable olefin or α-olefin monomers include styrene, ethylene, propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, C₄₋₄₀ dienes and combinations thereof. In certain embodiments, the olefin monomer is propylene, 1-butene, 1-pentene, 1-hexene, 1-octene or a combination thereof. In some embodments, the C₄₋₄₀ dienes include, but not limited to, 1,3-butadiene, 1,3-pentadiene, 1,4-hexadiene, 1,5-hexadiene, 1,7-octadiene, 1,9-decadiene, isoprene, myrcene, other C₄₋₄₀ α-olefins and combinations thereof.

In some embodiments, the farnesene interpolymers disclosed herein are derived from at least one farnesene and one vinyl monomer selected from styrene, substituted styrene, C₄₋₄₀ dienes, vinyl halides, vinyl ether, vinyl acetate, vinyl pyridine, vinylidene fluoride, acrylonitrile, acrylic acid, acrylic esters, methacrylic acid, methacrylic esters, acrylamide, and methacrylamide. In certain embodiments, the farnesene interpolymers disclosed herein are derived from at least one farnesene and one methacrylic ester such as methyl methacrylate, stearyl methacrylate, lauryl methacrylate, isodecyl methacrylate, a hydroxyalkyl methacrylate (*e.g*., 2-hydroxyethyl methacrylate), or an aminoalkyl methacrylate (*e.g*., 2-aminoethyl methacrylate, 2-(dimethylamino)ethyl methacrylate, and 2-(diethylamino)ethyl methacrylate). In certain embodiments, the farnesene interpolymers disclosed herein are derived from at least one farnesene and one acrylic ester such as methyl acrylate, ethyl acrylate, butyl acrylate, a hydroxyalkyl acrylate (*e.g*., 2-hydroxyethyl acrylate), or an aminoalkyl acrylate (*e.g*., 2-aminoethyl acrylate, 2-(dimethylamino)ethyl acrylate, and 2-(diethylamino)ethyl acrylate). In certain embodiments, the farnesene interpolymers disclosed herein are derived from at least one farnesene and vinyl acetate. In certain embodiments, the farnesene interpolymers disclosed herein are derived from at least one farnesene and acrylic acid. In certain embodiments, the farnesene interpolymers disclosed herein are derived from at least one farnesene and methacrylic acid.

In some embodiments, the farnesene interpolymers disclosed herein are derived from at least one farnesene and two vinyl monomers selected from styrene, substituted styrene, C₄₋₄₀ dienes, vinyl halides, vinyl ether, vinyl acetate, vinyl pyridine, vinylidene fluoride, acrylonitrile, acrylic acid, acrylic esters, methacrylic acid, methacrylic esters, acrylamide, methacrylamide and combinations thereof. In certain embodiments, the farnesene interpolymers disclosed herein are derived from at least one farnesene and two methacrylic esters (*e.g*., methyl methacrylate, 2-hydroxyethyl methacrylate, stearyl methacrylate, lauryl methacrylate and isodecyl methacrylate). In certain embodiments, the farnesene interpolymers disclosed herein are derived from at least one farnesene and two acrylic esters, (*e.g*., methyl acrylate, ethyl acrylate and butyl acrylate). In certain embodiments, the farnesene interpolymers disclosed herein are derived from at least one farnesene, one methacrylic ester and one acrylic ester. In certain embodiments, the farnesene interpolymers disclosed herein are derived from at least one farnesene, one methacrylic ester or one acrylic ester, and acrylic acid or methacrylic acid. In certain embodiments, the farnesene interpolymers disclosed herein are derived from at least one farnesene, styrene and acrylonitrile.

In some embodiments, the farnesene interpolymers disclosed herein are derived from at least one farnesene and three vinyl monomers selected from styrene, substituted styrene, C₄₋₄₀ dienes, vinyl halides, vinyl ether, vinyl acetate, vinyl pyridine, vinylidene fluoride, acrylonitrile, acrylic acid, acrylic esters, methacrylic acid, methacrylic esters, acrylamide, methacrylamide and combinations thereof.

Some non-limiting examples of C₄₋₄₀ dienes include isoprene, butadiene and myrcene). Some non-limiting examples of substituted styrene include 2-methylstyrene, 4-methylstyrene, 2-ethylstyrene, 4-ethylstyrene, 2,4-dimethylstyrenen and 4-fluorostyrene. Some non-limiting examples of vinyl halides include vinyl chloride and vinylidene fluoride.

The farnesene interpolymers disclosed herein may derived from a farnesene and styrene. The farnesene interpolymers may further comprise at least one C₂₋₂₀ olefin, at least one C₄₋₁₈ diolefin, at least one alkenylbenzene or a combination thereof. Suitable unsaturated comonomers useful for polymerizing with farnesene include, for example, ethylenically unsaturated monomers, polyenes such as conjugated or nonconjugated dienes, alkenylbenzenes, and the like. Examples of such comonomers include ethylene, C₂₋₂₀ olefins such as propylene, isobutylene, 1-butene, 1-hexene, 1-pentene, 4-methyl-1-pentene, 1-heptene, 1-octene, 1-nonene, 1-decene, and the like. Other suitable monomers include styrene, halo- or alkyl-substituted styrenes, vinylbenzocyclobutane, 1,4-hexadiene, 1,7-octadiene, and cycloalkenes such as cyclopentene, cyclohexene and cyclooctene.

Some suitable non-conjugated diene monomers can be a straight chain, branched chain or cyclic hydrocarbon diene having from 6 to 15 carbon atoms. Some non-limiting examples of suitable non-conjugated dienes include straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). In certain embodiments, the diene is 5-ethylidene-2-norbornene (ENB) or 1,4-hexadiene (HD). In other embodiments, the farnesene interpolymers are not derived from a polyene such as dienes, trienes, tetraenes and the like.

In some embodiments, the farnesene interpolymers are interpolymers of farnesene, styrene, and a C₂₋₂₀ olefin. Some non-limiting examples of suitable olefins include ethylene, propylene, isobutylene, 1-butene, 1-pentene, 1-hexene, 4-methyl-1-pentene, and 1-octene. In some embodiments, the farnesene interpolymers disclosed herein are not derived from ethylene. In some embodiments, the farnesene interpolymers disclosed herein are not derived from one or more C₂₋₂₀ olefins.

In certain embodiments, the vinyl monomer does not comprise a terpene. In other embodiments, the vinyl monomer does not comprise a terpene selected from isoprene, dipentene, α-pinene, β-pinene, terpinolene, limonene (dipentene), terpinene, thujene, sabinene, 3-carene, camphene, cadinene, caryophyllene, myrcene, ocimene, cedrene, bisalbone, bisalbone, bisalbone, zingiberene, humulene, citronellol, linalool, geraniol, nerol, ipsenol, terpineol, D-terpineol-(4), dihydrocarveol, nerolidol, farnesol, eudesmol, citral, D-citronellal, carvone, D-pulegone, piperitone, carvenone, bisabolene, selinene, santalene, vitamin A, abietic acid or a combination thereof. In further embodiments, the vinyl monomer does not comprise an isoprene.

The farnesene interpolymers can be functionalized by incorporating at least one functional group in their polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to the farnesene interpolymers, or they may be copolymerized farnesene with an optional additional comonomer to form an interpolymer of farnesene, the functional comonomer and optionally other comonomer(s). Any means for grafting functional groups known to a skilled artisan can be used. One particularly useful functional group or comonomer is maleic anhydride. In some embodiments, the farnesene interpolymers are interpolymers of farnesene and a functional comonomer such as maleic anhydride. In certain embodiments, the farnesene interpolymers are interpolymers of farnesene, a functional comonomer such as maleic anhydride and a vinyl monomer comprising styrene, acrylic acid, an acrylic ester, methacrylic acid, a methacrylic ester or a combination thereof.

Any compound having at least one double bond and at least one functional group disclosed herein can be used as a functional comonomer to prepare the farnesene interpolymers disclosed herein. In some embodiments, the functional comonomer has formula (XVI), (XVII), (XVIII), (XIX) or (XX): 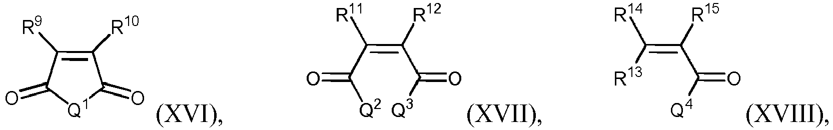 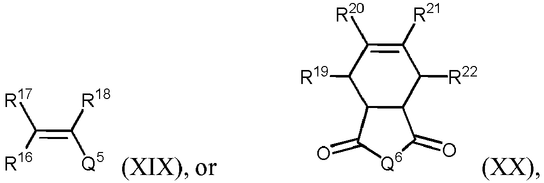 wherein each of Q¹ and Q⁶ is independently O, S, NR²³ or N-Q⁷; each of Q², Q³, Q⁴ and Q⁵ is independently halo, Q⁸, NR²⁴R²⁵, OR²⁶ or O-Q⁸; Q⁷ and Q⁸ respectively have the following formulae: 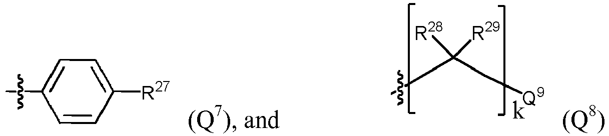 wherein k is an integer from 1 to about 10; and Q⁹ is OH, NH₂, NHR³⁰, carboxyl, epoxy or glycidyl; and
each of R⁹ to R³⁰ is independently H, C₁₋₂₀ alkyl, C₁₋₂₀ alkenyl, C₁₋₂₀ alkynyl, cycloalkyl, aryl, aralkyl, alkaryl, OH, NH₂, carboxyl, epoxy or glycidyl, or R¹⁹ and R²² together form a -(CH₂)ₘ- group where m is an integer from 1 to about 6, and wherein each of the C₁₋₂₀ alkyl, C₁₋₂₀ alkenyl, C₁₋₂₀ alkynyl, cycloalkyl, aryl, aralkyl, alkaryl, epoxy, glycidyl and -(CH₂)ₘ- is optionally substituted.

In certain embodiments, the functional comonomer has formula (XVI). Some non-limiting examples of the functional comonomer having formula (XVI) include maleimide, maleic anhydride, citraconic anhydride, itaconic anhydride and combinations thereof.

In some embodiments, the functional comonomer has formula (XVII). Some non-limiting examples of the functional comonomer having formula (XVII) include mesaconic acid, maleic acid, fumaric acid, malenyl chloride, monomethyl maleate, dimethyl maleate, glycidyl maleate, dipropyl maleate, diisobutyl maleate, dihexyl maleate, dibenzyl maleate, p-chlorophenyl methyl maleate, phenylethyl maleate, dicyclopentyl meleate and combinations thereof.

In certain embodiments, the functional comonomer has formula (XVIII). Some non-limiting examples of the functional comonomer having formula (XVIII) include methacrylic acid, acrylic acid, itaconic acid, 2-hydroxyethyl methacrylate, 2-hydroxypropyl methacrylate, 3-hydroxypropyl methacrylate, 3-hydroxybutyl methacrylate, 4-hydroxybutyl methacrylate, caprolactone adduct of 2-hydroxyethyl methacrylate, ethylene oxide adduct of 2-hydroxyethyl methacrylate, propylene oxide adduct of 2-hydroxyethyl methacrylate, 2-hydroxyethyl acrylate, 2-hydroxypropyl acrylate, 3-hydroxypropyl acrylate, 3-hydroxybutyl acrylate, 4-hydroxybutyl acrylate, caprolactone adduct of 2-hydroxyethyl acrylate, ethylene oxide adduct of 2-hydroxyethyl acrylate, propylene oxide adduct of 2-hydroxyethyl acrylate, 2-hydroxyethyl crotonate, 2-hydroxypropyl crotonate, 3-hydroxypropyl crotonate, 3-hydroxybutyl crotonate, 4-hydroxybutyl crotonate, 5-hydroxypentyl crotonate, 6-hydroxyhexyl crotonate, glycidyl methacrylate, glycidyl acrylate, glycidyl ethacrylate, 3,4-epoxycyclohexylmethyl methacrylate, 3,4-epoxycyclohexylmethyl acrylate and combinations thereof.

In some embodiments, the functional comonomer has formula (XIX). Some non-limiting examples of the functional comonomer having formula (XIX) include allyl alcohol, hydroxymethyl vinyl ether, hydroxyehtyl vinyl ether, hydroxypropyl vinyl ether, hydroxybutyl vinyl ether, hydroxypentyl vinyl ether, hydroxyhexyl vinyl ether, hydroxyheptyl vinyl ether, hydroxycyclohexyl vinyl ether, allylglycidyl ether, p-glycidyloxy styrene, p-glycidyloxy-α-methyl styrene, p-(3,4-epoxycyclohexylmethyloxy) styrene, p-(3,4-epoxycyclohexylmethyloxy)-α-methyl styrene, glycidyl ethylene, 3,4-epoxycyclohexylmethylethylene, glycidylvinyl ether, 3,4-epoxycyclohexylmethyl vinyl ether, 3,4-epoxycyclohexylmethyl allyl ether and combinations thereof.

In certain embodiments, the functional comonomer has formula (XX). Some non-limiting examples of the functional comonomer having formula (XX) include bicyclo[2,2,2]-oct-5-ene-2,3-dicarboxylic acid anhydride, bicyclo[2,2,1]hept-5-ene-2,3-dicarboxylic acid anhydride and combinations thereof.

In some embodiments, the farnesene interpolymers are interpolymers of farnesene, at least one vinyl monomer disclosed herein and at least one functional comonomer disclosed herein by copolymerizing the farnesene, the at least one vinyl monomer and the at least one functional comonomer in the presence of a catalyst or initiator disclosed herein. In certain embodiments, the farnesene interpolymers are interpolymers of farnesene, at least two different vinyl monomers disclosed herein and at least one functional comonomer disclosed herein by copolymerizing the farnesene, the at least two different vinyl monomers and the at least one functional comonomer in the presence of a catalyst or initiator disclosed herein. The amount of each of the farnesene, the vinyl monomer and the functional comonomer in the farnesene interpolymers is as disclosed herein.

The amount of the functional group present in the functionalized farnesene interpolymer may vary. In some embodiments, the functional group or comonomer is present in an amount of at least about 1.0 wt.%, at least about 2.5 wt.%, at least about 5 wt.%, at least about 7.5 wt.%, or at least about 10 wt.%, based on the total weight of the farnesene interpolymer. In other embodiments, the functional group is present in an amount of less than about 40 wt.%, less than about 30 wt.%, less than about 25 wt.%, less than about 20 wt.%, or less than about 15 wt.%, based on the total weight of the farnesene interpolymer.

The intiator used herein is a free radical intiator. Any free radical intiator that can act as an intiator to polymerize olefins can be used herein. Some free radical intiators are disclosed in Denisov et al., "Handbook of Free Radical Initiators," Wiley-Interscience, pp. 1-904 (2003). Some non-limiting examples of suitable free radical intiators include hydrogen peroxide, hydroperoxides, dialkyl peroxides, diacyl peroxides, peroxy esters, peroxyketones, azo-compounds, organic polyoxides, photoinitiators, persulfates and combinations thereof.

Any azo-compound that can act as an intiator to polymerize olefins can be used herein. Some non-limiting examples of suitable azo-compounds include azobisisobutyronitrile, 1,1'-azobis(cyclohexanecarbonitrile), 2,2-azobis(2,4-dimethylvaleronitrile), 2,2'-azobis(2-methylbutyronitrile), 2,2'-azobis(2-amidinopropane)dihydrochloride, 4,4'-azobis(4-cyanovaleric acid) and combinations thereof. Some non-limiting examples of commercial available azo-compounds include VAZO^{®} 52, 56, 64, 67, 68 and 88, all of which can be obtained from DuPont, Wilmington, Delaware.

Any hydroperoxide that can act as an intiator to polymerize olefins can be used herein. Some non-limiting examples of suitable hydroperoxides include cumene hydroperoxide, t-butyl hydrogen peroxide, t-amyl hydrogen peroxide and combinations thereof.

Any dialkyl peroxide that can act as an intiator to polymerize olefins can be used herein. Some non-limiting examples of suitable dialkyl peroxides include dicumyl peroxide, dilauryl peroxide, di-tert-butyl peroxide, diisopropyl peroxide, di(2-t-butyl peroxyisopropyl)benzene, 3,3,5-trimethyl 1,1-di(tert-butylperoxy)cylohexane, 2,5-dimethyl-2,5-di(t-butylperoxy)hexane and combinations thereof.

Any diacyl peroxide that can act as an intiator to polymerize olefins can be used herein. Some non-limiting examples of suitable diacyl peroxides include benzoyl peroxide, acetyl peroxide, lauroyl peroxide and combinations thereof.

Any peroxy ester that can act as an intiator to polymerize olefins can be used herein. Some non-limiting examples of suitable peroxy esters include *tert*-butyl peroxyacetate, ethyl peroxybenzoate and combinations thereof.

Any organic polyoxide that can act as an intiator to polymerize olefins can be used herein. Some non-limiting examples of suitable organic polyoxides include dialkyl trioxides, hydrotrioxides, tetroxides and combinations thereof.

Any photoinitiator that can act as an intiator to polymerize olefins can be used herein. Some non-limiting examples of suitable photoinitiators include acetophenones, benzil and benzoin compounds, benzophenones, thioxanthones, quinone compounds, cationic photoinitiators and combinations thereof.

Some non-limiting examples of suitable acetophenones include 2-benzyl-2-(dimethylamino)-4'-morpholinobutyrophenone, 2-hydroxy-2-methylpropiophenone, 4'-ethoxyacetophenone, 4'-tert-butyl-2',6'-dimethylacetophenone, 2,2-diethoxyacetophenone, 2,2-dimethoxy-2-phenylacetophenone, 4'-hydroxyacetophenone, 4'-phenoxyacetophenone and combinations thereof.

Some non-limiting examples of suitable benzil and benzoin compounds include benzil, 4,4'-dimethylbenzil, benzoin, benzoin ethyl ether, benzoin methyl ether, 4,4'-dimethoxybenzoin and combinations thereof.

Some non-limiting examples of suitable benzophenones include 4,4'-bis(dimethylamino)benzophenone, 4,4'-bis(diethylamino)benzophenone, benzophenone, benzophenone-3,3',4,4'-tetracarboxylic dianhydride, 4-benzoylbiphenyl, 4,4'-bis[2-(1-propenyl)phenoxy]benzophenone, 4-(diethylamino)benzophenone, 4,4'-dihydroxybenzophenone, 4-(dimethylamino)benzophenone, 3,4-dimethylbenzophenone, 3-hydroxybenzophenone, 4-hydroxybenzophenone, 2-methylbenzophenone, 3-methylbenzophenone, 4-methylbenzophenone, methyl benzoylformate and combinations thereof.

Some non-limiting examples of suitable thioxanthones include thioxanthen-9-one, 1-chloro-4-propoxy-9h-thioxanthen-9-one, 2-chlorothioxanthen-9-one, 2,4-diethyl-9H-thioxanthen-9-one, isopropyl-9H-thioxanthen-9-one, 10-methylphenothiazine and combinations thereof.

Some non-limiting examples of suitable quinone compounds include 9,10-phenanthrenequinone, 2-tert-butylanthraquinone, camphorquinone, anthraquinone-2-sulfonic acid, sodium salt and combinations thereof.

Some non-limiting examples of suitable persulfates (e.g., peroxomonosulfates and peroxodisulfates) include ammonium persulfates (ammonium peroxomonosulfate or peroxodisulfate), potassium persulfates (potassium peroxomonosulfate or peroxodisulfate), sodium persulfates (sodium peroxomonosulfate or peroxodisulfate), and combinations thereof.

Some non-limiting examples of suitable cationic photoinitiators include bis(4-tert-butylphenyl)iodonium triflate, 4-bromophenyl)diphenylsulfonium triflate, (4-tert-butylphenyl)diphenylsulfonium triflate, diphenyliodonium hexafluorophosphate, diphenyliodonium nitrate, diphenyliodonium perfluoro-1-butanesulfonate, diphenyliodonium p-toluenesulfonate, diphenyliodonium triflate, (4-fluorophenyl)diphenylsulfonium triflate, N-hydroxynaphthalimide triflate, (4-iodophenyl)diphenylsulfonium triflate, (4-methoxyphenyl)diphenylsulfonium triflate, (4-methylphenyl)diphenylsulfonium, 1-naphthyl diphenylsulfonium triflate, (4-phenoxyphenyl)diphenylsulfonium triflate, (4-phenylthiophenyl)diphenylsulfonium triflate, triphenylsulfonium perfluoro-1-butanesufonate, triphenylsulfonium triflate, tris(4-tert-butylphenyl)sulfonium triflate and combinations thereof.

In some embodiments, the free radicals are generated by chemical processes such as thermal decomposition, photolysis, and redox reactions, all of which involve one or more of the free radical initiators disclosed herein. In certain embodiments, the free radicals are generated by a process, such as ionizing radiation (*e.g*., α-, β-, γ-, or x-rays), electrolysis, and sonication, all of which do not involve any free radical initiator. In other embodiments, the free radicals are generated by thermal decomposition, photolysis, redox reactions ionizing radiation, electrolysis, sonication or a combination thereof.

In certain embodiments, the free radicals are generated by thermal decomposition where the initiator (*e.g*., hydrogen peroxide, hydroperoxides, dialkyl peroxides, diacyl peroxides, peroxy esters, peroxyketones, azo-compounds and organic polyoxides) is heated until one or more bonds (*e.g.,* O-O or O-N bonds) are broken to produce one or more radicals. In some embodiments, the temperature of the thermal decomposition is above about 20 °C, above about 30 °C, above about 40 °C, above about 50 °C, above about 60 °C, above about 70 °C, above about 80 °C, above about 90 °C or above about 100 °C.

In some embodiments, the free radicals are generated by photolysis where the initiator (*e.g.,* azo-compounds) is irradiated with a radiation until one or more bonds (*e.g.,* ON bonds) are broken to produce one or more radicals. In certain embodiments, the radiation is visible light, ultraviolet light, x-ray, gamma ray or a combination thereof. In some embodiments, the temperature of the photolysis is below about 50 °C, below about 40 °C, below about 30 °C, below about 20 °C, below about 10 °C or below about 0 °C.

In certain embodiments, the free radicals are generated by redox reactions where an oxidative free radical initiator (*e.g*., hydrogen peroxide, hydroperoxides, dialkyl peroxides, and diacyl peroxides) is reduced by an organic reductant (*e.g*., diethyl aniline, hydrazine, oxalic acid, formic acid, ascorbic acid or a combination thereof) or inorganic reductant (*e.g*., Fe²⁺, Cr²⁺, V²⁺, Ti³⁺, Co²⁺, Cu⁺ or a combination thereof) or a combination thereof to produce one or more radicals. In some embodiments, the temperature of the redox reaction is below about 50 °C, below about 40 °C, below about 30 °C, below about 20 °C, below about 10 °C or below about 0 °C. The combination of an oxidative free radical initiator and a reductant is a redox initiator. The free radicals can be generated from the redox initiator at room temperature or at an elevated temperature.

The concentration of the initiator may be in an amount that can effect the polymerization of farnesene, one or more vinyl monomers or a combination thereof. In some embodiments, the concentration of the catalyst or intiator is at least about 0.01%, about 0.1%, about 0.25%, about 0.5%, about 0.75%, about 1%, about 2%, about 3%, about 4%, about 5%, about 6%, about 7%, about 8%, about 9%, about 10%, about 15% or about 20% by weight (or by volume), based on the total weight (or volume) of the composition or emulsion. In certain embodiments, the concentration of the catalyst or intiator is at most about 0.01%, about 0.1%, about 0.25%, about 0.5%, about 0.75%, about 1%, about 2%, about 3%, about 4%, about 5%, about 6%, about 7%, about 8%, about 9%, about 10%, about 15% or about 20% by weight (or by volume), based on the total weight (or volume) of the composition or emulsion.

In certain embodiments, the farnesene interpolymer disclosed herein is prepared by a process comprising the steps of:
(a) making a farnesene from a simple sugar or non-fermentable carbon source by using a microorganism; and
(b) copolymerizing the farnesene and at least one vinyl monomer in the presence of a catalyst disclosed herein.

The polymerizing step (b) or the copolymerizing (b) of the process disclosed herein is a free radical polymerization

The free radical polymerization is carried out in the presence of a free radical initiator disclosed herein. Free radical polymerization is described in G. Moad et al., "The Chemistry of Free Radical Polymerization," Pergamon Press, pp. 1-408 (1996).

In some embodiments, the free radical polymerization is carried out by copolymerizing a polymerizable mixture or composition in the presence of at least one free radical initiator to form a farnesene interpolymer, wherein the polymerizable mixture or composition comprises a farnesene and at least one vinyl monomer, and wherein the at least one free radical initiator is hydrogen peroxide, a hydroperoxide, a dialkyl peroxide, a diacyl peroxide, a peroxy ester, a peroxyketone, an azo-compound, an organic polyoxide, a photoinitiator, a persulfate or a combination thereof. In certain embodiments, the farnesene is in an amount greater than 20 wt.%, based on the total weight of the polymerizable mixture. In some embodiments, the farnesene is α-farnesene, β-farnesene or a combination thereof.

In certain embodiments, the at least one vinyl monomer is acrylic acid, an acrylic ester, methacrylic acid, a methacrylic ester, vinyl ether, vinyl acetate, acrylonitrile, acrylamide, methacrylamide or a combination thereof. In some embodiments, the at least one vinyl monomer is styrene, substituted styrene, a C₄₋₄₀ diene, a vinyl halide, vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof. In some embodiments, the at least one vinyl monomer comprises a methacrylic ester. In certain embodiments, the at least one vinyl monomer comprises styrene. In some embodiments, the at least one vinyl monomer comprises butadiene. In certain embodiments, the at least one vinyl monomer comprises styrene and butadiene

The emulsion polymerization is carried out in an emulsion in the presence of a free radical initiator disclosed herein. Emulsion polymerization is described in Chorng-Shyan Chern., "principles and Applications of Emulsion Polymerization," John Wiley & Sons Inc., pp. 1-252 (2008); and Peter A. Lovell (Editor), "Emulsion Polymerization and Emulsion Polymers," John Wiley & Sons Inc., pp. 1-826 (1997).

Emulsion polymerization is generally a type of radical polymerization that occurs in an emulsion comprising an emulsion polymerization composition. In the present invention, the emulsion polymerization composition comprising a) a polymerizable mixture comprising a farnesene and at least one vinyl monomer disclosed herein; b) at least one emulsifier; c) at least one free radical initiator such as those disclosed herein; and d) water.

In some embodiments, the emulsion polymerization is an oil-in-water emulsion, in which droplets of monomers (the oil) are emulsified (with emulsifiers) in a continuous phase of water. In certain embodiments, the free radical initiator is water-soluble and the reaction medium is water.

In aqueous emulsion polymerization, water generally forms the continuous medium in which polymerization takes place. The water may or may not be mixed with one or more additional solvents that are miscible with water. In some embodiments, the continuous medium comprises water in an amount of at least about 30 wt.%, at least about 40 wt.%, at least about 50 wt.%, at least about 60 wt.%, at least about 70 wt.%, at least about 80 wt.%, at least about 90 wt.% or at least about 95 wt.%, based on the total weight of the continuous medium.

Some non-limiting examples of suitable emulsifiers include anionic surfactants, cationic surfactants, non-ionic surfactants, zwitterionic surfactants, and combinations thereof. In some embodiments, one or more anionic surfactants, one or more non-ionic surfactants or a combination thereof are used.

Any anionic surfactant that can emulsify an oil in water can be used herein. In some embodiments, the anionic surfactant is or comprises an alkyl sulfate, an alkyl sulfonate, an alkylaryl sulfate, an alkylaryl sulfonate (e.g., alkyl-naphthalene sulfonates and alkylbenzene sulfonates) or a combination thereof.

Any non-ionic surfactant that can emulsify an oil in water can be used herein. In some embodiments, the non-ionic surfactant is or comprises an alkyl polyoxyalkylene, an aryl polyoxyalkylene, a polyoxyalkylene block copolymers, a polyethylene oxide, a polypropylene oxide, a block copolymer of ethylene oxide and propylene oxide or a combination thereof. In other embodiments, the non-ionic surfactant is or comprises a polyether polyol, a polyoxyethylene C₈₋₂₀-alkyl ether, a polyoxyethylene C₈₋₂₀-alkylaryl ether (*e.g.*, polyoxyethylene C₈₋₂₀-alkylphenyl ether), a polyoxyethylene C₈₋₂₀-alkyl amine, a polyoxyethylene C₈₋₂₀-alkenyl ether, a polyoxyethylene C₈₋₂₀-alkenyl amine, a polyethylene glycol alkyl ether or a combination thereof. Some non-limiting examples of suitable polyoxyethylene C₈₋₂₀-alkyl ethers include polyoxyethylene lauryl ether, polyoxyethylene cetyl ether, polyoxyethylene stearyl ether, polyoxyethylene branched decyl ether, polyoxyethylene tridecyl ether or a combination thereof. Some non-limiting examples of suitable polyoxyethylene C₈₋₂₀-alkylaryl ethers include polyoxyethylene dodecylphenyl ether, polyoxyethylene nonylphenyl ether, polyoxyethylene octylphenyl ether or a combination thereof. One non-limiting example of suitable polyoxyethylene C₈₋₂₀-alkenyl ether is polyoxyethylene oleic ether. Some non-limiting examples of suitable polyoxyethylene C₈₋₂₀-alkyl amines include polyoxyethylene lauryl amine, polyoxyethylene stearyl amine, polyoxyethylene tallow amine or a combination thereof. One non-limiting example of suitable polyoxyethylene C₈₋₂₀-alkenyl amine is polyoxyethylene oleyl amine. In other embodiments, the non-ionic surfactant is a polyether polyol, polyoxyethylene nonylphenyl ether, polyoxyethylene dodecylphenyl ether or a combination thereof. In certain embodiments, the non-ionic surfactant contains a polyoxyethylene hydrophilic tail.

The emulsion polymerization may occur in a reaction vessel containing an emulsion polymerization composition. In some embodiments, the emulsion polymerization composition comprising a polymerizable mixture comprising a farnesene and at least one vinyl monomer, at least one emulsifier, at least one free radical initiator and water.

The method for the emulsion polymerization of a farnesene with at least one vinyl monomer can be any known method suitable for the emulsion polymerization of olefins and/or vinyl monomers. In some embodiments, the method comprises copolymerizing the farnesene with the at least one vinyl monomer in an aqueous medium in the presence of at least one free radical initiator and at least one emulsifier.

The emulsion polymerization of the farnesene with the at least one vinyl monomer can be used to prepare a polymer emulsion. In some embodiments, the polymer emulsion can be prepared by a method comprising: (a) providing an aqueous emulsion comprising a polymerizable mixture comprising a farnesene and at least one vinyl monomer; at least one emulsifier; at least one initiator; and water; and (b) emulsion polymerizing at least a portion of the polymerizable mixture to form the polymer emulsion. In some embodiments, the method further comprises a step of drying the polymer emulsion to form an emulsion polymer. The polymer emulsion can be dried by any known drying techniques such as direct drying, indirect drying, contact drying, drum drying, vacuum drying, spraying drying, dielectric drying, freeze drying, supercritical drying, natural air drying, refractance window drying, infrared zone drying or a combination thereof. The dried emulsion polymer can be in any convenient form (*e.g.*, powder, pellet or film) suitable for handling.

In certain embodiments, the farnesene is α-farnesene or β-farnesene or a combination thereof. In some embodiments, the farnesene is in an amount from about 10 wt.% to about 60 wt.%, from about 20 wt.% to about 50 wt.%, or from about 30 wt.% to about 40 wt.%, based on the total weight of the polymerizable mixture.

Any vinyl monomer disclosed herein can be used for the emulsion polymerization composition. In certain embodiments, the at least one vinyl monomer is styrene, substituted styrene, a C4-40 diene, a vinyl halide, vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof In some embodiments, the at least one vinyl monomer is acrylic acid, an acrylic ester, methacrylic acid, a methacrylic ester, vinyl ether, vinyl acetate, acrylonitrile, acrylamide, methacrylamide or a combination thereof In certain embodiments, the at least one vinyl monomer comprises methacrylic acid or acrylic acid and a methacrylic ester. In other embodiments, the methacrylic acid or acrylic acid is in an amount from about 0.1 wt.% to about 5 wt.%, from about 0.25 wt.% to about 4 wt.%, from about 0.5 wt.% to about 3 wt.%, or from about 0.75 wt.% to about 2 wt.%, based on the total weight of the polymerizable mixture. In other embodiments, the methacrylic acid or acrylic acid is in an amount from about 5 wt.% to about 50 wt.%, from about 10 wt.% to about 40 wt.%, from about 15 wt.% to about 35 wt.%, or from about 20 wt.% to about 30 wt.%, based on the total weight of the polymerizable mixture. In further embodiments, the methacrylic ester is methyl methacrylate, ethyl methacrylate, propyl methacrylate, butyl methacrylate or a combination thereof. In some embodiments, the at least one vinyl monomer further comprises an acrylic ester. In further embodiments, the methacrylic ester is methyl acrylate, ethyl acrylate, propyl acrylate, butyl acrylate or a combination thereof. In certain embodiments, the at least one vinyl monomer comprises acrylic acid, an acrylic ester, methacrylic acid, a methacrylic ester, styrene or a combination thereof. In some embodiments, the at least one vinyl monomer comprises an acrylic ester, methacrylic acid, a methacrylic ester, styrene or a combination thereof.

The ingredients of the emulsion polymerization composition may be brought together in any manner. In some embodiments, two or more of the ingredients of the emulsion polymerization composition, or portions thereof, may be mixed together before the composition of those ingredients or portions thereof is placed into the reaction vessel. In certain embodiments, any ingredients or portions thereof that are not mixed together outside of the reaction vessel may be added simultaneously or sequentially to the reaction vessel. In further embodiments, any combination of the above methods of providing the ingredients of the emulsion polymerization composition may be used.

After an emulsion polymerization composition is present in the reaction vessel, conditions are provided in which the emulsion polymerization composition undergoes emulsion polymerization. In certain embodiments, conditions will be provided as needed for the free radical initiator to form one or more free radicals. In some embodiments, depending on the free radical initiator used, the reaction mixture may be heated, or a reductant may be added, or the emulsion polymerization composition may be exposed to radiation, or a combination thereof. In certain embodiments, other conditions that allow emulsion polymerization to succeed (such as, for example, emulsification of monomer, concentration of monomer, concentration of free radical initiator, etc.) are also provided. Such conditions can be found in Chorng-Shyan Chern., "principles and Applications of Emulsion Polymerization," John Wiley & Sons Inc., pp. 1-252 (2008); and Peter A. Lovell (Editor), "Emulsion Polymerisation and Emulsion Polymers," John Wiley & Sons Inc., pp. 1-826 (1997).

In some embodiments, the conditions in which the emulsion polymerization composition undergoes emulsion polymerization are established simultaneously with the introduction of the emulsion polymerization composition into the reaction vessel. In other embodiments, the ingredients of the emulsion polymerization composition are not added simultaneously and the conditions in which the emulsion polymerization composition undergoes emulsion polymerization are established simultaneously with the introduction of the final charge of the emulsion polymerization composition into the reaction vessel.

In certain embodiments, the conditions in which the emulsion polymerization composition undergoes emulsion polymerization are established after the introduction of the emulsion polymerization composition into the reaction vessel. In some embodiments, all of the ingredients of the emulsion polymerization composition may be provided in the reaction vessel, and then the emulsion polymerization composition may be heated to a temperature at which at least a portion of the at least one free radical initiator forms one or more free radicals.

In some embodiments, after the conditions in which the emulsion polymerization composition undergoes emulsion polymerization are established, additional vinyl monomer(s) may be added, additional water may be added, additional emulsifier(s) may be added, additional free radical initiator(s) may be added, or a combination thereof may be added.

Emulsion polymerization processes may be characterized as single-stage or multi-stage. In one stage, a first composition of one or more vinyl monomers are polymerized until polymerization is complete. If a second composition of one or more vinyl monomers, which may be different from or same as the first composition, is then polymerized in the presence of the polymer formed in the first stage, the polymerization of the second composition is known as the second stage. Further subsequent stages may also be performed. In some embodiments, the emulsion polymerization process is a single-stage process.

In each stage of an emulsion polymerization process, the one or more vinyl monomers are added either as a shot addition or as a gradual addition or as a combination thereof. In a shot addition, the one or more vinyl monomers are added relatively quickly (compared to the duration of the polymerization time), and then addition of the one or more vinyl monomers is halted for a time. In a particular stage of an emulsion polymerization process involving shot addition of monomer, a single shot addition may be used to add all the one or more vinyl monomers for that stage, or multiple shot additions may be used.

In some embodiments, a free radical inhibitor, such as a nitroso or a nitroxide compound, is introduced into the reaction vessel prior to the start of polymerization. The presence of such an inhibitor may reduce or eliminate the generation of secondary particles and thus aids in careful control of the particle size of the emulsion polymer. In some embodiments, no free radical inhibitor, such as nitroso or nitroxide compound, is introduced into the reaction vessel prior to the start of polymerization.

In certain embodiments, the one or more vinyl monomers used do not include any vinyl monomer with any acid group *(e.g.,* a carboxylic acid group). In some embodiments, the one or more vinyl monomers used do not include any vinyl monomer with any ionic group *(e.g.,* an acid group). In some embodiments, the emulsion polymer produced by the process disclosed herein has no ionic group. An ionic group refers to a chemical group that is mostly or completely in ionized form when the emulsion polymer is at a pH ranging from about 2 to about 12.

In some embodiments, at least one of the vinyl monomers used has an acid group or an ionic group. In certain embodiments, the amount of the vinyl monomer with an acid group (e.g., acrylic acid or methacrylic acid) or ionic group is less than about 5 wt.%, less than about 4 wt.%, less than about 3 wt.%, less than about 2 wt.%, less than about 1.0 wt.%, less than about 0.5 wt.%, less than about 0.25 wt.%, or less than about 0.1 wt.%, based on the total weight of the polymerizable mixture. In some embodiments, the amount of the vinyl monomer with an acid group or ionic group is more than about 50 wt.%, more than about 40 wt.%, more than about 30 wt.%, more than about 20 wt.%, more than about 10 wt.%, more than about 5 wt.%, or more than about 1 wt.%, based on the total weight of the polymerizable mixture. In certain embodiments, the amount of the vinyl monomer with an acid group or ionic group is from about 0.1 wt.% to about 60 wt.%, from about 1 wt.% to about 50 wt.%, from about 5 wt.% to about 45 wt.%, from about 10 wt.% to about 40 wt.%, from about 15 wt.% to about 35 wt.%, from about 0.1 wt.% to about 20 wt.%, from about 0.1 wt.% to about 10 wt.%, or from about 0.1 wt.% to about 5 wt.%, based on the total weight of the polymerizable mixture.

The concentration of the emulsifier may be in any amount that can effectively emulsify the polymerizable mixture in water. In some embodiments, the concentration of the emulsifier is at least about 0.01%, about 0.1%, about 0.25%, about 0.5%, about 0.75%, about 1%, about 2%, about 3%, about 4%, about 5%, about 6%, about 7%, about 8%, about 9%, about 10%, about 15% or about 20% by weight (or by volume), based on the total weight (or volume) of the emulsion polymerization composition. In certain embodiments, the concentration of the surfactant is at most about 0.01%, about 0.1%, about 0.25%, about 0.5%, about 0.75%, about 1%, about 2%, about 3%, about 4%, about 5%, about 6%, about 7%, about 8%, about 9%, about 10%, about 15% or about 20% by weight (or by volume), based on the total weight (or volume) of the emulsion polymerization composition.

In some embodiments, the Mw of the emulsion polymers disclosed herein is greater than about 5,000, greater than about 10,000, greater than about 50,000, greater than about 100,000, greater than about 200,000, greater than about 500,000, greater than about 1,000,000, greater than about 1,000,000, greater than about 1,000,000, greater than about 2,000,000, greater than about 3,000,000 or greater than about 4,000,000.

In certain embodiments, the emulsion polymers disclosed herein has at least a glass transition temperature (Tg) from about -70 °C to about 40 °C, from about -60 °C to about 30 °C or from about -50 °C to about 20 °C, as measured according to ASTM D7426-08. In some embodiments, the T_{g} is from about -60 °C to about 0 °C, from about -50 °C to about 0 °C, from about -40 °C to about 0 °C, from about -30 °C to about 0 °C, from about -60 °C to about 10 °C or from about -50 °C to about 20 °C. In certain embodiments, the T_{g} is from about -30 °C to about 30 °C, from about -20 °C to about 30 °C, from about -10 °C to about 20 °C, from about -5 °C to about 25 °C, from about 0 °C to about 20 °C, or from about 5 °C to about 15 °C.

In certain embodiments, the emulsion polymer disclosed herein is in the form of polymer particles dispersed in an aqueous continuous medium to form a polymer emulsion. In some embodiments, the polymer particles have a mean diameter greater than about 10 nm, greater than about 20 nm, greater than about 25 nm, greater than about 50 nm, greater than about 75 nm, or greater than about 100 nm. In some embodiments, the polymer particles have a mean diameter less than about 2000 nm, less than about 1000 nm, less than about 500 nm, less than about 250 nm, or less than about 100 nm.

In some embodiments, the polyfarnesene disclosed herein is prepared by polymerizing a β-farnesene in the presence of a catalyst, wherein the amount of the *cis-1,4-*microstructure in the polyfarnesene is at most about 80 wt.%, at most about 75 wt.%, at most about 70 wt.%, at most about 65 wt.%, or at most about 60 wt.%, based on the total weight of the polyfarnesene. The β-farnesene is copolymerized with a vinyl monomer to form a farnesene copolymer. In other embodiments, the vinyl monomer is styrene. In further embodiments, the farnesene copolymer is a block copolymer.

In certain embodiments, the polyfarnesene disclosed herein is prepared by polymerizing an α-farnesene in the presence of a catalyst wherein the amount of the *cis-1,4-*microstructure in the polyfarnesene is from about 1 wt.% to about 99 wt.%, from about 10 wt.% to about 99 wt.%, from about 20 wt.% to about 99 wt.%, from about 30 wt.% to about 99 wt.%, from about 40 wt.% to about 99 wt.%, from about 50 wt.% to about 99 wt.%, from about 1 wt.% to about 99 wt.%, from about 1 wt.% to about 90 wt.%, from about 1 wt.% to about 80 wt.%, from about 1 wt.% to about 70 wt.%, or from about 1 wt.% to about 60 wt.%, based on the total weight of the polyfarnesene. The α-farnesene is copolymerized with a vinyl monomer to form a farnesene copolymer. In other embodiments, the vinyl monomer is styrene. In further embodiments, the farnesene copolymer is a block copolymer.

In some embodiments, the polyfarnesene disclosed herein can be hydrogenated partially or completely by any hydrogenating agent known to a skilled artisan. For example, a saturated polyfarnesene can be prepared by (a) polymerizing a farnesene disclosed herein with a vinyl monomer disclosed herein in the presence of a catalyst disclosed herein to form a polyfarnesene; and (b) hydrogenating at least a portion of the double bonds in the polyfarnesene in the presence of a hydrogenation reagent. In other embodiments, the vinyl monomer is styrene. In further embodiments, the farnesene copolymer is a block copolymer. In still further embodiments, the farnesene is α-farnesene or β-farnesene or a combination thereof.

In certain embodiments, the hydrogenation reagent is hydrogen in the presence of a hydrogenation catalyst. In some embodiments, the hydrogenation catalyst is Pd, Pd/C, Pt, PtO₂, Ru(PPh₃)₂Cl₂, Raney nickel or a combination thereof. In one embodiment, the catalyst is a Pd catalyst. In another embodiment, the catalyst is 5% Pd/C. In a further embodiments, the catalyst is 10% Pd/C in a high pressure reaction vessel and the hydrogenation reaction is allowed to proceed until completion. Generally, after completion, the reaction mixture can be washed, concentrated, and dried to yield the corresponding hydrogenated product. Alternatively, any reducing agent that can reduce a C=C bond to a C-C bond can also be used. For example, the polyfarnesene can be hydrogenated by treatment with hydrazine in the presence of a catalyst, such as 5-ethyl-3-methyllumiflavinium perchlorate, under an oxygen atmosphere to give the corresponding hydrogenated products. The reduction reaction with hydrazine is disclosed in Imada et al., J. Am. Chem. Soc., 127, 14544-14545 (2005), which is incorporated herein by reference.

In some embodiments, at least a portion of the C=C bonds of the polyfarnesene disclosed herein is reduced to the corresponding C-C bonds by hydrogenation in the presence of a catalyst and hydrogen at room temperature. In other embodiments, at least a portion of the C=C bonds of one or more of formulae (I')-(III'), (V')-(VII'), and (XI)-(XIV) and stereoisomers thereof is reduced to the corresponding C-C bonds by hydrogenation in the presence of a catalyst and hydrogen at room temperature. In further embodiments, the hydrogenation catalyst is 10% Pd/C.

In certain embodiments, the vinyl monomer is styrene. In some embodiments, the farnesene is α-farnesene or β-farnesene or a combination thereof. In other embodiments, the farnesene is prepared by using a microorganism. In further embodiments, the farnesene is derived from a simple sugar or non-fermentable carbon source.

### Farnesene

The farnesene, such as α-farnesene and β farnesene, can be derived from any source or prepared by any method known to a skilled artisan. Some known methods are described in U.S. Patent No. 7,655,739. In some embodiments, the farnesene is derived from a chemical source (e.g., petroleum or coal) or obtained by a chemical synthetic method. In other embodiments, the farnesene is prepared by fractional distillation of petroleum or coal tar. In further embodiments, the farnesene is prepared by any known chemical synthetic method. One non-limiting example of suitable chemical synthetic method includes dehydrating nerolidol with phosphoryl chloride in pyridine as described in the article by Anet E. F. L. J., "synthesis of (E,Z)-α-, (Z,Z)-α-, and (Z)-β-farnesene," Aust. J. Chem., 23(10), 2101-2108 (1970).

### General Procedures of Making Polyfarnesenes

The copolymerization of a farnesene with one or more vinyl monomers and/or one or more functional comonomers can be performed over a wide temperature range. In certain embodiments, the polymerization temperature is from about -30 °C to about 280 °C, from about 30 °C to about 180 °C, or from about 60 °C to about 100 °C. The partial pressures of the vinyl monomers can range from about 15 psig (0.1 MPa) to about 50,000 psig (245 MPa), from about 15 psig (0.1 MPa) to about 25,000 psig (172.5 MPa), from about 15 psig (0.1 MPa) to about 10,000 psig (69 MPa), from about 15 psig (0.1 MPa) to about 5,000 psig (34.5 MPa) or from about 15 psig (0.1 MPa) to about 1,000 psig (6.9 MPa).

The concentration of the catalyst used for making the polyfarnesenes disclosed herein depends on many factors. In some embodiments, the concentration ranges from about 0.01 micromoles per liter to about 100 micromoles per liter. The polymerization time depends on the type of process, the catalyst concentration, and other factors. Generally, the polymerization time is within several minutes to several hours.

A non-limiting example of free radical polymerization procedure for farnesene interpolymer is outlined below. A farnesene such as β-farnesene and one or more vinyl monomers disclosed herein and/or one or more functional comonomers disclosed herein can be added to a solvent such as cyclohexane to form a polymerizable mixture in a reactor optionally under a nitrogen or argon atmosphere. The polymerizable mixture can be dried over a drying agent such as molecular sieves. The polymerizable mixture is polymerized by a free radical catalyst disclosed herein at room temperature or an elevated temperature until all or a substantial portion of monomers is consumed.

A non-limiting example of emulsion polymerization procedure for farnesene interpolymer is outlined below. A farnesene such as β-farnesene, one or more vinyl monomers disclosed herein and/or one or more functional comonomers disclosed herein and a surfactant disclosed herein can be added to a water in a reactor optionally under a nitrogen or argon atmosphere. The mixture is stirred to form an emulsion mixture. The emulsion mixture is polymerized by a free radical catalyst disclosed herein at room temperature or an elevated temperature until all or a substantial portion of monomers is consumed.

### Polyfarnesene Compositions

The polyfarnesenes can be used to prepare polyfarnesene compositions for a wide variety of applications. In some embodiments, the polyfarnesene compositions comprise the polyfarnesene disclosed herein and a second polymer or at least an additive. In certain embodiments, the polyfarnesene compositions comprise a second polymer. In other embodiments, the polyfarnesene compositions do not comprise a second polymer. The second polymer can be a vinyl polymer or polyfarnesene, a non-vinyl polymer or polyfaresene, or a combination thereof. Some non-limiting examples of vinyl polymers and polyfarnesenes are disclosed in Malcolm P. Stevens, "Polymer Chemistry, an Introduction," Third Edition, Oxford University Press, pp. 17-21 and 167-279 (1999).

Some non-limiting examples of suitable second polymer include a polyolefin, polyurethane, polyester, polyamide, styrenic polymer, phenolic resin, polyacrylate, polymethacrylate or a combination thereof.

In certain embodiments, the ratio of the polyfarnesene to the second polymer is from about 1:99 to about 99:1, from about 1:50 to about 50:1, from about 1:25 to about 25:1 or from about 1:10 to about 10:1.

In some embodiments, the second polymer is a polyolefin (e.g., polyethylene, polypropylene, an ethylene/α-olefin interpolymer, a copolymer of ethylene and propylene, and a copolymer of ethylene and vinyl acetate (EVA)), polyurethane, polyester, polyamide, styrenic polymer (e.g., polystyrene, poly(acrylonitrile-butadiene-styrene), poly(styrenebutadiene-styrene) and the like), phenolic resin, polyacrylate, polymethacrylate or a combination thereof. In some embodiments, the second polymer is polyethylene, polypropylene, polystyrene, a copolymer of ethylene and vinyl acetate, poly(acrylonitrile-butadiene-styrene), poly(styrene-butadiene-styrene) or a combination thereof. The second polymer may be blended with the farnesene interpolymer before it is added to the polyfarnesene composition. In some embodiments, the second polymer is added directly to the polyfarnesene composition without pre-blending with the farnesene interpolymer.

The weight ratio of the polyfarnesene to the second polymer in the polymer composition can be between about 1:99 and about 99:1, between about 1:50 and about 50:1, between about 1:25 and about 25:1, between about 1:10 and about 10:1, between about 1:9 and about 9:1, between about 1:8 and about 8:1, between about 1:7 and about 7:1, between about 1:6 and about 6:1, between about 1:5 and about 5:1, between about 1:4 and about 4:1, between about 1:3 and about 3:1, between about 1:2 and about 2:1, between about 3:7 and about 7:3 or between about 2:3 and about 3:2.

In some embodiments, the second polymer is a polyolefin. Any polyolefin that is partially or totally compatible with the polyfarnesene may be used. Non-limiting examples of suitable polyolefins include polyethylenes; polypropylenes; polybutylenes (e.g., polybutene-1); polypentene-1; polyhexene-1; polyoctene-1; polydecene-1; poly-3-methylbutene-1; poly-4-methylpentene-1; polyisoprene; polybutadiene; poly-1,5-hexadiene; interpolymers derived from olefins; interpolymers derived from olefins and other polymers such as polyvinyl chloride, polystyrene, polyurethane, and the like; and mixtures thereof. In some embodiments, the polyolefin is a homopolymer such as polyethylene, polypropylene, polybutylene, polypentene-1, poly-3-methylbutene-1, poly-4-methylpentene-1, polyisoprene, polybutadiene, poly-1,5-hexadiene, polyhexene-1, polyoctene-1 and polydecene-1.

Some non-limiting examples of suitable polyethylenes include ultra low density polyethylene (ULDPE), linear low density polyethylene (LLDPE), low density polyethylene (LDPE), medium density polyethylene (MDPE), high density polyethylene (HDPE), high molecular weight high density polyethylene (HMW-HDPE), ultra high molecular weight polyethylene (UHMW-PE) and combinations thereof. Some non-limiting examples of polypropylenes include low density polypropylene (LDPP), high density polypropylene (HDPP), high-melt strength polypropylene (HMS-PP) and combination thereof. In some embodiments, the second polymer is or comprises high-melt-strength polypropylene (HMS-PP), low density polyethylene (LDPE) or a combination thereof.

In some embodiments, the polyfarnesene compositions disclosed herein comprise at least one additive for the purposes of improving and/or controlling the processibility, appearance, physical, chemical, and/or mechanical properties of the polyfarnesene compositions. In some embodiments, the polyfarnesene compositions do not comprise an additive. Any plastics additive known to a person of ordinary skill in the art may be used in the polyfarnesene compositions disclosed herein. Non-limiting examples of suitable additives include fillers, grafting initiators, tackifiers, slip agents, anti-blocking agents, plasticizers, antioxidants, blowing agents, blowing agent activators (e.g., zinc oxide, zinc stearate and the like), UV stabilizers, acid scavengers, colorants or pigments, coagents (e.g., triallyl cyanurate), lubricants, antifogging agents, flow aids, processing aids, extrusion aids, coupling agents, cross-linking agents, stability control agents, nucleating agents, surfactants, solvents, flame retardants, antistatic agents, and combinations thereof. Some additives suitable for making the polyfarnesene compositions are disclosed in U.S. Patent No. 7,655,739.

The total amount of the additives can range from about greater than 0 to about 80%, from about 0.001 % to about 70%, from about 0.01 % to about 60%, from about 0.1 % to about 50%, from about 1 % to about 40%, or from about 10 % to about 50% of the total weight of the polymer composition. Some polymer additives have been described in Zweifel Hans et al., "Plastics Additives Handbook," Hanser Gardner Publications, Cincinnati, Ohio, 5th edition (2001).

Optionally, the polyfarnesene compositions disclosed herein can comprise a plasticizer. In general, a plasticizer is a chemical that can increase the flexibility and lower the glass transition temperature of polymers. Any plasticizer known to a person of ordinary skill in the art may be added to the polyfarnesene compositions disclosed herein. Non-limiting examples of plasticizers include mineral oils, abietates, adipates, alkyl sulfonates, azelates, benzoates, chlorinated paraffins, citrates, epoxides, glycol ethers and their esters, glutarates, hydrocarbon oils, isobutyrates, oleates, pentaerythritol derivatives, phosphates, phthalates, esters, polybutenes, ricinoleates, sebacates, sulfonamides, tri- and pyromellitates, biphenyl derivatives, stearates, difuran diesters, fluorine-containing plasticizers, hydroxybenzoic acid esters, isocyanate adducts, multi-ring aromatic compounds, natural product derivatives, nitriles, siloxane-based plasticizers, tar-based products, thioeters and combinations thereof. Where used, the amount of the plasticizer in the polymer composition can be from greater than 0 to about 15 wt%, from about 0.5 to about 10 wt%, or from about 1 to about 5 wt% of the total weight of the polymer composition. Some plasticizers have been described in George Wypych, "Handbook of Plasticizers," ChemTec Publishing, Toronto-Scarborough, Ontario (2004).

In some embodiments, the polyfarnesene compositions disclosed herein optionally comprise an antioxidant that can prevent the oxidation of polymer components and organic additives in the polyfarnesene compositions. Any antioxidant known to a person of ordinary skill in the art may be added to the polyfarnesene compositions disclosed herein. Non-limiting examples of suitable antioxidants include aromatic or hindered amines such as alkyl diphenylamines, phenyl-α- naphthylamine, alkyl or aralkyl substituted phenyl-α-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (e.g., IRGANOX™ 1010, from Ciba Geigy, New York); acryloyl modified phenols; octadecyl-3,5-di-t-butyl-4-hydroxycinnamate (e.g., IRGANOX™ 1076, commercially available from Ciba Geigy); phosphites and phosphonites; hydroxylamines; benzofuranone derivatives; and combinations thereof. Where used, the amount of the antioxidant in the polymer composition can be from about greater than 0 to about 5 wt%, from about 0.0001 to about 2.5 wt%, from about 0.001 to about 1 wt%, or from about 0.001 to about 0.5 wt% of the total weight of the polymer composition. Some antioxidants have been described in Zweifel Hans et al., "Plastics Additives Handbook," Hanser Gardner Publications, Cincinnati, Ohio, 5th edition, Chapter 1, pages 1-140 (2001 ).

In other embodiments, the polyfarnesene compositions disclosed herein optionally comprise an UV stabilizer that may prevent or reduce the degradation of the polyfarnesene compositions by UV radiations. Any UV stabilizer known to a person of ordinary skill in the art may be added to the polyfarnesene compositions disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the polymer composition can be from about greater than 0 to about 5 wt%, from about 0.01 to about 3 wt%, from about 0.1 to about 2 wt%, or from about 0.1 to about 1 wt% of the total weight of the polymer composition. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, the polyfarnesene compositions disclosed herein optionally comprise a colorant or pigment that can change the look of the polyfarnesene compositions to human eyes. Any colorant or pigment known to a person of ordinary skill in the art may be added to the polyfarnesene compositions disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or pigment in the polymer composition can be from about greater than 0 to about 10 wt%, from about 0.1 to about 5 wt%, or from about 0.25 to about 2 wt% of the total weight of the polymer composition. Some colorants have been described in Zweifel Hans et al., "Plastics Additives Handbook," Hanser Gardner Publications, Cincinnati, Ohio, 5th edition, Chapter 15, pages 813-882 (2001).

Optionally, the polyfarnesene compositions disclosed herein can comprise a filler which can be used to adjust, *inter alia,* volume, weight, costs, and/or technical performance. Any filler known to a person of ordinary skill in the art may be added to the polyfarnesene compositions disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the polymer composition can be from about greater than 0 to about 80 wt%, from about 0.1 to about 60 wt%, from about 0.5 to about 40 wt%, from about 1 to about 30 wt%, or from about 10 to about 40 wt% of the total weight of the polymer composition. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

In some embodiments, the polyfarnesene compositions disclosed herein comprise a tackifier. In other embodiments, the polyfarnesene compositions disclosed herein do not comprise a tackifier. Any material that can be added to an elastomer to produce an adhesive can be used herein as a tackifier. Some non-limiting examples of tackifiers include a natural and modified resin; a glycerol or pentaerythritol ester of natural or modified rosin; a copolymer or terpolymer of natured terpene; a polyterpene resin or a hydrogenated polyterpene resin; a phenolic modified terpene resin or a hydrogenated derivative thereof; an aliphatic or cycloaliphatic hydrocarbon resin or a hydrogenated derivative thereof; an aromatic hydrocarbon resin or a hydrogenated derivative thereof; an aromatic modified aliphatic or cycloaliphatic hydrocarbon resin or a hydrogenated derivative thereof; or a combination thereof. In certain embodiments, the tackifier has a ring and ball (R&B) softening point equal to or greater than 60 °C, 70 °C, 75 °C, 80 °C, 85 °C, 90 °C or 100 °C, as measured in accordance with ASTM 28-67, which is incorporated herein by reference. In certain embodiments, the tackifier has a R&B softening point equal to or greater than 80°C, as measured in accordance with ASTM 28-67.

In certain embodiments, the amount of tackifier in the polyfarnesene compositions disclosed herein is in the range from about 0.1 wt.% to about 70 wt.%, from about 0.1 wt.% to about 60 wt.%, from about 1 wt.% to about 50 wt.%, or from about 0.1 wt.% to about 40 wt.% or from about 0.1 wt.% to about 30 wt.% or from about 0.1 wt.% to about 20 wt.%, or from about 0.1 wt.% to about 10 wt.%, based on the total weight of the composition. In other embodiments, the amount of tackifier in the compositions disclosed herein is in the range from about 1 wt.% to about 70 wt.%, from about 5 wt.% to about 70 wt.%, from about 10 wt.% to about 70 wt.%, from about 15 wt.% to about 70 wt.%, from about 20 wt.% to about 70 wt.%, or from about 25 wt.% to about 70 wt.%, based on the total weight of the composition.

Optionally, the polyfarnesene compositions disclosed herein may be crosslinked, partially or completely. When crosslinking is desired, the polyfarnesene compositions disclosed herein comprise a cross-linking agent that can be used to effect the cross-linking of the polyfarnesene compositions, thereby increasing their modulus and stiffness, among other things. An advantage of a polyfarnesene composition is that crosslinking can occur in its side chains instead of the polymer backbone like other polymers such as polyisoprene and polybutadiene. Any cross-linking agent known to a person of ordinary skill in the art may be added to the polyfarnesene compositions disclosed herein. Non-limiting examples of suitable cross-linking agents include organic peroxides (e.g., alkyl peroxides, aryl peroxides, peroxyesters, peroxycarbonates, diacylperoxides, peroxyketals, and cyclic peroxides) and silanes (e.g., vinyltrimethoxysilane, vinyltriethoxysilane, vinyltris(2-methoxyethoxy)silane, vinyltriacetoxysilane, vinylmethyldimethoxysilane, and 3-methacryloyloxypropyltrimethoxysilane). Where used, the amount of the cross-linking agent in the polymer composition can be from about greater than 0 to about 20 wt.%, from about 0.1 wt.% to about 15 wt.%, or from about 1 wt.% to about 10 wt.% of the total weight of the polymer composition. Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001).

In some embodiments, the farnesene interpolymers disclosed herein includes farnesene-modified polymers prepared by copolymerizing one or more farnesene with one or more vinyl monomers. In certain embodiments, the unmodified polymer derived from the one or more vinyl monomers can be any known olefin homopolymer or interpolymer. In further embodiments, none of the one or more other vinyl monomers has an unsaturated side chain capable of reacting with a cross-linking agent. Because of the unsaturated side chains derived from the farnesene, the farnesene-modified polymer disclosed herein can be crosslinked by a cross-linking agent disclosed herein.

In certain embodiments, the amount of the farnesene in the farnesene-modified polymer disclosed herein is from about 1 wt.% to about 20 wt.%, from about 1 wt.% to about 10 wt.%, from about 1 wt.% to about 7.5 wt.%, from about 1 wt.% to about 5 wt.%, from about 1 wt.% to about 4 wt.%, from about 1 wt.% to about 3 wt.%, or from about 1 wt.% to about 2 wt.%, based on the total weight of the farnesene-modified polymer. In other embodiments, the amount of the one or more other vinyl monomers in the farnesene-modified polymer disclosed herein is from about 80 wt.% to about 99 wt.%, from about 90 wt.% to about 99 wt.%, from about 92.5 wt.% to about 99 wt.%, from about 95 wt.% to about 99 wt.%, from about 96 wt.% to about 99 wt.%, from about 97 wt.% to about 99 wt.%, or from about 98 wt.% to about 99 wt.%, based on the total weight of the farnesene-modified polymer.

### Blending of the Ingredients Of the Polymer Compositions

The ingredients of the polyfarnesene compositions, *i.e.,* the farnesene interpolymer, the additive, the optional second polymer (*e.g.*, polyethylene, and polypropylene) and additives (*e.g.*, the cross-linking agent) can be mixed or blended using methods known to a person of ordinary skill in the art. Non-limiting examples of suitable blending methods include melt blending, solvent blending, extruding, and the like.

In some embodiments, the ingredients of the polyfarnesene compositions are melt blended by a method as described by Guerin et al. in U.S. Patent No. 4,152,189. First, all solvents, if there are any, are removed from the ingredients by heating to an appropriate elevated temperature of about 100 °C to about 200 °C or about 150 °C to about 175 °C at a pressure of about 5 torr (667 Pa) to about 10 torr (1333 Pa). Next, the ingredients are weighed into a vessel in the desired proportions and the foam is formed by heating the contents of the vessel to a molten state while stirring.

In other embodiments, the ingredients of the articles are processed using solvent blending. First, the ingredients of the desired foam are dissolved in a suitable solvent and the mixture is then mixed or blended. Next, the solvent is removed to provide the foam.

In further embodiments, physical blending devices that can provide dispersive mixing, distributive mixing, or a combination of dispersive and distributive mixing can be used in preparing homogenous blends. Both batch and continuous methods of physical blending can be used. Non-limiting examples of batch methods include those methods using BRABENDER^{®} mixing equipments (*e.g.*, BRABENDER PREP CENTER^{®}, available from C. W. Brabender Instruments, Inc., South Hackensack, N.J.) or BANBURY^{®} internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some embodiments, the additives can be added into an extruder through a feed hopper or feed throat during the extrusion of the farnesene interpolymer, the optional second polymer or the foam. The mixing or blending of polymers by extrusion has been described in C. Rauwendaal, "Polymer Extrusion", Hanser Publishers, New York, NY, pages 322-334 (1986).

When one or more additives are required in the polyfarnesene compositions, the desired amounts of the additives can be added in one charge or multiple charges to the farnesene interpolymer, the second polymer or the polymer composition. Furthermore, the addition can take place in any order. In some embodiments, the additives are first added and mixed or blended with the farnesene interpolymer and then the additive-containing interpolymer is blended with the second polymer. In other embodiments, the additives are first added and mixed or blended with the second polymer and then the additive-containing second polymer is blended with the farnesene interpolymer. In further embodiments, the farnesene interpolymer is blended with the second polymer first and then the additives are blended with the polymer composition.

The ingredients of the polymer composition can be mixed or blended in any suitable mixing or blending devices known to skilled artisans. The ingredients in the polymer composition can then be mixed at a temperature below the decomposition temperature of the blowing agent and the cross-linking agent to ensure that all ingredients are homogeneously mixed and remain intact. After the polymer composition is relatively homogeneously mixed, the composition is shaped and then exposed to conditions (e.g. heat, pressure, shear, *etc.*) over a sufficient period of time to activate the blowing agent and the cross-linking agent to make the foam.

### Applications of the Compositions Comprising the Polyfarnesenes

The polyfarnesenes or polyfarnesene compositions disclosed herein can be used for a wide variety of applications. For example, they can be used in a variety of conventional thermoplastic fabrication processes to produce useful articles, including objects comprising at least one film layer, such as a monolayer film, or at least one layer in a multilayer film prepared by cast, blown, calendered, or extrusion coating processes; molded articles, such as blow molded, injection molded, or rotomolded articles; extrusions; fibers; and woven or non-woven fabrics. Thermoplastic compositions comprising the present polymers, include blends with other natural or synthetic polymers, additives, reinforcing agents, ignition resistant additives, antioxidants, stabilizers, colorants, extenders, crosslinkers, blowing agents, and plasticizers. Of particular utility are multi-component fibers such as core/sheath fibers, having an outer surface layer, comprising at least in part, one or more polymers of the invention.

Fibers that may be prepared from the polyfarnesenes or polyfarnesene compositions disclosed herein include staple fibers, tow, multicomponent, sheath/core, twisted, and monofilament. Any fiber forming processes can be used herein. For example, suitable fiber forming processes include spinbonded, melt blown techniques, gel spun fibers, woven and nonwoven fabrics, or structures made from such fibers, including blends with other fibers, such as polyester, nylon or cotton, thermoformed articles, extruded shapes, including profile extrusions and co-extrusions, calendared articles, and drawn, twisted, or crimped yarns or fibers. The polyfarnesenes or polyfarnesene compositions disclosed herein are also useful for wire and cable coating operations, as well as in sheet extrusion for vacuum forming operations, and forming molded articles, including the use of injection molding, blow molding process, or rotomolding processes. The polyfarnesenes or polyfarnesene compositions disclosed herein can also be formed into fabricated articles such as those previously mentioned using conventional polyolefin processing techniques which are well known to those skilled in the art of polyolefin processing.

Dispersions or emulsions (both aqueous and non-aqueous) can also be formed using the polyfarnesenes or polyfarnesene compositions disclosed herein. Frothed foams comprising the polyfarnesenes or polyfarnesene compositions disclosed herein can also be formed. The polymers may also be crosslinked by any known means, such as the use of peroxide, electron beam, silane, azide, or other cross-linking technique. The polymers can also be chemically modified, such as by grafting (for example by use of maleic anhydride (MAH), silanes, or other grafting agent), halogenation, amination, sulfonation, or other chemical modification.

Suitable end uses for the foregoing products include elastic films and fibers; soft touch goods, such as tooth brush handles and appliance handles; gaskets and profiles; adhesives (including hot melt adhesives and pressure sensitive adhesives); footwear (including shoe soles and shoe liners); auto interior parts and profiles; foam goods (both open and closed cell); impact modifiers for other thermoplastic polymers such as high density polyethylene, isotactic polypropylene, or other olefin polymers; coated fabrics; hoses; tubing; weather stripping; cap liners; flooring; and viscosity index modifiers, also known as pour point modifiers, for lubricants.

The polyfarnesene compositions disclosed herein can also be used to manufacture articles for various applications such as the automotive, construction, medical, food and beverage, electrical, appliance, business machine, and consumer markets. In some embodiments, the polyfarnesene compositions are used to manufacture molded parts or articles selected from toys, grips, soft touch handles, bumper rub strips, floorings, auto floor mats, wheels, casters, furniture and appliance feet, tags, seals, gaskets such as static and dynamic gaskets, automotive doors, bumper fascia, grill components, rocker panels, hoses, linings, office supplies, seals, liners, diaphragms, tubes, lids, stoppers, plunger tips, delivery systems, kitchen wares, shoes, shoe bladders and shoe soles.

The polymer emulsions disclosed herein can be used for various applications such as paints, coatings such as paper coatings and textile coatings, adhesives and rheology modifiers.

In some embodiments, the polyfarnesene compositions disclosed herein are used to prepare molded articles, films, sheets and foams with known polymer processes such as extrusion *(e.g.,* sheet extrusion and profile extrusion); molding *(e.g.,* injection molding, rotational molding, and blow molding); fiber spinning; and blown film and cast film processes. In general, extrusion is a process by which a polymer is propelled continuously along a screw through regions of high temperature and pressure where it is melted and compacted, and finally forced through a die. The extruder can be a single screw extruder, a multiple screw extruder, a disk extruder or a ram extruder. The die can be a film die, blown film die, sheet die, pipe die, tubing die or profile extrusion die. The extrusion of polymers has been described in C. Rauwendaal, "Polymer Extrusion", Hanser Publishers, New York, NY (1986); and M.J. Stevens, "Extruder Principals and Operation," Ellsevier Applied Science Publishers, New York, NY (1985).

Injection molding is also widely used for manufacturing a variety of plastic parts for various applications. In general, injection molding is a process by which a polymer is melted and injected at high pressure into a mold, which is the inverse of the desired shape, to form parts of the desired shape and size. The mold can be made from metal, such as steel and aluminum. The injection molding of polymers has been described in Beaumont et al., "Successful Injection Molding: Process, Design, and Stimulation," Hanser Gardner Publications, Cincinnati, Ohio (2002).

Molding is generally a process by which a polymer is melted and led into a mold, which is the inverse of the desired shape, to form parts of the desired shape and size. Molding can be pressureless or pressure-assisted. The molding of polymers is described in Hans-Georg Elias "An Introduction to Plastics," Wiley-VCH, Weinhei, Germany, pp. 161-165 (2003).

Rotational molding is a process generally used for producing hollow plastic products. By using additional post-molding operations, complex components can be produced as effectively as other molding and extrusion techniques. Rotational molding differs from other processing methods in that the heating, melting, shaping, and cooling stages all occur after the polymer is placed in the mold, therefore no external pressure is applied during forming. The rotational molding of polymers has been described in Glenn Beall, "Rotational Molding : Design, Materials & Processing," Hanser Gardner Publications, Cincinnati, Ohio (1998).

Blow molding can be used for making hollow plastics containers. The process includes placing a softened polymer in the center of a mold, inflating the polymer against the mold walls with a blow pin, and solidifying the product by cooling. There are three general types of blow molding: extrusion blow molding, injection blow molding, and stretch blow molding. Injection blow molding can be used to process polymers that cannot be extruded. Stretch blow molding can be used for difficult to blow crystalline and crystallizable polymers such as polypropylene. The blow molding of polymers has been described in Norman C. Lee, "Understanding Blow Molding," Hanser Gardner Publications, Cincinnati, Ohio (2000).

The following examples are presented to exemplify embodiments of the invention but are not intended to limit the invention to the specific embodiments set forth. Unless indicated to the contrary, all parts and percentages are by weight. Specific details described in each example should not be construed as necessary features of the invention.

### EXAMPLES

### Purification of Starting Materials

β-farnesene having 97.6% purity by weight was obtained from Amyris, *Inc.,* Emeryville, CA. The β-farnesene included hydrocarbon-based impurities such as zingiberene, bisabolene, farnesene epoxide, farnesol isomer, E,E-farnesol, squalene, ergosterol, and some dimers of farnesene. The β-farnesene was purified with a 3Å molecular sieve to remove the impurities and were then redistilled under nitrogen atmosphere to improve purity. Cyclohexane was distilled under nitrogen atmosphere to eliminate moisture and stored with a drying agent.

### Differential Scanning Calorimetry

A TA Q200 differential scanning calorimeter was utilized to determine glass transition temperatures (Tg) of polymer samples disclosed herein. A 5 mg sample was placed in an aluminum pan. An empty reference pan and the sample pan were maintained within ± 0.01 mg. Samples were scanned from about -175 °C to about 75 °C at a rate of 10 °C/min. T_{g} was identified as a step change transition in the heat flow. The mid-point of the transition was reported as the T_{g} of the sample.

### Gel Permeation Chromatography

GPC was utilized to determine the molecular weights and polydispersities of polymer samples. A Waters 2414 refractive index detector was used with a Waters 1515 isocratic HPLC pump. HPLC grade tetrahydrofuran was used as solvent. Polydispersed fractions were collected from GPC. The molecular weight of a sample was generally recorded as the number averaged molecular weight (Mₙ) or the weight average (M_{w}). When there were overlapping peaks which prohibited the determination of a unique polydispersity of each peak, a peak molecular weight (Mp) was incorporated herein.

### Thermal Gravimetric Analysts

The degradation temperatures of samples were determined by thermal gravimetric analysis (TGA). About 20 mg of a sample was placed in a tared pan. The pan was then loaded into a furnace. Air flow was allowed to equilibrate. The sample was then heated from room temperature to 580 °C at 10 °C/min. Temperatures for 1% and 5% weight loss of samples were reported respectively.

### Ultraviolet-Visible Spectroscopy

Ultraviolet-visible (UV-Vis) spectroscopy was utilized to monitor monomer consumption during the reaction. The reaction was allowed to continue until all monomers had been consumed. A Shimadzu UV-2450 UV-Vis spectrophotometer was utilized. Background measurement was averaged from five measurements with an empty quartz cuvette. Aliquots were periodically taken from the reaction vessel, which was then placed in a square quartz cuvette with having 1 cm beam distance. The absorbance of the sample is directly proportional to the concentration of the monomer in the aliquot. The progress of the reaction was monitored by UV-Vis spectroscopy with the characteristic absorption peak of β-farnesene at 230 nm.

### Tensile strength

Tensile strength of samples were determined using an INSTRON™ tensile tester. A sample was cast into films and cut to the appropriate dimensions. The thickness and width of the sample after processing were measured. A gauge length of 2.54 cm was used with a crosshead speed 25 mm/min.

### Lap Test

Lap test was used to characterize adhesive properties of samples. Two substrates were held together by an adhesive. Substrates were then pulled apart, shearing the adhesive. The construct fails in one of three ways. When the substrate failed, it was called a substrate failure. When the adhesive was torn apart, it was called a cohesive failure. When the interface between the substrate and adhesive failed, it was called an adhesive failure. An INSTRON™ tensile tester was used to characterize the forces involved in the failure. The adhesive was applied to a 2 cm² section of the substrate with a crosshead speed of 25 mm/min. Aluminum was used as the substrate. Aluminum was cleaned with acetone before bonding.

### ¹H and ¹³C Nuclear Magnetic Resonance

¹H and ¹³C Nuclear Magnetic Resonance was utilized to characterize chemical microstructures of the samples. A Varian Mercury 300 MHz NMR was utilized for these measurements. Deuterated chloroform was used as the solvent. Several measurements were repeated for collecting spectra.

### Example 1

TERGITOL^{™} 15-S-20 nonionic surfactant (obtained from Dow Chemical Co.), a secondary alcohol ethoxylate nonionic surfactant, was diluted from an activity 79.50% to 15.33% with deionized water. AEROSOL^{™} EF-810, an anionic sulfosuccinate surfactant (obtained from Cytec Industries Inc.), was used as is at 30.10% activity.

In a 250 mL round bottom flask, 55.00 mL deionized water was sparged with nitrogen for at least 15 minutes to remove any dissolved oxygen.

The diluted TERGITOL^{™} 15-S-20 (8.39 g) and AEROSOL^{™} EF-810 (1.84 g) were added into the round bottom flask and stirred for at least 15 minutes. In a separate flask, 38.50 g farnesene, 70.40 g methyl methacrylate ("MMA"), and 1.10 g methacrylic acid ("MAA") were combined and stirred to form a mixture. The mixture was slowly added into the water/surfactant mixture and stirred for about 15 minutes to form a pre-emulsion.

In a 500 mL four-necked round bottom flask equipped with a stir shaft with a PTFE stir blade; a condenser; a temperature thermocouple with nitrogen inlet; and an inlet for tubing from syringe pump connected to the pre-emulsion, 90.00 mL deionized water was sparged with nitrogen gas for about 15 minutes.

The diluted TERGITOL^{™} 15-S-20 (4.17 g) and AEROSOL^{™} EF-810 (0.91 g) were added into the flask and stirred at 200 rpm for about 15 minutes under heat. The solution was heated to about 70 °C. When the solution was from about 65 °C to about 70 °C, sodium bicarbonate (0.55 g in 5.0 g deionized water) was added as a buffer.

The syringe pump was primed and the tubing was filled with the pre-emulsion. When the temperature was stabilized, 22 mL of the pre-emulsion (about 10%) was added into the flask at a rate of 7.5 mL/min.

After the addition of the pre-emulsion, the solution was stirred for about 2 minutes and then the ammonium persulfate initiator (0.55 g in 4.0 g deionized water) was added and stirred for about 15 minutes. The temperature of the solution increased by about 4-7 °C.

After a reaction was started, 220 mL of the pre-emulsion was pumped into the flask over three hours time.

After the addition of the pre-emulsion was completed, the solution was held at about 70 °C for about 30 minutes. The flask was then raised to and held at 75 °C for 30 minutes. After that the flask was raised to and held at 80 °C for 30 minutes. Finally, the flask was raised to and held at 85 °C for 60 minutes and then a sample was analyzed with gas chromatography ("GC"). The GC analysis was used to measure the conversion of the monomer in the reaction.

The polymer in the flask was then cooled to room temperature and filtered into a suitable container. The weight average molecular weight and polydispersity index ("PDI") of Example 1 were measured by size-exclusion chromatography.

The polymer was dried in a vacuum oven at about 55 °C for about two hours to remove water. The glass transition temperature ("Tg") of Example 1 was measured by differential scanning calorimetry ("DSC") at a scan rate of 10 °C/min.

### Example 2

The preparation procedure for Example 2 was the same as that for Example 1, except 44 g of farnesene (40 wt.%) and 64.9 g of MMA (59.00 wt.%) were used instead of 38.5 g of farnesene (35 wt.%) and 70.4 g of MMA (64 wt.%). The weight average molecular weight, PDI and Tg of Example 2 are shown in Table 1.

### Example 3

The preparation procedure for Example 3 was the same as that for Example 1, except 33 g of farnesene (30.00 wt.%) and 75.9 g (69.00 wt.%) of MMA were used instead of 38.5 g of farnesene (35.00 wt.%) and 70.4 g of MMA (64.00 wt.%). The weight average molecular weight, PDI and Tg of Example 3 are shown in Table 1.

### Example 4

The preparation procedure for Example 4 was the same as that for Example 1, except 27.5 g of farnesene (25.00 wt.%) and 81.4 g (74.00 wt.%) of MMA were used instead of 38.5 g of farnesene (35 wt.%) and 70.4 g of MMA (64 wt.%). The weight average molecular weight, PDI and Tg of Example 4 are shown in Table 1.

### Example 5

The preparation procedure for Example 5 was the same as that for Example 1, except 22 g of farnesene (20 wt.%) and 86.9 g (79 wt.%) of MMA were used instead of 38.5 g of farnesene (35 wt.%) and 70.40 g of MMA (64 wt.%). The weight average molecular weight, PDI and Tg of Example 5 are shown in Table 1.

### Example 6

Example 6 was a comparative example. The preparation procedure for Example 6 was the same as that for Example 1, except 55 g of butyl acrylate ("BA") (50 wt.%) and 53.9 g (49 wt.%) of MMA were used instead of 38.5 g of farnesene (35.00 wt.%) and 70.4 g of MMA (64 wt.%). The weight average molecular weight, PDI and Tg of Example 6 are shown in Table 1.

**Table 1**

| **Example No.** | **Farnesene (wt.%)** | **BA (wt.%)** | **MMA (wt %)** | **MAA (wt.%)** | **Mw (KDa)** | **PDI** | **Tg (Inflection Point) (°C)** |
|---|---|---|---|---|---|---|---|
| **1** | 35 | 0 | 64 | 1 | 218 | 2.67 | 7.52 |
| **2** | 40 | 0 | 59 | 1 | 134 | 2.49 | -4.47 |
| **3** | 30 | 0 | 69 | 1 | 157 | 2.81 | 23.41 |
| **4** | 25 | 0 | 74 | 1 | 138 | 3.18 | 35.59 |
| **5** | 20 | 0 | 79 | 1 | 95 | 3.47 | 53.99 |
| **6** | 0 | 50 | 49 | 1 | 156 | 3.35 | 12.05 |

### Example 7

The preparation procedure for Example 7 was the same as that for Example 1, except 35.2 g of farnesene (32 wt.%) and 73.7 g (67 wt.%) of MMA were used instead of 38.5 g of farnesene (35 wt.%) and 70.4 g of MMA (64 wt.%). The experiment was preformed twice. The average values of the weight average molecular weight, PDI and Tg of Example 7 are shown in Table 2.

### Example 8

The preparation procedure for Example 8 was the same as that for Example 1, except 36.3 g of farnesene (33 wt.%) and 72.6 g (66 wt.%) of MMA were used instead of 38.5 g of farnesene (35 wt.%) and 70.4 g of MMA (64 wt.%). The experiment was preformed twice. The average values of the weight average molecular weight, PDI and Tg of Example 8 shown in Table 2.

### Example 9

The preparation procedure for Example 9 was the same as that for Example 1, except 37.4 g of farnesene (34 wt.%) and 71.5 g (65 wt.%) of MMA were used instead of 38.5 g of farnesene (35 wt.%) and 70.4 g of MMA (64 wt.%). The experiment was preformed twice. The average values of the weight average molecular weight, PDI and Tg of Example 9 are shown in Table 2.

### Example 10

The preparation procedure for Example 10 was the same as that for Example 1, except 38.5 g of farnesene (35 wt.%) and 70.4 g (64 wt.%) of MMA were used instead of 38.5 g of farnesene (35 wt.%) and 70.4 g of MMA (64 wt.%). The experiment was preformed twice. The average values of the weight average molecular weight, PDI and Tg of Example 10 are shown in Table 2.

### Example 11

The preparation procedure for Example 11 was the same as that for Example 1, except 39.6 g of farnesene (36 wt.%) and 69.3 g (63 wt.%) of MMA were used instead of 38.5 g of farnesene (35 wt.%) and 70.4 g of MMA (64 wt.%). The experiment was preformed twice. The average values of the weight average molecular weight, PDI and Tg of Example 11 are shown in Table 2.

### Example 12

Example 12 was a comparative experiment. The preparation procedure for Example 12 was the same as that for Example 1, except 55 g of BA (50 wt.%) and 53.9 g (49 wt.%) of MMA were used instead of 38.5 g of farnesene (35 wt.%) and 70.4 g of MMA (64 wt.%). The experiment was preformed twice. The average values of the weight average molecular weight, PDI and Tg of Example 12 are shown in Table 2.

**Table 2**

| **Example No.** | **Farnesene (wt.%)** | **BA (wt.%)** | **MMA (wt.%)** | **MAA (wt.%)** | **Mw (KDa)** | **PDI** | **Tg (Inflection Point) (°C)** | **% Conv. of Total Monomers** |
|---|---|---|---|---|---|---|---|---|
| **7** | 32 | 0 | 67 | 1 | 187 | 2.75 | 15.66 | 99.83 |
| **8** | 33 | 0 | 66 | 1 | 163 | 3.05 | 13.20 | 99.84 |
| **9** | 34 | 0 | 65 | 1 | 162 | 3.1 | 12.14 | 99.80 |
| **10** | 35 | 0 | 64 | 1 | 184 | 2.75 | 6.07 | 99.83 |
| **11** | 36 | 0 | 63 | 1 | 141 | 3.65 | 5.37 | 99.86 |
| **12** | 0 | 50 | 49 | 1 | 168 | 3.35 | 12.02 | 100 |

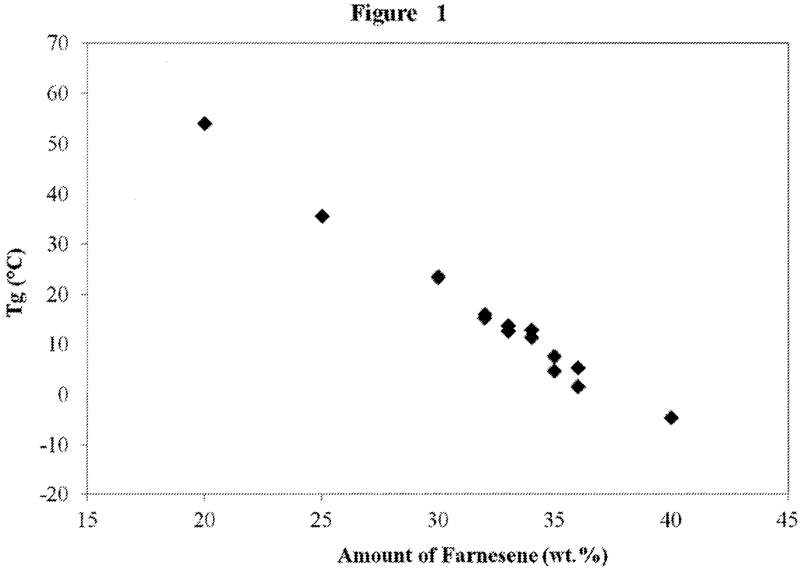

The conversion data in Table 2 shows that each of Examples 7-12 has a total monomer conversion greater than 99%. The Tg of Examples 1-5 and 7-11 are shown in Figure 1.

### Example 13

The preparation procedure for Example 13 was the same as that for Example 1, except two additional ingredients were added into the pre-emulsion; and 44 g farnesene (40 wt.%), 11 g BA (10 wt.%) and 53.9 g MMA (49 wt.%) were used instead of 38.5 g of farnesene (35 wt.%) and 70.4 g of MMA (64 wt.%). The ingredients were 0.50 g 1-dodecane thiol and 1.00 g methyl-β-cyclodextrin. 1-Dodecane thiol was added as a chain transfer agent to prevent the growing polymer from reacting upon itself. Methyl-β-cyclodextrin was added as a phase transfer agent to assist in the transport of both farnesene and 1-dodecane thiol through the aqueous medium. The weight average molecular weight, PDI and Tg of Example 13 are shown in Table 3.

### Example 14

The preparation procedure for Example 14 was the same as that for Example 13, except 33 g farnesene (30 wt.%) and 22 g BA (20 wt.%) were used instead of 44 g farnesene (40 wt.%) and 11 g BA (10 wt.%). The weight average molecular weight, PDI and Tg of Example 14 are shown in Table 3.

### Example 15

The preparation procedure for Example 15 was the same as that for Example 13, except 22 g farnesene (20 wt.%) and 33 g BA (30 wt.%) were used instead of 44 g farnesene (40 wt.%) and 11 g BA (10 wt.%). The weight average molecular weight, PDI and Tg of Example 15 are shown in Table 3.

### Example 16

The preparation procedure for Example 16 was the same as that for Example 13, except 11 g farnesene (10 wt.%) and 44 g BA (40 wt.%) were used instead of 44 g farnesene (40 wt.%) and 11 g BA (10 wt.%). The weight average molecular weight, PDI and Tg of Example 16 are shown in Table 3.

### Example 17

Example 17 was a comparative example. The preparation procedure for Example 17 was the same as that for Example 13, except 55 g BA (50 wt.%) were used instead of 44 g farnesene (40 wt.%) and 11 g BA (10 wt.%). The weight average molecular weight, PDI and Tg of Example 17 are shown in Table 3.

**Table 3**

| **Example No.** | **Farnesene (wt.%)** | **BA (wt.%)** | **MMA (wt.%)** | **MAA (wt.%)** | **Mw (KDa)** | **PDI** | **Tg (°C**) **(Inflection Point)** |
|---|---|---|---|---|---|---|---|
| 13 | 40.00 | 10.00 | 49.00 | 1.00 | 56 | 1.89 | -23.64 |
| 14 | 30.00 | 20.00 | 49.00 | 1.00 | 34 | 1.79 | -27.83 |
| 15 | 20.00 | 30.00 | 49.00 | 1.00 | 44 | 1.71 | -14.86 |
| 16 | 10.00 | 40.00 | 49.00 | 1.00 | 54 | 1.72 | 4.68 |
| 17 | 0.00 | 50.00 | 49.00 | 1.00 | 362 | 4.39 | 10.58 |

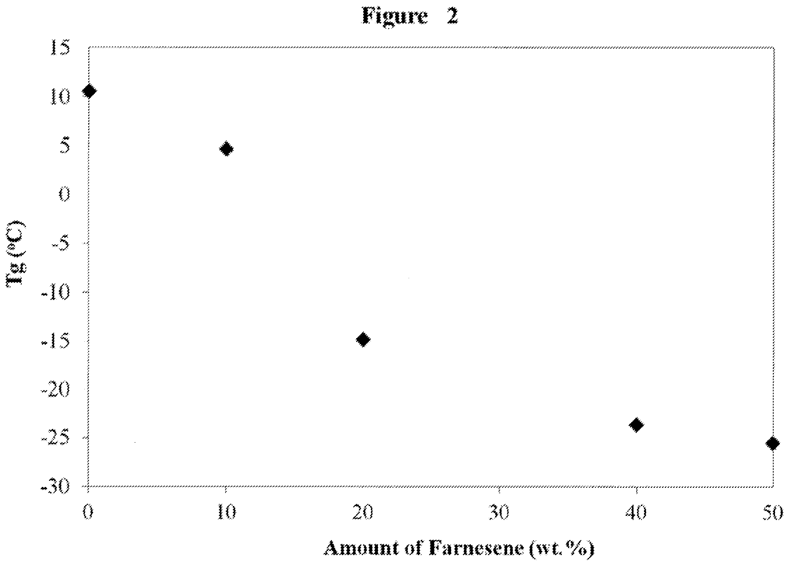

Examples 13-16 have a lower molecular weight and a lower PDI than Example 17. The Tg of Examples 13-16 are shown in Figure 2.

### Example 18

A mixture of 11.05 g MMA (0.1104 mols), 67.69 g β-farnesene (0.3312 mols) and 0.574 g benzoyl peroxide ("BPO", 0.00237 mols) were added to a 250 mL three-necked round bottomed flask, equipped with an overhead stir shaft with a PTFE stir blade, in a glove box with an atmosphere of N₂. The ratio of farnesene to MMA was 3:1. The flask was sealed and removed from the glove box, placed on a heating mantle, and attached to an overhead stirrer. An argon inlet was connected to the flask as well as an oil bubbler. A stir rate of 250 rpm was set on the overhead stirrer and the flow of argon was adjusted such that argon bubbled through the bubbler at a rate of about 1 bubble per second. The heating mantle was set to 75 °C and the reaction was allowed to proceed for 15 hours. The heating mantle and argon gas inlet were removed and 1.107 g butylated hydroxytoluene ("BHT", 0.005024 mols) was added to the flask. The solution was stirred for 5 minutes before polymer was precipitated from the solution. Precipitation was done by dripping the solution dropwise into 2 L of ice-cold methanol. Once the polymer was precipitated, the methanol solution was decanted and the polymer was redissolved in tetrahydrofuran ("THF"). The resulting solution of polymer in THF was precipitated into 2 L of ice-cold methanol, and then the methanol solution was decanted. The polymer was redissolved in THF and reprecipitated into 2 L of ice-cold methanol. The methanol was decanted and the polymer was dried by removing residual solvent on a rotary evaporator and then placing the isolated polymer under vacuum (50 microns) overnight. A yield of 19.62 g (24.91%) of a clear, transparent, viscous liquid was realized.

Example 18 was characterized by the following analytical data: ¹HNMR(CDCl₃ 400 MHz): δ = 5.2-5.0 (m, 30H), 4.8-4.7 (s, 1H), 3.7-3.6 (s, 6H), 2.1-1.9 (m, 120H), 1.7-1.6 (s, 32H), 1.6 (s, 63H), 1.1 (m, 3H). ¹³CNMR(THF-d8, 400 MHz): δ = 135.9, 135.7, 131.8, 125.5, 125.4, 125.3, 40.9, 28.2, 28.1, 27.9, 26.6, 18.1, 16.5; GPC (THF, PS Standards): M_{w} = 146 kDa, M_{w/}Mₙ = 2.4. DSC (2 °C/min, N₂): Tg (inflection) = -66.15 °C. The weight average molecular weight, PDI and Tg of Example 18 are shown in Table 4.

### Example 19

The preparation procedure for Example 19 was the same as that for Example 18, except the ratio of farnesene to MMA was 1:0. The following amounts of reactants were used: farnesene (79.008 g, 0.38661 mols), MMA (0 g, 0.0 mols), BPO (0.607 g, 0.00251 mols). The reaction was heated for 7 hours at 75 °C before addition of BHT (0.565 g, 0.00256 mols). A yield of 8.412 g (10.65%) of a clear, transparent, viscous liquid was obtained. The weight average molecular weight, PDI and Tg of Example 19 were measured and are shown in Table 4.

### Example 20

The preparation procedure for Example 20 was the same as that for Example 18, except the ratio of farnesene to MMA was 1:0. The following amounts of reactants were used: farnesene (79.25 g, 0.3878 mols), MMA (0 g, 0.0 mols), BPO (0.607 g, 0.00251 mols). The reaction was heated for 18.5 hours at 75 °C before addition of BHT (1.111 g, 0.005042 mols). A yield of 19.349 g (24.42%) of a clear, transparent, viscous liquid was obtained. The weight average molecular weight, PDI and Tg of Example 20 were measured and are shown in Table 4.

### Example 21

The preparation procedure for Example 21 was the same as that for Example 18, except the ratio of farnesene to MMA was 5:1. The following amounts of reactants were used: farnesene (66.788 g, 0.32682 mols), MMA (6.54 g, 0.0653 mols), BPO (0.532 g, 0.00220 mols). The reaction was heated for 13.5 hours at 75 °C before addition of BHT (0.969 g, 0.00440 mols). A yield of 13.949 g (19.02%) of a clear, transparent, viscous liquid was obtained. The weight average molecular weight, PDI and Tg of Example 21 were measured and are shown in Table 4.

### Example 22

The preparation procedure for Example 22 was the same as that for Example 18, except the ratio of farnesene to MMA was 1:1. The following amounts of reactants were used: farnesene (58.47 g, 0.2861 mols), MMA (26.17 g, 0.2614 mols), BPO (0.603 g, 0.00249 mols). The reaction was heated for 15.25 hours at 75 °C before addition of BHT (1.102 g, 0.005001 mols). A yield of 29.98 g (35.42%) of a clear, transparent, viscous liquid was obtained. The weight average molecular weight, PDI and Tg of Example 22 were measured and are shown in Table 4.

### Example 23

The preparation procedure for Example 23 was the same as that for Example 18, except the ratio of farnesene to MMA was 1:1. The following amounts of reactants were used: farnesene (52.328 g, 0.25606 mols), MMA (25.633 g, 0.25602 mols), BPO (0.551 g, 0.00227 mols). The reaction was heated for 7.75 hours at 75 °C before addition of BHT (1.008 g, 0.004574 mols). A yield of 16.354 g (21.0%) of a clear, transparent, viscous liquid was obtained. The weight average molecular weight, PDI and Tg of Example 23 were measured and are shown in Table 4.

### Example 24

The preparation procedure for Example 24 was the same as that for Example 18, except the ratio of farnesene to MMA was 1:2. The following amounts of reactants were used: farnesene (47.618 g, 0.23301 mols), MMA (46.659 g, 0.46603 mols), BPO (0.653 g, 0.00270 mols). The reaction was heated for 6 hours at 75 °C before addition of BHT (1.196 g, 0.005427 mols). A yield of 19.7 g (20.9%) of a clear, transparent, viscous liquid was obtained. The weight average molecular weight, PDI and Tg of Example 24 were measured and are shown in Table 4.

### Example 25

The preparation procedure for Example 25 was the same as that for Example 18, except the ratio of farnesene to MMA was 1:5. The following amounts of reactants were used: farnesene (29.842 g, 0.14603 mols), MMA (73.088 g, 0.73000 mols), BPO (0.690 g, 0.00285 mols). The reaction was heated for 6 hours at 75 °C before addition of BHT (1.254 g, 0.005691 mols). A yield of 28.026 g (27.2%) of a white, opaque, tough solid was obtained. The weight average molecular weight, PDI and Tg of Example 25 were measured and are shown in Table 4.

### Example 26

The preparation procedure for Example 26 was the same as that for Example 18, except the ratio of farnesene to MMA was 1:5. The following amounts of reactants were used: farnesene (29.839 g, 0.14601 mols), MMA (73.943 g, 0.73854 mols), BPO (0.691 g, 0.00285 mols). The reaction was heated for 4.25 hours at 75 °C before addition of BHT (1.254 g, 0.00569 mols). A yield of 20.030 g (19.3%) of a white, opaque, tough solid was obtained. The weight average molecular weight, PDI and Tg of Example 26 were measured and are shown in Table 4.

**Table 4**

| **Example No.** | **Ratio of farnesene to MMA** | **Mw (KDa)** | **PDI** | **Tg (Inflection Point) (°C)** |
|---|---|---|---|---|
| 18 | 3:1 | 146 | 2.4 | -65.15 |
| 19 | 1:0 | 67 | 1.6 | -71.33 |
| 20 | 1:0 | 132 | 2.6 | -75.73 |
| 21 | 5:1 | 105 | 2 | -70.58 |
| 22 | 1:1 | 224 | 3 | -49.07 |
| 23 | 1:1 | 157 | 2.3 | -50.50 |
| 24 | 1:2 | 172 | 2.3 | -28.30 |
| 25 | 1:5 | 271 | 2.7 | -2.49 |
| 26 | 1:5 | 199 | 2.4 | -2.86 |

### Example 27

Example 19 (7.966 g) was dissolved in heptane (250 mL) and added into a 1L Hastelloy pressure reactor, followed by 5% Pd/C catalyst (0.402 g). The reactor was sealed, placed in the reactor housing, and connected to an overhead stirrer and a gas inlet. The solution was stirred at 240 rpm and the reactor was pressurized to 880 psi with N₂ gas. Minimal pressure drop was observed over 30 minutes. The reactor was then evacuated and refilled with 900 psi H₂ gas. The reactor was heated to 95 °C for 2 hours and then the temperature was raised to 140 °C. The reaction proceeded overnight before the pressure was slowly released. The solution was filtered through a plug of celite, concentrated under reduced pressure, and then dried under high vacuum (50 microns) overnight. The isolated polymer (7.608 g, 92.76%) was a transparent viscous liquid.

Example 27 was characterized by the following analytical data: ¹HNMR(THF-d8 , 400 MHz): δ = 1.6-1.5 (m, 6H), 1.5-1.0 (m, 100H), 0.9-0.8 (m, 50H). ¹³CNMR(THF-d8, 100 MHz): δ = 39.4, 37.6, 37.4, 34.0, 32.8, 31.9, 28.0, 22.6, 22.3, 22.2, 19.3, 13.5; GPC (THF, PS Standards): M_{w} = 70 kDa, M_{w}/Mₙ = 1.6; DSC (2 °C/min, N₂): Tg (inflection) =-74.88 °C. The weight average molecular weight, PDI and Tg of Example 27 are shown in Table 5.

### Example 28

The preparation method was the same as in Example 27, except the polymer obtained from Example 20 (17.264 g) was dissolved in THF (800 mL) and the catalyst used was 5% Ru/C (0.902 g). The stir rate was 300 rpm and the reactor was pressurized to 600 psi with H₂ gas. The reactor was heated to 140 °C and the reaction was proceeded overnight. A yield of 12.028 g of a clear, transparent, viscous liquid was obtained. The weight average molecular weight, PDI, and Tg of Example 28 were measured and are shown in Table 5.

### Example 29

The preparation method was the same as in Example 27, except the polymer obtained from Example 21 (7.883 g) was dissolved in heptane (820 mL) and the catalyst used was 5% Ru/C (0.394 g). The stir rate was 300 rpm and the reactor was pressurized to 600 psi with H₂ gas. The reactor was heated to 140 °C and the reaction proceeded overnight. A yield of 7.666 g (99.88%) of a slightly cloudy, viscous liquid was obtained. The weight average molecular weight, PDI, and Tg of Example 29 were measured and are shown in Table 5.

### Example 30

The preparation method was the same as in Example 27, except the polymer obtained from Example 18 (18.018 g) was dissolved in a 1:1 volume to volume ratio of a mixture of ethyl acetate and heptane (850 mL) and the catalyst used was 5% Pd/C (0.906 g). The stir rate was 300 rpm and the reactor was pressurized to 600 psi with H₂ gas. The reactor was heated to 140 °C and the reaction proceeded overnight. A yield of 16.946 g (96.457%) of a translucent, slightly grey, viscous liquid was obtained. The weight average molecular weight, PDI, and Tg of Example 30 were measured and are shown in Table 5.

### Example 31

The preparation method was the same as in Example 27, except the polymer obtained from Example 22 (28.95 g) was dissolved in THF (800 mL) and the catalyst used was 5% Pd/C (1.453 g). The stir rate was 300 rpm and the reactor was pressurized to 600 psi with H₂ gas. The reactor was heated to 140 °C and the reaction proceeded overnight. A yield of 6.002 g of a translucent, slightly grey, highly viscous/glassy material was obtained. The weight average molecular weight, PDI, and Tg of Example 31 were measured and are shown in Table 5.

### Example 32

The preparation method was the same as in Example 27, except the polymer obtained from Example 23 (14.09 g) was dissolved in heptane (500 mL) and ethyl acetate (230 mL) and the catalyst used was 5% Pd/C (0.706 g). The stir rate was 250 rpm and the reactor was pressurized to 600 psi with H₂ gas. The reactor was heated to 140 °C and the reaction proceeded overnight. A yield of 9.872 g (71.46%) of a slightly grey, translucent, highly viscous/glassy solid was obtained. The weight average molecular weight, PDI, and Tg of Example 32 were measured and are shown in Table 5.

### Example 33

The preparation method was the same as in Example 27, except the polymer obtained from Example 24 (17.4 g) was dissolved in heptane (730 mL) and ethyl acetate (200 mL) and the catalyst used was 5% Pd/C (0.873 g). The stir rate was 300 rpm and the reactor was pressurized to 600 psi with H₂ gas. The reactor was heated to 140 °C and the reaction proceeded overnight. A yield of 13.666 g (79.7%) of a clear, glassy solid was realized. The weight average molecular weight, PDI, and Tg of Example 33 were measured and are shown in Table 5.

### Example 34

The preparation method was the same as in Example 27, except the polymer obtained from Example 25 (22.674 g) was dissolved in THF (700 mL) and the catalyst used was 5% Ru/C (1.138 g). The stir rate was 300 rpm and the reactor was pressurized to 600 psi with H₂ gas. The reactor was heated to 140 °C and the reaction proceeded overnight. A yield of 16.477 g (73.296%) of a white, glassy solid was obtained. The weight average molecular weight, PDI, and Tg of Example 34 were measured and are shown in Table 5.

### Example 35

The preparation method was the same as in Example 27, except the polymer obtained from Example 26 (19.624 g) was dissolved in THF (800 mL) and the catalyst used was 5% Ru/C (0.993 g). The stir rate was 300 rpm and the reactor was pressurized to 600 psi with H₂ gas. The reactor was heated to 140 °C and the reaction proceeded overnight. A yield of 11.863 g (60.973%) of a grey, glassy solid was obtained. The weight average molecular weight, PDI, and Tg of Example 35 were measured and are shown in Table 5.

**Table 5**

| **Example** | **Prepared from Example No.** | **Mw (KDa)** | **PDI** | **Tg (Inflection Point) (°C)** |
|---|---|---|---|---|
| 27 | 19 | 70 | 1.6 | -74.88 |
| 28 | 20 | 143 | 2.4 | -62.46 |
| 29 | 21 | 115 | 1.9 | -69.97 |
| 30 | 18 | 149 | 2.3 | -64.52 |
| 31 | 22 | 242 | 2.8 | -38.10 |
| 32 | 23 | 162 | 2.5 | -49.20 |
| 33 | 24 | 172 | 2.1 | -28.24 |
| 34 | 25 | 279 | 2.7 | -2.97 |
| 35 | 26 | 196 | 2.3 | -7.93 |

### Ref. Example 36

Maleic anhydride (34.323 g, 0.3500 mols), benzoyl peroxide (2.921 g, 0.01206 mols) and dioxane (190 mL) were added into a three-necked, round bottomed flask equipped with an overhead stirrer, an argon inlet and an addition funnel. The overhead stirrer was set to a stir rate of 250 rpm and the solution was sparged with argon for about 35 minutes. The flask was placed in a heating block and the solution was heated to about 30 °C. Meanwhile, diethylaniline (0.627 g, 0.00425 mols), β-farnesene (71.510 g, 0.34992 mols) and dioxane (50 mL) were added into the funnel and the diethylaniline solution was sparged with argon for about 15 minutes. The diethylaniline solution was added dropwise into the flask over 4.5 hours. The heating block was removed from the flask, butylated hydroxytoluene (2.644 g, 0.01200 mols) was added into the flask, and stirred for 5 minutes. The solution was precipitated into 2 L of ice-cold methanol while methanol was stirred with an overhead stirrer at 500 rpm. The polymer precipitated as a large, pink mass of fibers and the methanol solution turned pink. The methanol solution was decanted and the polymer was redissolved in dioxane (250 mL) and reprecipitated into drop-wise into 2L of ice-cold methanol. The methanol solution was decanted and the polymer was redissolved in dioxane (250 mL) and reprecipitated into dropwise into 2L of ice-cold methanol. The methanol was again decanted and the polymer was redissolved in dioxane (250 mL) and reprecipitated into 2 L of ice-cold methanol. The methanol from the third precipitation was decanted and the polymer was dried under high vacuum (50 microns) overnight to yield 29.65 g (28.02%) of a tough, yellow-brown solid. Example 36 was characterized by the following analytical data: ¹HNMR(Dioxane-d8, 400 MHz): δ = 5.0-4.8 (m, 3H), 3.6-3.3 (m, 9H), 2.6-2.3 (m, 2H), 2.3-2.0 (s, 3H), 1.9-1.7 (m, 7H), 1.5-1.3 (m, 9H); ¹³C NMR (Dioxane-d8, 400 MHz): δ = 174, 173, 135.0, 130.6, 124.2, 124.2, 123.8, 50.7, 39.5, 26.4, 25.2, 24.9, 16.9, 15.3; GPC (THF, PS Standards): M_{w} = 55 kDa, M_{w}/Mₙ = 1.4; DSC (2 °C/min, N₂): Tg (inflection) = 8.85 °C.

### Ref. Example 37

Styrene (11.50 g, 0.1104 mols), β-farnesene (67.69 g, 0.3312 mols) and benzoyl peroxide (0.574 g, 0.00237 mols) are added to a 250 mL three-necked round bottomed flask, equipped with an overhead stir shaft with a PTFE stir blade, in a glove box with an atmosphere of N₂. The flask is sealed and removed from the glove box, placed on a heating mantle and attached to an overhead stirrer. An argon inlet is connected to the flask as well as an oil bubbler. A stir rate of 250 rpm is set on the overhead stirrer and the flow of argon was adjusted such that argon bubbled through the bubbler at a rate of about 1 bubble per second. The heating mantle is set to about 75 °C and the reaction was allowed to proceed for 15 hours. The heating mantle and the argon gas inlet are removed and butylated hydroxytoluene (1.107 g, 0.005024 mols) is added into the flask. The resulting solution is allowed to stir for five minutes before the polymer is precipitated from solution. The precipitation is done by dripping the resulting solution dropwise into 2 L of ice-cold methanol. Once the polymer is precipitated, the methanol solution is decanted and the polymer is redissolved in tetrahydrofuran (THF). The resulting solution of polymer in THF is precipitated into ice-cold methanol (2 L), and the methanol solution is decanted. The polymer is again redissolved in THF and reprecipitated into ice-cold methanol (2 L), the methanol is decanted, and the polymer is dried. The polymer is dried by removing residual solvent on a rotary evaporator and then placing the isolated polymer under vacuum (50 microns) overnight.

### Example 38

The preparation procedure for Example 38 was the same as that for Example 1, except 35.2 g of farnesene (32 wt.%) and 73.7 g (67 wt.%) of MMA were used instead of 38.5 g of farnesene (35 wt. %) and 70.4 g of MMA (64 wt.%). The weight average molecular weight of Example 38 was 193 kDa. The Tg of Example 38 was 15.32 °C.

### Example 39

The preparation procedure for Example 39 was the same as that for Example 1, except 37.4 g of farnesene (34 wt.%) and 71.5 g (65 wt.%) of MMA were used instead of 38.5 g of farnesene (35 wt. %) and 70.4 g of MMA (64 wt.%). The weight average molecular weight of Example 39 was 169 kDa. The Tg of Example 39 was 12.86 °C.

### Example 40

The preparation procedure for Example 40 was the same as that for Example 1, except 39.6 g of farnesene (36 wt.%) and 69.3 g (63 wt.%) of MMA were used instead of 38.5 g of farnesene (35 wt. %) and 70.4 g of MMA (64 wt.%). The weight average molecular weight of Example 40 was 157 kDa. The Tg of Example 39 was 5.24 °C.

### Example 41

Example 41 was a film prepared from the emulsion obtained from Example 6. The emulsion was applied on an aluminum panel using a square drawdown giving a wet film having a thickness of about 5 mil (*i.e.,* 0.127 mm). No coalescing agent was added to the emulsion. The films were dried in a forced air oven at 45 °C for 10 minutes and then conditioned for 7 days at a temperature of 72 °F +/- 5 °F and 50 % +/- 10 % relative humidity.

### Example 42

Example 42 was prepared according to the procedure for Example 41 except the emulsion was obtained from Example 38.

### Example 43

Example 43 was prepared according to the procedure for Example 41 except the emulsion was obtained from Example 39.

### Example 44

Example 44 was prepared according to the procedure for Example 41 except the emulsion was obtained from Example 40.

### Minimum Film Forming Temperature ("MFFT")

The MFFT Test can be conducted in accordance with the American Society of Testing Materials ("ASTM") D2354-10 test, titled "Standard Test Method for Minimum Film Forming Temperature of Emulsion Vehicles", which is incorporated herein by reference. It provides a method for the determination of the minimum temperature at which emulsion vehicles coalesce to form a continuous film.

Films obtained from Examples 41-44 were tested with the MFFT Test. The MFFT Test was conducted with a Rhopoint 90 instrument according to ASTM D2354-10. The minimum film forming temperature of Examples 41-44 were measured and are shown in Table 6 below.

**Table 6**

| **Example No.** | **Minimum film forming temperature (°C)** |
|---|---|
| 41 | 23.0 |
| 42 | 31.2 |
| 43 | 23.6 |
| 44 | 15.6 |

### Pencil Hardness

The pencil hardness test evaluates the coatings film hardness when subjected to scratching by lead pencils. This test can be conducted in accordance with the ASTM D3363-05 test, titled "Standard Test Method for Film Hardness by Pencil Test," which is incorporated herein by reference. Standard lead pencils in various lead softness from 6B to 8H are used. The hardness scale (softest to hardest) is
6B<5B<4B<3B<2B<B<HB<F<H<2H<3H<4H<5H<6H<8H. A rating of 6B indicates the film is very soft. A rating of 8H indicates an extremely hard film.

The test involves the following steps. First, films can be formed from an emulsion obtained from any one of Examples 1-40. A pencil is placed on the surface of the film. The pencil is kept at a 45° and pushing at about 5 cm/sec. The film is scratched by using successively harder pencils until the film is marred. At this point, the lead which first mars the film is considered to be the film's pencil hardness.

Pencil hardness of films obtained from Examples 41-44 was measured according to the ASTM D3363-05. The results are shown in Table 7 below.

**Table 7**

| **Example No.** | **Pencil hardness** |
|---|---|
| 41 | F |
| 42 | F |
| 43 | F |
| 44 | F |

### Block Resistance Test

Dried films obtained from Examples 6 and 38-40 were tested with the Block Resistance Test. The Block Resistance Test was conducted according to ASTM 2793-99. The test was run in "face to face" condition using a Sag and Leveling Test Chart 7B paper from Leneta Co. (Mahwah, NJ) as the substrate. Emulsions from Examples 6 and 38-40 were applied on the substrate using a square drawdown giving a wet film having a thickness of about 5 mil [*i.e.,* 0.127 mm]. The films were dried in a forced air oven at 45 °C for ten minutes and then held at room temperature for seven days. The substrate was folded back in on itself so that the film came into contact with itself and a 1 kilogram weight was placed on top of the substrate for 1 hour, 24 hours and 48 hours. The test results are shown in Table 8. A rating of "10" means that there is no tack between the films, while a rating of "1" means that there is 100 % seal between the films.

**Table 8**

| **Example no.** | **1 hour** | **24 hours** | **48 hours** |
|---|---|---|---|
| 6 | 8 | 5 | 1 |
| 38 | 9 | 9 | 9 |
| 39 | 9 | 7-8 | 7 |
| 40 | 10 | 8-9 | 8 |

Examples 38-40 had a block resistance rating of 7 or higher after 48 hours, while Example 6 failed after 24 hours.

### Accelerated Film Aging Test

This test can be conducted in accordance with the ASTM D4587 test, which is incorporated herein by reference. It determines film's ability to resist deterioration of its physical and optical properties caused by exposure to light, heat, and moisture. It provide a method for the selection of test conditions for accelerated exposure testing of products in fluorescent ultraviolet light ("UV") and condensation devices. The test is conducted with repeating cycles of fluorescent UV light exposure and condensation. Films can be formed from Examples 1-40. The films can be tested with a test duration of 250 and 500 hours.

This test can also be conducted in accordance with the ASTM G154 test, titled "Standard Practice for Operating Fluorescent Light Apparatus for UV Exposure of Non-Metallic Materials," which is incorporated herein by reference. The method uses fluorescent UV light, and water apparatus to reproduce the weathering effects that occur when materials are exposed to sunlight (either direct or through window glass) and moisture as rain or dew in actual usage. Test specimens are exposed to fluorescent US light under controlled environmental conditions. This testing method calculates a value for ΔE, a numerical value which represents any change in lightness for the film and any shift in the color of the film. Any value less than 1 cannot be detected by the naked eye and is considered passing. An A 340 bulb was used in the test and measurements were taken at 144, 250 and 500 hours.

Resistance in shifting in color and lightness under the exposure of UV light for films obtained from Examples 41-44 were tested according to the ASTM G154. The testing results are shown in Table 9.

**Table 9**

| **Example no.** | **144 hours** | **250 hours** | **500 hours** |
|---|---|---|---|
| 41 | 0.1 | 0.5 | 0.4 |
| 42 | 0.8 | 0.8 | 0.8 |
| 43 | 0.7 | 0.5 | 0.6 |
| 44 | 0.5 | 0.5 | 0.6 |

### Standard Test Method for Effect of Household Chemicals on Clear and Pigmented Organic Film

This test can be conducted in accordance with the ASTM D1308 test, which is incorporated herein by reference. The test provides a method for the determination of the effect of chemicals on clear and pigmented organic films resulting in any objectionable alteration in the surface, such as discoloration, change in gloss, blistering, softening, swelling, loss of adhesion, or special phenomena. The chemicals used can include one or more of ethyl alcohol, isopropyl alcohol ("IPA"), xylene, acidic or alkali solutions, soap or detergent solutions, oil or grease and the like. Films are formed from Examples 1-6. The sample can be double rubbed (up and down motion) with IPA.

This test can also be conducted in accordance with the ASTM D4752-10 test, titled "Standard Practice for Measuring MEK Resistance of Ethyl Silicate (Inorganic) Zinc-Rich Primers by Solvent Rub," which is incorporated herein by reference. Films obtained from Examples 41-44 were tested according to ASTM D4752. A two pounds weight was wrapped in cheesecloth, soaked in isopropanol, and then dragged back and forth over a film panel until cracks begin to appear in the film. Dragging the weight back and forth over the panel was considered one run. The results are shown in Table 10. The higher the number of runs, the better the integrity of the film and the resistance to isopropanol.

**Table 10**

| **Example no.** | **Run No. 1 Rubs Before Cracking** | **Run No. 2 Rubs Before Cracking** | **Average** |
|---|---|---|---|
| 41 | 15 | 17 | 16 |
| 42 | 77 | 79 | 78 |
| 43 | 42 | 42 | 42 |
| 44 | 56 | 52 | 54 |

Example 41 failed the test. Examples 42-44 passed the test. Examples 42-44 were considered to have good chemical resistance and film integrity when exposed to double rubs of isopropanol.

### Chemical Spot Test

Another test for chemical resistance is known as the Chemical Spot Test where a drop of a common household chemical such as isopropanol, ethyl alcohol, vinegar and the cleaning formulation Fantastik from the S.C. Johnson Company were applied or "spotted" onto a dried film of Examples 41-44.

The films were evaluated for softening and shift in color after 15 minutes and 1 hour exposure. The results are shown in Tables 11-12. The films are rated from 1 to 5. A rating of "5" means the best showing no film softening or color shift and a rating of "1" means the worst.

**Table 11**

| 15 minutes Time | | | | | | | | |
|---|---|---|---|---|---|---|---|---|
| Example no. | Isopropanol | | Ethyl Alcohol | | Vinegar | | Fantastik | |
| | Softening | Color Shift | Softening | Color Shift | Softening | Color Shift | Softening | Color Shift |
| 41 | 1 | 5 | 1 | 5 | 3-4 | 5 | 4 | 5 |
| 42 | 1 | 5 | 1 | 1 | 4 | 5 | NA | 1 |
| 43 | 1 | 5 | 1 | 1 | 4-5 | 5 | 2 | 2 |
| 44 | 1 | 3-4 | 2-3 | 4 | 3 | 4 | 3 | 4 |

| | | | | | | | | |
|---|---|---|---|---|---|---|---|---|
| NA - Not possible to rate due to failure of film integrity after application of solvent. | | | | | | | | |

**Table 12**

| 1 hour Time | | | | | | | | |
|---|---|---|---|---|---|---|---|---|
| Example no. | Isopropanol | | Ethyl Alcohol | | Vinegar | | Fantastik | |
| | Softening | Color Shift | Softening | Color Shift | Softening | Color Shift | Softening | Color Shift |
| 41 | 1 | 5 | 1 | 5 | 2-3 | 5 | 2 | 5 |
| 42 | 1 | 1 | 1 | 1 | NA | 5 | NA | 2-3 |
| 43 | 2 | 2 | 1 | 1 | 1 | 5 | 1 | 3-4 |
| 44 | 2 | 4 | 2-3 | 4 | 1 | 5 | 2 | 5 |

| | | | | | | | | |
|---|---|---|---|---|---|---|---|---|
| NA - Not possible to rate due to failure of film integrity after application of solvent. | | | | | | | | |

Examples 41-44 were tested by the above tests. Films obtained from Examples 1-37 can be also tested by the above tests.

## Claims

1. An emulsion polymerization composition comprising:
a) a polymerizable mixture comprising a farnesene and at least one vinyl monomer;
b) at least one emulsifier;
c) at least one free radical initiator; and
d) water.

2. The composition of claim 1, wherein the at least one vinyl monomer comprises methacrylic acid and a methacrylic ester, which is optionally methyl methacrylate.

3. The composition of claim 2, wherein the methacrylic acid is in an amount from 0.1 wt.% to 5 wt.%, or from 10 wt.% to wt.%, based on the total weight of the polymerizable mixture.

4. The composition of claim 2 or 3, wherein the at least one vinyl monomer further comprises an acrylic ester, which is optionally butyl acrylate.

5. The composition of claim 1, wherein the at least one vinyl monomer comprises methacrylic acid and styrene.

6. A method for preparing a polymer emulsion, comprising:
(a) providing an aqueous emulsion comprising a polymerizable mixture comprising a farnesene and at least one vinyl monomer; at least one emulsifier; at least one free radical initiator; and water; and
(b) emulsion polymerizing at least a portion of the polymerizable mixture to form the polymer emulsion.

7. The method of claim 6 further comprising drying the polymer emulsion to form an emulsion polymer.

8. The method of claim 7, wherein the emulsion polymer is in the form of powder or film.

9. The method of any one of claims 6-8, wherein the at least one vinyl monomer comprises methacrylic acid and a methacrylic ester, which is optionally methyl methacrylate.

10. The method of claim 9, wherein the methacrylic acid is in an amount from 0.1 wt.% to 5 wt.%, or from 10 wt.% to 40 wt.%, based on the total weight of the polymerizable mixture.

11. The method of claim 9 or 10, wherein the at least one vinyl monomer further comprises an acrylic ester, which is optionally butyl acrylate.

12. The method of any one of claims 6-8, wherein the at least one vinyl monomer comprises methacrylic acid and styrene.

13. The composition of any one of claims 1-5 or the method of any one of claims 6-12, wherein the free radical initiator is a water-soluble free radical initiator, which is optionally ammonium peroxomonosulfate, ammonium peroxodisulfate, potassium peroxomonosulfate, potassium peroxodisulfate, sodium peroxomonosulfate, sodium peroxodisulfate, hydrogen peroxide, a redox initiator or a combination thereof.

14. A polymer emulsion preparing by the method of any one of claims 6 and 9-12.

15. An emulsion polymer preparing by the method of claim 7, wherein the emulsion polymer comprises a farnesene interpolymer, and wherein the farnesene interpolymer comprises one or more units derived from a farnesene in an amount of at least 25 mole percent of the whole farnesene interpolymer.

16. A method of copolymerizing a polymerizable mixture in emulsion in an aqueous medium, in the presence of at least one emulsifier and of at least one free radical initiator to form a farnesene interpolymer, wherein the polymerizable mixture comprises a farnesene and at least one vinyl monomer, wherein the at least one free radical initiator is hydrogen peroxide, a hydroperoxide, a dialkyl peroxide, a diacyl peroxide, a peroxy ester, a peroxyketone, an azo-compound, an organic polyoxide, a photoinitiator, a persulfate or a combination thereof.

17. The composition of any one of claims 1-5 or the method of any one of claims 9-12 and 16, wherein the farnesene is α-farnesene or β-farnesene or a combination thereof.

18. The composition of any one of claims 1-5 or the method of any one of claims 9-12 and 16-17, wherein the at least one vinyl monomer is styrene, substituted styrene, a C₄₋₄₀ diene, a vinyl halide, vinyl ether, vinyl acetate, vinyl pyridine, vinylidene fluoride, acrylonitrile, acrylic acid, an acrylic ester, methacrylic acid, a methacrylic ester, acrylamide, methacrylamide or a combination thereof.

19. The method of claim 16, wherein the at least one vinyl monomer comprises a methacrylic ester, styrene, butadiene, isoprene, myrcene, or a combination thereof.

## Patentansprüche

1. Emulsionspolymerisations-Zusammensetzung umfassend:
a) eine polymerisierbare Mischung umfassend ein Farnesen und mindestens ein Vinylmonomer;
b) mindestens einen Emulgator;
c) mindestens einen Initiator für freie Radikale; und
d) Wasser.

2. Zusammensetzung nach Anspruch 1, wobei das mindestens eine Vinylmonomer Methacrylsäure und einen Methacrylsäureester, welcher wahlweise Methylmethacrylat ist, umfasst.

3. Zusammensetzung nach Anspruch 2, wobei die Methacrylsäure in einer Menge von 0,1 Gew.% bis 5 Gew.% oder von 10 Gew.% bis 40 Gew.% vorliegt, basierend auf dem Gesamtgewicht der polymerisierbaren Mischung.

4. Zusammensetzung nach Anspruch 2 oder 3, wobei das mindestens eine Vinylmonomer weiter einen Acrylester, der wahlweise Butylacrylat ist, umfasst.

5. Zusammensetzung nach Anspruch 1, wobei das mindestens eine Vinylmonomer Methacrylsäure und Styren umfasst.

6. Verfahren zur Zubereitung einer Polymeremulsion, umfassend:
(a) Bereitstellen einer wässerigen Emulsion umfassend eine polymerisierbare Mischung umfassend ein Farnesen und mindestens ein Vinylmonomer; mindestens einen Emulgator; mindestens einen Initiator für freie Radikale; und Wasser; und
(b) Emulsionspolymerisieren mindestens eines Teils der polymerisierbaren Mischung, um die Polymeremulsion zu bilden.

7. Verfahren nach Anspruch 6 weiter umfassend Trocknen der Polymeremulsion, um ein Emulsionspolymer zu bilden.

8. Verfahren nach Anspruch 7, wobei das Emulsionspolymer in der Form eines Pulvers oder einer Schicht vorliegt.

9. Verfahren nach einem der Ansprüche 6-8, wobei das mindestens eine Vinylmonomer Methacrylsäure und einen Methacrylsäureester, welcher wahlweise Methylmethacrylat ist, umfasst.

10. Verfahren nach Anspruch 9, wobei die Methacrylsäure in einer Menge von 0.1 Gew.% bis 5 Gew.% oder von 10 Gew.% bis 40 Gew.% vorliegt, basierend auf dem Gesamtgewicht der polymerisierbaren Mischung.

11. Verfahren nach Anspruch 9 oder 10, wobei das mindestens eine Vinylmonomer weiter einen Acrylester, der wahlweise Butylacrylat ist, umfasst.

12. Verfahren nach einem der Ansprüche 6-8, wobei das mindestens eine Vinylmonomer Methacrylsäure und Styren umfasst.

13. Zusammensetzung nach einem der Ansprüche 1-5 oder Verfahren nach einem der Ansprüche 6-12, wobei der Initiator für freie Radikale ein wasserlöslicher Initiator für freie Radikale ist, welcher wahlweise Ammonium-Peroxomonosulfat, AmmoniumPeroxodisulfat, Kalium-Peroxomonosulfat, Kalium-Peroxodisulfat, Natrium-Peroxomonosulfat, Natrium-Peroxodisulfat, Wasserstoffperoxid, ein Redoxinitiator oder eine Kombination davon ist.

14. Polymeremulsions-Zubereiten durch das Verfahren nach einem der Ansprüche 6 und 9-12.

15. Emulsionspolymer-Zubereiten durch das Verfahren nach Anspruch 7, wobei das Emulsionspolymer ein Farnesen-Interpolymer umfasst, und wobei das Famesen-Interpolymer einen oder mehrere von einem Farnesen abgeleitete Anteile umfasst, in einer Menge von mindestens 25 Molprozent des ganzen Farnesen-Interpolymers.

16. Verfahren zum Copolymerisieren einer polymerisierbaren Mischung in Emulsion in einem wässerigen Medium in der Präsenz mindestens eines Emulgators und mindestens eines Initiators für freie Radikale, um ein Farnesen-Tnterpolymer zu bilden, wobei die polymerisierbare Mischung ein Farnesen und mindestens ein Vinylmonomer umfasst, wobei der mindestens eine Initiator für freie Radikale Wasserstoffperoxid, ein Hydroperoxid, ein Dialkyl-Peroxid, ein Diacyl-Peroxid, Peroxy-Ester, ein Preoxyketon, eine Azoverbindung, ein organisches Polyoxid, ein Photoinitiator, ein Persulfat oder eine Kombination davon ist.

17. Zusammensetzung nach einem der Ansprüche 1-5 oder Verfahren nach einem der Ansprüche 9-12 und 16, wobei das Farnesen α-Farnesen oder β-Farnesen oder eine Kombination davon ist.

18. Zusammensetzung nach einem der Ansprüche 1-5 oder Verfahren nach einem der Ansprüche 9-12 und 16-17, wobei das mindestens eine Vinylmonomer Styren, substituiertes Styren, ein C₄₋₄₀-Dien, ein Vinylhalid, Vinylether, Vinylacetat, Vinylpyridin, Vinylidenfluorid, Acrylnitril, Acrylsäure, ein Acrylester, Methacrylsäure, ein Methacrylsäureester, Acrylamid, Methacrylamid oder eine Kombination davon ist.

19. Verfahren nach Anspruch 16, wobei das mindestens eine Vinylmonomer einen Methacrylsäureester, Styren, Butadien, Isopren, Myrcen oder eine Kombination davon umfasst.

## Revendications

1. Composition pour polymérisation en émulsion comprenant :
a) un mélange polymérisable comprenant un farnésène et au moins un monomère vinylique ;
b) au moins un émulsifiant ;
c) au moins un initiateur de radicaux libres ; et
d) de l'eau.

2. Composition selon la revendication 1, dans laquelle l'au moins un monomère vinylique comprend de l'acide méthacrylique et un ester méthacrylique, qui est facultativement du méthacrylate de méthyle.

3. Composition selon la revendication 2, dans laquelle l'acide méthacrylique est compris dans une quantité allant de 0,1 % en poids à 5 % en poids ou de 10 % en poids à 40 % en poids, sur la base du poids total du mélange polymérisable.

4. Composition selon la revendication 2 ou 3, dans laquelle l'au moins un monomère vinylique comprend en outre un ester acrylique, qui est facultativement de l'acrylate de butyle.

5. Composition selon la revendication 1, dans laquelle l'au moins un monomère vinylique comprend de l'acide méthacrylique et du styrène.

6. Procédé de préparation d'une émulsion polymère comprenant :
(a) la fourniture d'une émulsion aqueuse comprenant un mélange polymérisable comprenant un farnésène et au moins un monomère vinylique ; au moins un émulsifiant ; au moins un initiateur de radicaux libres ; et de l'eau ; et
(b) la polymérisation en émulsion d'au moins une partie du mélange polymérisable pour former l'émulsion polymère.

7. Procédé selon la revendication 6 comprenant en outre le séchage de l'émulsion polymère pour former un polymère en émulsion.

8. Procédé selon la revendication 7, dans lequel le polymère en émulsion est sous la forme de poudre ou de film.

9. Procédé selon l'une quelconque des revendications 6 à 8, dans lequel l'au moins un monomère vinylique comprend de l'acide méthacrylique et un ester méthacrylique, qui est facultativement du méthacrylate de méthyle.

10. Procédé selon la revendication 9, dans lequel l'acide méthacrylique est compris dans une quantité allant de 0,1 % en poids à 5 % en poids ou de 10 % en poids à 40 % en poids, sur la base du poids total du mélange polymérisable.

11. Procédé selon la revendication 9 ou 10, dans lequel l'au moins un monomère vinylique comprend en outre un ester acrylique, qui est facultativement de l'acrylate de butyle.

12. Procédé selon l'une quelconque des revendications 6 à 8, dans lequel l'au moins un monomère vinylique comprend de l'acide méthacrylique et du styrène.

13. Composition selon l'une quelconque des revendications 1 à 5 ou procédé selon l'une quelconque des revendications 6 à 12, dans laquelle ou dans lequel l'initiateur de radicaux libres est un initiateur de radicaux libres hydrosoluble, qui est facultativement du peroxomonosulfate d'ammonium, du peroxodisulfate d'ammonium, du peroxomonosulfate de potassium, du peroxodisulfate de potassium, du peroxomonosulfate de sodium, du peroxodisulfate de sodium, du peroxyde d'hydrogène, un initiateur d'oxydoréduction ou une combinaison de ceux-ci.

14. Émulsion polymère préparée par le procédé selon l'une quelconque des revendications 6 et 9 à 12.

15. Polymère en émulsion préparé par le procédé selon la revendication 7, lequel polymère en émulsion comprend un interpolymère farnésène, et dans lequel l'interpolymère farnésène comprend une ou plusieurs unités dérivées d'un farnésène dans une quantité d'au moins 25 % en mole de l'interpolymère farnésène total.

16. Procédé de copolymérisation d'un mélange polymérisable en émulsion dans un milieu aqueux en présence d'au moins un émulsifiant et d'au moins un initiateur de radicaux libres pour former un interpolymère farnésène, dans lequel le mélange polymérisable comprend un farnésène et au moins un monomère vinylique, dans lequel l'au moins un initiateur de radicaux libres est le peroxyde d'hydrogène, un hydroperoxyde, un peroxyde de dialkyle, un peroxyde de diacyle, un peroxyester, une peroxycétone, un composé azoïque, un polyoxyde organique, un photo-initiateur, un persulfate ou une combinaison de ceux-ci.

17. Composition selon l'une quelconque des revendications 1 à 5 ou procédé selon l'une quelconque des revendications 9 à 12 et 16, dans laquelle ou dans lequel le farnésène est l'α-farnésène ou le β-farnésène ou une combinaison de ceux-ci.

18. Composition selon l'une quelconque des revendications 1 à 5 ou procédé selon l'une quelconque des revendications 9 à 12 et 16 à 17, dans laquelle ou dans lequel l'au moins un monomère vinylique est le styrène, le styrène substitué, un diène en C₄₋₄₀, un halogénure de vinyle, l'éther de vinyle, l'acétate de vinyle, la vinylpyridine, le fluorure de vinylidène, l'acrylonitrile, l'acide acrylique, un ester acrylique, l'acide méthacrylique, un ester méthacrylique, l'acrylamide, le méthacrylamide ou une combinaison de ceux-ci.

19. Procédé selon la revendication 16, dans lequel l'au moins un monomère vinylique comprend un ester méthacrylique, le styrène, le butadiène, l'isoprène, le myrcène ou une combinaison de ceux-ci.
